# EUROPEAN PATENT SPECIFICATION

(11) **EP 1 004 189 B1**
(45) Date of publication and mention of the grant of the patent: **11.04.2007**
(21) Application number: 99927504.3
(22) Date of filing: 11.06.1999
(51) Int. Cl.: H04L 12/66, H04Q 11/04, H04L 12/56, H04L 12/64

(54) **PACKET SWITCHING WITH COMMON TIME REFERENCE**
PAKETVERMITTLUNG MIT GEMEINSAMER REFERENZZEIT
COMMUTATION DE PAQUETS AVEC REFERENCE DE TEMPS COMMUNE

(30) Priority: 11.06.1998 US 88891 P; 11.06.1998 US 88914 P; 11.06.1998 US 88983 P; 11.06.1998 US 88906 P; 11.06.1998 US 88893 P; 11.06.1998 US 88915 P; 22.07.1998 US 120944; 22.07.1998 US 120529; 22.07.1998 US 120636; 22.07.1998 US 120515; 22.07.1998 US 120672; 22.07.1998 US 120700
(43) Date of publication of application: 31.05.2000
(73) Proprietor: Synchrodyne Networks, Inc., Tenafly, NY 07670 (US)
(72) Inventor: OFEK, Yoram, Riverdale, NY 10463 (US); SHACHAM, Nachum, Palo Alto, CA 94303 (US)
(74) Representative: Borsano, Corrado
(86) International application number: PCT/US1999/013310
(87) International publication number: WO 1999/065197

(56) References cited:
- US-A- 5 381 408
- US-A- 5 402 417
- US-A- 5 418 779
- US-A- 5 859 835
- YEMINI Y ET AL: "Isochronets: a high-speed network switching architecture" NETWORKING: FOUNDATION FOR THE FUTURE. SAN FRANCISCO, MAR. 28 - APR. 1, 1993, PROCEEDINGS OF THE ANNUAL JOINT CONFERENCE OF THE COMPUTER AND COMMUNICATIONS SOCIETIES (INFOCOM), LOS ALAMITOS, IEEE COMP. SOC. PRESS, US, vol. 2 CONF. 12, 28 March 1993 (1993-03-28), pages 740-747, XP010032243 ISBN: 0-8186-3580-0
- CHUNG-SHENG LI ET AL: "Time-driven priority flow control for real-time heterogeneous internetworking" PROCEEDINGS OF IEEE INFOCOM 1996. CONFERENCE ON COMPUTER COMMUNICATIONS. FIFTEENTH ANNUAL JOINT CONFERENCE OF THE IEEE COMPUTER AND COMMUNICATIONS SOCIETIES. NETWORKING THE NEXT GENERATION. SAN FRANCISCO, MAR. 24 - 28, 1996, PROCEEDINGS OF INFOCOM, L, vol. 2 CONF. 15, 24 March 1996 (1996-03-24), pages 189-197, XP010158070 ISBN: 0-8186-7293-5
- LI C-S ET AL: "Pseudo-isochronous cell forwarding" COMPUTER NETWORKS AND ISDN SYSTEMS, NORTH HOLLAND PUBLISHING. AMSTERDAM, NL, vol. 30, no. 24, 14 December 1998 (1998-12-14), pages 2359-2372, XP004150561 ISSN: 0169-7552

## Description

### BACKGROUND OF THE INVENTION:

This invention relates generally to a method and apparatus for transmitting of data on a communications network. More specifically, this invention relates to timely forwarding and delivery of data over the network and to their destination nodes. The timely forwarding is possible by time information that is globally available from a global positioning system (GPS). Consequently, the end-to-end performance parameters, such as, loss, delay and jitter, have either deterministic or probablistic guarantees.

This invention further facilitates a method and apparatus for integrating the transfer of two traffic types over a data packet communications network. More specifically, this invention provides timely forwarding and delivery of data packets from sources with constant bit rate (CBR) and variable bit rate (VBR) over the network and to their destination nodes.

This invention further relates a method and apparatus for transmitting of data on a communications network via communication links with variable delays. More specifically, this invention relates to timely forwarding and delivery of data over networks with links with variable delays to their destination nodes, while ensuring the end-to-end performance parameters, such as, loss, delay and jitter, have either deterministic or probablistic guarantees.

This invention also provides a method and apparatus for monitoring, policing, and billing of the transmission of data packet on a communications network. More specifically, this invention provides the monitoring, policing, and billing in networks with timely forwarding and delivery of data packets to their destination nodes. Consequently, the end-to-end performance parameters, such as, loss, delay and jitter, are predictable, and therefore, it is possible to measure them. Consequently, such measurements are used in the monitoring, policing and billing.

This invention also provides for a method and apparatus for transmitting of data on an heterogeneous communications network, which has two types of switching nodes: (i) asynchronous and (ii) synchronous with common time reference. More specifically, this invention provides timely forwarding and delivery of data over the network and to their destination nodes. Consequently, the end-to-end performance parameters, such as, loss, delay and jitter, have either deterministic or probablistic guarantees.

This invention furthermore facilitates a routing decision by using both timing information and position information of packets within time frames. In this case, there is no need to decode the address in the packet header, it is feasible to encrypt the entire data packet (including the header) as it is transferred through a public backbone network, which is an important security feature. Consequently, over this novel communications network it is possible to transport wide variety of data packets, such as, IP (Internet protocol) and ATM (asynchronous transfer mode).

The proliferation of high-speed communications links, fast processors, and affordable, multimedia-ready personal computers brings about the need for wide area networks that can carry real time data, like telephony and video. However, the end-to-end transport requirements of real-time multimedia applications present a major challenge that cannot be solved satisfactorily by current networking technologies. Such applications as video teleconferencing, and audio and video multicasting generate data at a wide range of bit rates and require predictable, stable performance and strict limits on loss rates, average delay, and delay variations ("jitter"). These characteristics and performance requirements are incompatible with the services that current circuit and packet switching networks can offer.

Packet switching networks like IP (Internet Protocol)-based Internet and Intranets [see, for example, A.Tannebaum, "Computer Networks" (3rd Ed) Prentice Hall, 1996] and ATM (Asynchronous Transfer Mode) [see, for example, Handel et al., "ATM Networks: Concepts, Protocols, and Applications", (2nd Ed.) Addison-Wesley, 1994] handle bursty data more efficiently than circuit switching, due to their statistical multiplexing of the packet streams. However, current packet switches and routers operate asynchronously and provide best effort service only, in which end-to-end delay and jitter are neither guaranteed nor bounded. Furthermore, statistical variations of traffic intensity often lead to congestion that results in excessive delays and loss of packets, thereby significantly reducing the fidelity of real-time streams at their points of reception. In fact, under best effort service, the performance characteristics of a given connection are not even predictable at the time of connection establishment.

Efforts to define advanced services for both IP and ATM have been conducted in two levels: (1) definition of service, and (2) specification of methods for providing different services to different packet streams. The former defines interfaces, data formats, and performance objectives. The latter specifies procedures for processing packets by hosts and switches/routers. The types of services that defined for ATM include constant bit rate (CBR), variable bit rate (VBR) and available bit rate (ABR). For IP, the defined services include guaranteed performance (bit rate, delay), controlled flow, and best effort [J.Wroclawski, "Specification of the Controlled-Load Network Element Service", IETF RFC 2211, September 1997] [Shenker et. al., "Specification of Guaranteed Quality of Service", IETF RFC 2212. September 1997]. Signaling protocols, e.g., RSVP and UNI3.1, which carry control information to facilitate the establishment of the desired services, are specified for IP and ATM, respectively [R. Braden, "Resource ReSerVation Protocol (RSVP) - Version 1 Functional Specification, IETF Request for Comment RFC2205". September 1997] [Handel et al., "ATM Networks: Concepts, Protocols, and Applications", (2nd Ed.) Addison-Wesley, 1994]. These protocols address the transport of data to one destination known as unicast or multiple destinations multicast. In addition, SIP, a higher level protocol for facilitating the establishment of sessions that use the underlying services, is currently under definition under IETF auspices [Handley et al., "SIP-Session Initiation Protocol", <draft-d raft- ietf-mmusic -sip-04. ps>, November 1997].

The methods for providing different services under packet switching fall under the general title of Quality of Service (QoS). Prior art in QoS can be divided into two parts: (1) traffic shaping with local timing without deadline scheduling, for example [M.G.H. Katevenis, "Fast Switching And Fair Control Of Congested Flow In Broadband Networks", IEEE Journal on Selected Areas in Communications, SAC-5(8): 1315-1326, October 1987; Demers et al., "Analysis and Simulation Of A Fair Queuing Algorithm", ACM Computer Communication Review (SIGCOMM'89), pages 3-12, 1989; S.J. Golestani, "Congestion-Free Communication In High-Speed Packet Networks", IEEE Transcripts on Communications, COM-39( 12): 1802-1812, December 1991; Parekh et al., "A Generalized Processor Sharing Approach To Flow Control - The Multiple Node Case", IEEE/ACM T. on Networking, 2(2):137-150, 1994], and (2) traffic shaping with deadline scheduling, for example [Ferrari et al., "A Scheme For real-time Channel Establishment In Wide-Area Networks", IEEE Journal on Selected Areas in Communication, SAC-8(4):368-379, April 1990; Kandlur et al., "Real Time Communication In Multi-Hop Networks", IEEE Trans. on Parallel and Distributed Systems, Vol. 5, No. 10, pp. 1044-1056, 1994]. Both of these approaches rely on manipulation of local queues by each router with little coordination with other routers. The Weighted Fair Queuing (WFQ), which typifies these approaches, is based on cyclical servicing of the output port queues where the service level of a specific class of packets is determined by the amount of time its queue is served each cycle [Demers et al., "Analysis and Simulation Of A Fair Queuing Algorithm", ACM Computer Communication Review (SIGCOMM'89), pages 3-12, 1989]. These approaches have inherent limitations when used to transport real-time streams. When traffic shaping without deadline scheduling is configured to operate at high utilization with no loss, the delay and jitter are inversely proportional to the connection bandwidth, which means that low rate connections may experience large delay and jitter inside the network. In traffic shaping with deadline scheduling the delay and jitter are controlled at the expense of possible congestion and loss.

The recognition that the processing of packets by switches and routers constitutes a performance bottleneck resulted in the development of methods for enhancing performance by simplifying the processing of packets. Multiprotocol Label Switching (MPLS) converts the destination address in the packet header into a short tag, which defines the routing of the packet inside the network [Callon et al., "A Proposed Architecture For MPLS" <draft-ietf-mpls-arch-00.txt> INTERNET DRAFT, August 1997].

The real-time transport protocol (RTP) [H. Schultzrinne et. al, RTP: A Transport Protocol for Real-Time Applications, IETF Request for Comment RFC1889, January 1996] is a method for encapsulating time-sensitive data packets and attaching to the data time related information like time stamps and packet sequence number. RTP is currently the accepted method for transporting real time streams over IP internetworks and packet audio/video telephony based on ITU-T H.323.

Synchronous methods are found mostly in circuit switching, as compared to packet switching that uses mostly asynchronous methods. However, some packet switching synchronous methods have been proposed. IsoEthernet or IEEE 802.9a [IEEE 802.9a Editor. Integrated service (is): IEEE 802.9a "Isochronous Services With CSMA/CD MAC Service", IEEE Draft, March 1995] combines CSMA/CD (IEEE 802.3), which is an asynchronous packet switching, with N-ISDN and H.320, which is circuit switching, over existing Ethernet infrastructure (10Base-T). This is a hybrid solution with two distinct switching methods: N-ISDN circuit switching and Ethernet packet switching. The two methods arc separated in the time domain by time division multiplexing (TDM). The IsoEthernet TDM uses fixed allocation of bandwidth for the two methods - regardless of their utilization levels. This approach to resource partitioning results in undesirable side effects like under-utilization of the circuit switching part while the asynchronous packet switching is over loaded but cannot use the idle resources in the circuit switching part.

One approach to an optical network that uses synchronization was introduced in the synchronous optical hypergraph [Y. Ofek, "The Topology, Algorithms And Analysis Of A Synchronous Optical Hypergraph Architecture", Ph.D. Dissertation, Electrical Engineering Department, University of Illinois at Urbana, Report No. UIUCDCS-R-87-1343, May 1987], which also relates to how to integrate packet telephony using synchronization [Y. Ofek, "Integration Of Voice Communication On A Synchronous Optical Hypergraph", INFOCOM'88, 1988]. In the synchronous optical hypergraph, the forwarding is performed over hyper-edges, which are passive optical stars. In [Li et al., "Pseudo-Isochronous Cell Switching In ATM Networks", IEEE INFOCOM'94, pages 428-437, 1994; Li et al., "Time-Driven Priority: Flow Control For Real-Time Heterogeneous Internetworking", IEEE INFOCOM'96, 1996] the synchronous optical hypergraph idea was applied to networks with an arbitrary topology and with point-to-point links. The two papers [Li et al., "Pseudo-Isochronous Cell Switching In ATM Networks", IEEE INFOCOM'94, pages 428-437, 1994; Li et al., "Time-Driven Priority: Flow Control For Real Time Heterogeneous Internetworking", IEEE INFOCOM'96, 1996] provide an abstract (high level) description of what is called "RISC-like forwarding", in which a packet is forwarded, with little if any details, one hop every time frame in a manner similar to the execution of instructions in a Reduced Instruction Set Computer (RISC) machine.

In U.S. Pat. No. 5,418,779 Yemini et al. and "Isochronets: a High-Speed Network Switching Architecture" - published in the Proceedings of IEEE INFOCOM 1993, pages 740-747 - discloses switched network architecture with common time reference. The time reference is used in order to determine the time in which multiplicity of nodes can transmit simultaneously over one predefined routing tree to one destination. At every time instance the multiplicity of nodes are transmitting to different single destination node.

Routing-the selection of an output port for an information segment (i.e. data packets) that arrives at an input port of a switch-is a fundamental function of communication networks. In circuit switching networks, the unit of switching is a byte, and the switching is made based on the location of the byte in a time frame.

Establishing a connection in a circuit switching network requires the network to reserve a slot for the connection in every frame. The position of the byte in the frame is different from link to link, so each switch maintains a translation table from incoming frame positions on each input port to respective output ports and frame positions therein. The sequence of frame positions on the links of the route constitute a circuit that is assigned for the exclusive use of a specific connection, which results in significant inflexibility: the connection is limited in traffic intensity by the capacity of the circuit and when the connection does not use the circuit no other is allowed to use it. This feature is useful for CBR traffic, like PCM telephony, but it results in low utilization of the network when the traffic is bursty [C. Huitema, Routing in the Internet, Prentice Hall, 1995, and A. Tannebaum Computer Networks (3rd Ed) Prentice Hall 1996].

### SUMMARY OF THE INVENTION:

In accordance with the present invention, a system is disclosed for scheduling and managing data transfer of data packets over packet switching networks in accordance with claim 1. The arrangement combines the advantages of both circuit and packet switching. It provides for allocation for the exclusive use of predefined connections and for those connections it guarantees loss free transport with low delay and jitter. When predefined connections do not use their allocated resources, other non-reserved data packets can use them without affecting the performance of the predefined connections. On the Internet the non-reserved data packet traffic is called "best effort" traffic.

A method for transmitting and forwarding packets over a packet switching network is described where the delay between two switches increases, decreases, or changes arbitrarily over time. Packets are being forwarded over each link inside the network in predefined periodic time intervals. The switches of the network maintain a common time reference, which is obtained either from an external source (such as GPS - Global Positioning System) or is generated and distributed internally. The time intervals are arranged with simple periodicity and complex periodicity (like seconds and minutes of a clock).

The invention, at least in its preferred embodiment, provides advantages of timely forwarding within predefined time interval over two types of link delay variations: (i) increasing delay and (ii) decreasing delay. When the delay increases at some point of time a packet may be late for its predefined forwarding time interval. In such case the packet is delayed until the next time interval of its virtual pipe. When the link delay decreases, packets are buffered until the first time interval of its virtual pipe.

Packets that are forwarded inside the network over the same route and in the same time intervals constitute a virtual pipe and share a pipe-ID. The pipe-ID can be either explicit, such as a tag or a label that is generated inside the network, or implicit, such as a group of IP addresses. A virtual pipe provides deterministic quality of service guarantees. The time interval in which a switch forwards a specific packet is determined by the packet's pipe-ID, the time it reaches the switch, and the current value of the common time reference.

The present invention at least in its preferred embodiment gives the advantage that the bandwidth allocated to a connection and the delay and jitter inside the network are independent. MPLS can be used by the present invention to identify virtual pipes. The packet time-stamp that is carried in the RTP header can be used to facilitate time-based transport.

Under the aforementioned prior art methods for providing packet switching services, switches and routers operate asynchronously. The present invention provides real-time services by synchronous methods that utilize a time reference that is common to the switches and end stations comprising a wide area network. The common time reference can be realized by using UTC (Coordinated Universal Time), which is globally available via, for example, GPS (Global Positioning System - see, for example: http://www.utexas.edu/depts/grg/gcraft/notes/gps/gps.html). By international agreement, UTC is the same all over the world. UTC is the scientific name for what is commonly called GMT (Greenwich Mean Time), the time at the 0 (root) line of longitude at Greenwich, England. In 1967, an international agreement established the length of a second as the duration of 9,192,631,770 oscillations of the cesium atom. The adoption of the atomic second led to the coordination of clocks around the world and the establishment of UTC in 1972. The Time and Frequency Division of the National Institute of Standards and Technologies (NIST) (see http://www.boulder.nist.gov/ timefreq) is responsible for coordinating with the International Bureau of Weights and Measures (BIPM) in Paris in maintaining UTC.

UTC timing is readily available to individual PCs through GPS cards. For example, TrueTime, Inc.'s (Santa Rosa, CA) PCI-SG provides precise time, with zero latency, to computers that have PCI extension slots. Another way by which UTC can be provided over a network is by using the Network Time Protocol (NTP) [D. Mills, "Network Time Protocol" (version 3) IETF RFC 1305]. However, the clock accuracy of NTP is not adequate for inter-switch coordination, on which this invention is based.

Although the present invention relies on time to control the flow of packets inside the network in a similar fashion as in circuit switching, there are major differences between the two approaches. In circuit switching, for each data unit (e.g., a byte) at the time it has been transmitted from its source, it is possible to predict deterministically the future times it will be transmitted from any switch along its route [Ballart et al., "SONET: Now It's The Standard Optical Network", IEEE Communications Magazine, Vol. 29 No. 3, March 1989, pages 8-15]. The time resolution of this advanced knowledge is much shorter than the data unit transmission time. On the other hand, in accordance with the present invention, for each data unit (e.g., a cell) at the time it has been transmitted from its source, it is possible to know the future time frames that this data unit will be forwarded along its route. However, the time frame, which constitutes the accuracy of this advance timing knowledge, is much larger than one data unit transmission time. For example, the transmission time of an ATM cell (53 bytes) over a gigabit per second link is 424 nanoseconds, which is 294 times smaller than a typical time frame of 125 microseconds used in one embodiment of the present invention. There are several consequences that further distinguish the present invention from circuit switching.

The use of reserved resources may be allowed by all packet traffic whenever the reserved resources are not in use. The synchronization requirements are preferably independent of the physical link transmission speed, while in circuit switching the synchronization becomes more and more difficult as the link speed increases.

Timing information need not be used for routing, and therefore, as in the Internet, for example, the routing may be done using IP addresses or a tag/label.

The Internet "best effort" packet forwarding strategy can be integrated into the system.

A method is disclosed for monitoring and policing the packet traffic in a packet switching network where the switches maintain a common time reference.

Designated points inside the network can be enabled to ascertain the level of packet traffic in predefine time intervals, and control the flow of packets and bring it back to predetermined levels in cases where the traffic volume exceeds predetermined levels. The information collected by the designated points facilitates billing for Internet services based on network usage, and identification of faulty conditions and malicious forwarding of packets that cause excessive delay beyond predetermined value.

A method is described for exchanging timing messages and data packets between synchronous switches with a common time reference, and between end-stations/gateways and other synchronous switches, over an asynchronous network, i.e., a network with asynchronous switches. The method entails transmission of messages conveying the common time reference to end-station/gateways that have no direct access to the common time reference, and data packets that are sent responsive to the timing information and predetermined scheduled time intervals.

Methods are provided for maintaining timely forwarding within predefined time interval over three network configurations: (i) end-station to synchronous switch over asynchronous (LAN) switches, (ii) end-station to gateway over asynchronous (LAN) switches and then to synchronous switch, (iii) synchronous switch to synchronous switch over asynchronous switches.

These and other aspects and attributes of the present invention will be discussed with reference to the following drawings and accompanying specification.

### BRIEF DESCRIPTION OF THE DRAWINGS:

FIG. 1 is a schematic illustration of a virtual pipe and its timing relationship with a common time reference (CTR), wherein delay is determined by the number of time frames between the forward time out at Node A and the forward time out at Node D;
FIG. 2 is a schematic illustration of multiple virtual pipes sharing certain ones of the switches;
FIG. 3 is a schematic block diagram illustration of a switch that uses a common time reference from the GPS (Global Positioning System) for the timely forwarding of packets disclosed in accordance with the present invention;
FIG. 4 illustrates the relationship among the local common time reference (CTR) on the switches, and how the multiplicity of local times is projected on the real-time axis, wherein time is divided into time frames of a predefined duration;
FIG. 5 is a schematic illustration of how the common time reference is organized into contiguous time-cycles of k time-frames each and contiguous super-cycle of *l* time-cycles each;
FIG. 6 is a schematic illustration of the relationship of the network common time reference and UTC (Coordinated Universal Time), such that, each time-cycle has 100 time-frames, of 125 microseconds each, and 80 time-cycles are grouped into one super-cycle of one second;
FIG. 7 is a schematic illustration of a data packet pipeline as in FIG. 1, and correlating to data packet movement through the switches 10 versus time for forwarding over a virtual pipe with common time reference (CTR);
FIG. 8 illustrates the mapping of the time frames into and out of a node on a virtual pipe, wherein the mapping repeats itself in every time cycle illustrating time in versus forwarding time out;
FIG. 9 is an illustration of a serial transmitter and a serial receiver;
FIG. 10 is a table of the 4B/5B encoding scheme for data such as is used by the AM7968 - TAXI chip set in accordance with one embodiment of the present invention;
FIG. 11 is a table of the 4B/5B encoding scheme for control signals, such as, the time frame delimiter (TFD) such as is used by the AM7968, in accordance with one embodiment of the present invention;
FIG. 12 is a schematic block diagram of an input port with a routing controller;
FIG. 13 is a schematic diagram of the routing controller which determines to which output port an incoming data packet should be switched to and attaches the time of arrival (ToA) information to the data packet header;
FIG. 14 is a flow diagram of the routing controller operation;
FIGS. 15A and 15B illustrate two generic data packet headers with virtual pipe ID (PID), and priority bit (P), wherein FIG. 15A illustrates a packet without time-stamp field, and wherein FIG. 15B illustrates a packet with time-stamp field, and also shows how the common time-reference value, time of arrival (ToA), is attached by the routing controller;
FIG. 16 is a schematic block diagram of an output port with a scheduling controller and a serial transmitter;
FIG. 17 is a schematic block diagram of the double-buffer scheduling controller;
FIG. 18 is a flow diagram of the double-buffer scheduling controller 46 operation;
FIG. 19 is a functional block diagram of the general scheduling controller with its transmit buffer and select buffer controller;
FIG. 20 is a flow diagram describing the packet scheduling controller operation for computing the forwarding time of a packet based on the following input parameters: PID 35C, ToA 35T and the CTR 002;
FIG. 21 is a flow diagram illustrating the operation of the Select Buffer Controller 45D;
FIG. 22 illustrates the real-time protocol (RTP) packet header with time-stamp field of 32 bits; and
FIG. 23 is a flow diagram describing the packet scheduling controller operation for computing the dispatching-time of a packet based on the following input parameters: PID, ToA, CTR and the RTP time-stamp.
FIG. 24 is a schematic description of a switch with a common time reference partition into time-frames with predefined positions such that the input port can unambiguously identify the positions;
FIG. 25 is a description of the timing partition of the common time reference into cycle with k time frames in each, while each time frame is further partitioned into four predefined parts: a, b, c and d;
FIG. 26 is a schematic diagram of the time-based routing controller. This unit determines to which output port a data packet should be switched and attaches the time in and position information to the data packet header;
FIG. 27 is an example of a routing and scheduling table on one of the incoming input ports using the incoming time or time-frame of arrival (ToA) and the position counter value for determining: (i) the output port, (ii) the out-going time-frame, and (iii) the position of the out-going data packet within the out-going time-frame;
FIG. 28 is a schematic illustration of a data packet which is sent across the fabric to the output port;
FIG. 29 is an example of a routing and scheduling table on one of the incoming input ports using the time stamp and position information for determining: (i) the output port, (ii) the out-going time-frame, and (iii) the position of the out-going data packet within the out-going time-frame;
FIG. 30 is a flow diagram of the routing controller operation;
FIG. 31 is a flow diagram of the data packet scheduling controller 45A operation;
FIG. 32 is a flow diagram of a different embodiment of the Select Buffer Controller 45D;
FIG. 33 is a schematic diagram of another alternate embodiment of the routing controller which determines to which output port an incoming data packet should be switched to and attaches the time of arrival (ToA) information to the data packet header;
FIGS. 34A and 34B are schematic illustrations of two generic data packet headers with virtual pipe ID (PID) and priority bits (P1/P2): (A) a packet without a time-stamp field and (B) a packet with a time-stamp field. This drawing also shows how the common time-reference value, time of arrival (ToA), is attached by the routing controller;
FIG. 35 is a table classifying the data packets;
FIG. 36 is a flow diagram of an alternate embodiment of the routing controller operation;
FIG. 37 is a schematic diagram of the scheduling and congestion controller, where each buffer is divided into two parts, one for constant bit rate (CBR) and the other for variable bit rate (VBR);
FIG. 38 is a flow diagram describing an alternate embodiment of the packet scheduling and rescheduling controller operation for computing the forwarding time of a packet based on the following input parameters: pipe-ID 35C, Time of arrival 35T and the common time reference 002;
FIG. 39 is a flow diagram describing an alternate embodiment of the select buffer and congestion controller 45D;
FIG. 40 is a schematic illustration of a virtual pipe with a delay which varies in time between Node B and Node C;
FIG. 41 is a timing diagram of a virtual pipe with an increasing delay between Nodes B and C;
FIG. 42 is a timing diagram of a virtual pipe with a decreasing delay between Nodes B and C;
FIG. 43 is a schematic illustration of a virtual pipe, p, with an alternate virtual pipe, *p*';
FIG. 44 describes a node, Node E, in which two virtual pipes, p and p' are converging;
FIG. 45 is a schematic illustration of a resynchronization mechanism of two virtual pipes Pipe-ID = *p* and Pipe-ID = *p*' on Node E;
FIG. 46 is a schematic illustration of the delay analysis and scheduling controller with its transmit buffer and select buffer controller;
FIG. 47 is a flow diagram describing an alternate embodiment of the Select Buffer Controller;
FIG. 48 is a flow diagram describing the delay analysis and scheduling controller operation for computing the forwarding time of a data packet;
FIG. 49 specifies a program executed by the delay analysis and scheduler controller for mobile nodes with increasing and decreasing delays in their incoming links;
FIG. 50 specifies a program executed by the delay analysis and scheduler controller for communication links in which their delay can change instantly, such as it is the case for SONET links in a self-healing SONET rings; and
FIG. 51 specifies a program executed by the delay analysis and scheduler controller for combining two alternate paths *p* and *p*' into one path.
FIG. 52 is a schematic illustration of the delay monitoring controller;
FIG. 53 is a flow chart of the program executed by the delay monitoring controller;
FIG. 54 is a schematic illustration of the policing and load controller;
FIG. 55 is a flow chart of the program executed by the policing and load controller;
FIG. 56 is a schematic illustration of connection between an end-station and a synchronous virtual pipe switch that are separated by asynchronous LAN switches;
FIG. 57 is a schematic illustration of connections between end-stations and synchronous virtual pipe switches which are separated by some asynchronous switches and a gateway, which resynchronize the data packets before it is forwarded to the synchronous switch;
FIG. 58 is a schematic illustration of connection between two segments of virtual pipe switches which are separated by asynchronous switches and routers;
FIG. 59 is a diagram of the temporal relationship between the common time reference signals from a synchronous switch and the timely forwarding of packets from an end-station;
FIG. 60 is an illustration of the possible time of arrival (ToA) variations to a synchronous switch of data packets, which are forwarded over asynchronous switches;
FIG. 61 is a schematic illustration of a data packet resynchronization mechanism at the input port; and
FIG. 62 specifies a program executed by the delay analysis and scheduler controller for the case of finding the schedule exactly on the delay bound by using the time-stamp at the data packet header.

### DETAILED DESCRIPTION OF THE ILLUSTRATED EMBODIMENTS:

While this invention is susceptible of embodiment in many different forms, there is shown in the drawing, and will be described herein in detail, specific embodiments thereof with the understanding that the present disclosure is to be considered as an exemplification of the principles of the invention and is not intended to limit the invention to the specific embodiments illustrated.

The present invention relates to a system and method for transmitting and forwarding packets over a packet switching network. The switches of the network maintain a common time reference, which is obtained either from an external source (such as GPS - Global Positioning System) or is generated and distributed internally. The time intervals are arranged in simple periodicity and complex periodicity (like seconds and minutes of a clock). A packet that arrives to an input port of a switch, is switched to an output port based on specific routing information in the packet's header (e.g., IPv4 destination address in the Internet, VCI/VPI labels in ATM). Each switch along a route from a source to a destination forwards packets in periodic time intervals that are predefined using the common time reference. The time interval duration can be longer than the time duration required for transmitting a packet, in which case the exact position of a packet in the time interval is not predetermined.

Packets that are forwarded inside the network over the same route and in the same periodic time intervals constitute a virtual pipe and share the same pipe-ID. Pipe-ID can be either explicit, such as a tag or a label that is generated inside the network, or implicit such as a group of IP addresses. A virtual pipe can be used to transport data packets from multiple sources and to multiple destinations. A virtual pipe provides deterministic quality of service guarantees. The time interval in which a switch forwards a specific packet is determined by the packet's pipe-ID, the time it reaches the switch, and the current value of the common time reference. In accordance with the present invention, congestion-free packet switching is provided for pipe-IDs in which capacity in their corresponding forwarding links and time intervals is reserved in advance. Furthermore, packets that are transferred over a virtual pipe reach their destination in predefined time intervals, which guarantees that the delay jitter is smaller than or equal to one time interval.

Packets that are forwarded from one source to multiple destinations share the same pipe ID and the links and time intervals on which they are forwarded comprise a virtual tree. This facilitates congestion-free forwarding from one input port to multiple output ports, and consequently, from one source to multiplicity of destinations. Packets that are destined to multiple destinations reach all of their destinations in predefined time intervals and with delay jitter that is no larger than one time interval.

A system is provided for managing data transfer of data packets from a source to a destination. The transfer of the data packets is provided during a predefined time interval, comprised of a plurality of predefined time frames. The system is further comprised of a plurality of switches. A virtual pipe is comprised of at least two of the switches interconnected via communication links in a path. A common time reference signal is coupled to each of the switches, and a time assignment controller assigns selected predefined time frames for transfer into and out from each of the respective switches responsive to the common time reference signal. For each switch, there is a first predefined time frame within which a respective data packet is transferred into the respective switch, and a second predefined time frame within which the respective data packet is forwarded out of the respective switch. The time assignment provides consistent fixed intervals between the time between the input to and output from the virtual pipe.

In a preferred embodiment, there is a predefined subset of the predefined time frames during which the data packets are transferred in the switch, and for each of the respective switches, there are a predefined subset of the predefined time frames during which the data packets are transferred out of the switch.

Each of the switches is comprised of one or a plurality of addressable input and output ports. A routing controller maps each of the data packets that arrives at each one of the input ports of the respective switch to a respective one or more of the output ports of the respective switch.

For each of the data packets, there is an associated time of arrival to a respective one of the input ports. The time of arrival is associated with a particular one of the predefined time frames. For each of the mappings by the routing controller, there is an associated mapping by a scheduling controller, which maps of each of the data packets between the time of arrival and forwarding time out. The forwarding time out is associated with a specified predefined time frame.

In the preferred embodiment, there are a plurality of the virtual pipes comprised of at least two of the switches interconnected via communication links in a path. The communication link is a connection between two adjacent switches; and each of the communications links can be used simultaneously by at least two of the virtual pipes. Multiple data packets can be transferred utilizing at least two of the virtual pipes.

In some configurations of this invention there is a fixed time difference, which is constant for all switches, between the time frames for the associated time of arrival and forwarding time out for each of the data packets. The fixed time difference is a variable time difference for some of the switches. A predefined interval is comprised of a fixed number of contiguous time frames comprising a time cycle. Data packets that are forwarded over a given virtual pipe are forwarded from an output port within a predefined subset of time frames in each time cycle. Furthermore, the number of data packets that can be forwarded in each of the predefined subset of time frames for a given virtual pipe is also predefined.

The time frames associated with a particular one of the switches within the virtual pipe are associated with the same switch for all the time cycles, and are also associated with one of input into or output from the particular respective switch.

In some configurations of this invention there is a constant fixed time between the input into and output from a respective one of the switches for each of the time frames within each of the time cycles. A fixed number of contiguous time cycles comprise a super cycle, which is periodic. Data packets that are forwarded over a given virtual pipe are forwarded from an output port within a predefined subset of time frames in each super cycle. Furthermore, the number of data packets that can be forwarded in each of the predefined subset of time frames within a super cycle for a given virtual pipe is also predefined.

In the preferred embodiment the common time reference signal is coupled from a GPS (Global Positioning System), and is in accordance with the UTC (Coordinated Universal Time) standard. The UTC time signal does not have to be received directly from GPS. Such signal can be received by using various means, as long as the delay or time uncertainty associated with that UTC time signal does not exceed half a time frame.

In one embodiment, the super cycle duration is equal to one second as measured using the UTC (Coordinated Universal Time) standard. The super cycle can also be equal to multiple UTC seconds or a fraction of a UTC second.

A select buffer controller maps one of the time frames for output from a first switch to a second time frame for input via the communications link to a second switch. The select buffer controller uses the UTC time signal in order to identify the boundaries between two successive time frames. The select buffer controller inserts a time frame delimiter (TFD) signal into the transmission link in order to the signal the second switch with the exact boundary between two time frames.

Each of the data packets is encoded as a stream of data, and a time frame delimiter is inserted into the stream of data responsive to the select buffer controller. This can be implemented by using a redundant serial codewords as it is later explained.

The communication links can be of fiber optic, copper, and wireless communication links for example, between a ground station and a satellite, and between two satellites orbiting the earth. The communication link between two nodes does not have to be a serial communication link. A parallel communication link can be used - such link can simultaneously carry multiple data bits, associated clock signal, and associated control signals.

The data packets can be Internet protocol (IP) data packets, and asynchronous transfer mode (ATM) cells, and can be forwarded over the same virtual pipe having an associated pipe identification (PID). The PID can be an Internet protocol (IP) address, Internet protocol group multicast address, an asynchronous transfer mode (ATM), a virtual circuit identifier (VCI), and a virtual path identifier (VPI), or (used in combination as VCUVPI).

The routing controller determines two possible associations of an incoming data packet: (i) the output port, and (ii) the time of arrival (ToA). The ToA is then used by the scheduling controller for determining when a data packet should be forwarded by the select buffer controller to the next switch in the virtual pipe. The routing controller utilizes at least one of Internet protocol version 4 (IPv4), Internet protocol version 6 (IPv6) addresses, Internet protocol group multicast address, Internet MPLS (multi protocol label swapping or tag switching) labels, ATM virtual circuit identifier and virtual path identifier (VCUVPI), and IEEE 802 MAC (media access control) addresses, for mapping from an input port to an output port.

Each of the data packets is comprised of a header, which includes an associated time stamp. For each of the mappings by the routing controller, there is an associated mapping by the scheduling controller, of each of the data packets between the respective associated time-stamp and an associated forwarding time out, which is associated with one of the predefined time frames. The time stamp can record the time in which a packet was created by its application.

In one embodiment the time-stamp is generated by an Internet real-time protocol (RTP), and by a predefined one of the switches. The time-stamp can be used by a scheduling controller in order to determine the forwarding time of a data packet from an output port.

Each of the data packets originates from an end station, and the time-stamp is generated at the respective end station for inclusion in the respective originated data packet. Such generation of a time-stamp can be derived from UTC either by receiving it directly from GPS or by using the Internet's Network Time Protocol (NTP).

### 1 Synchronous virtual pipe

In accordance with the present invention, a system is provided for transferring data packets across a data network while maintaining for reserved data traffic constant bounded jitter (or delay uncertainty) and no congestion-induced loss of data packets. Such properties are essential for many multimedia applications, such as, telephony and video teleconferencing.

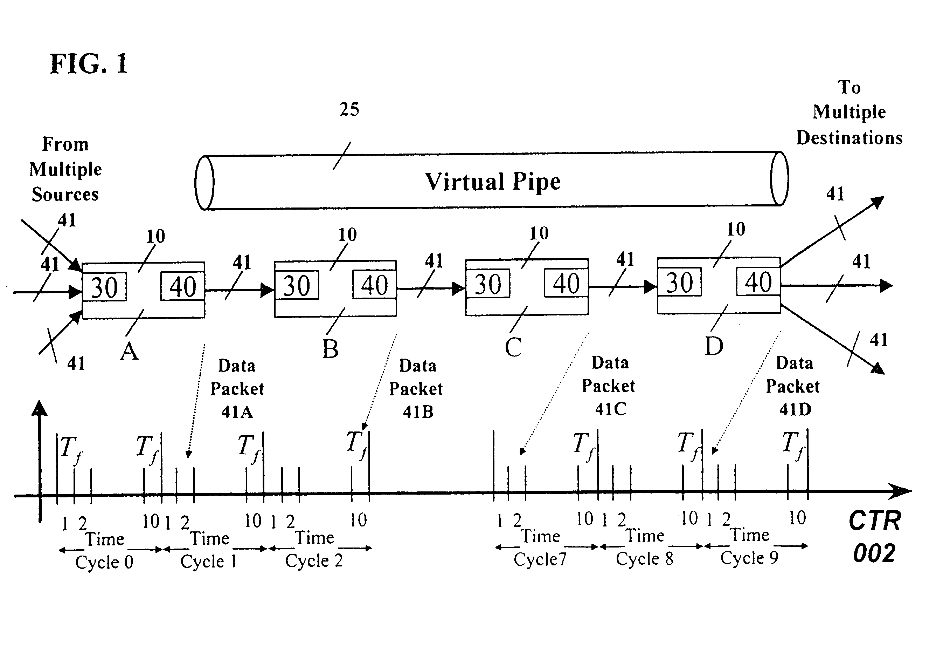

In accordance with the design, method, and illustrated implementation of the present invention, one or a plurality of virtual pipes 25 are provided, as shown in FIGS. 1-2, over a data network with general topology. Such data network can span the globe. Each virtual pipe **25** is constructed over one or more switches **10,** shown in FIG. 1, which are interconnected via communication links **41** in a path.

FIG. 1 illustrates a virtual pipe **25** from the output port **40** of switch A, through switches **B** and C. This virtual pipe ends at the output port **40** of node **D.** The virtual pipe **25** transfers data packets from at least one source to at least one destination.

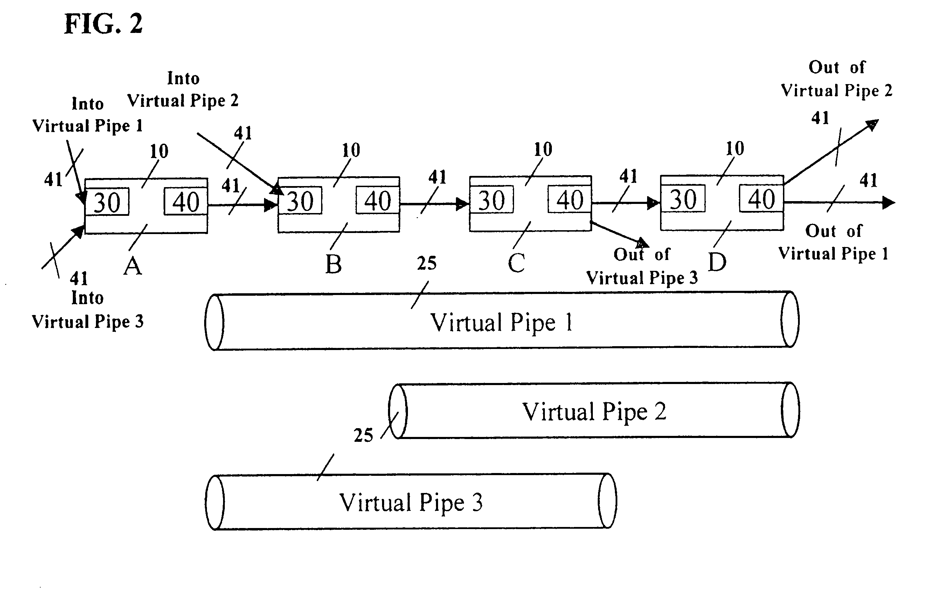

FIG. 2 illustrates three virtual pipes: virtual pipe 1 from the output of switch **A** to the output of switch **D,** virtual pipe 2 from the output of switch **B** to the output of switch **D,** and virtual pipe 3 from the output of switch **A** to the output of switch **C.**

The data packet transfers over the virtual pipe **25** via switches **10** are designed to occur during a plurality of predefined time intervals, wherein each of the predefined time intervals is comprised of a plurality of predefined time frames. The timely transfers of data packets are achieved by coupling a common time reference 002 (CTR) signal to each of the switches **10.**

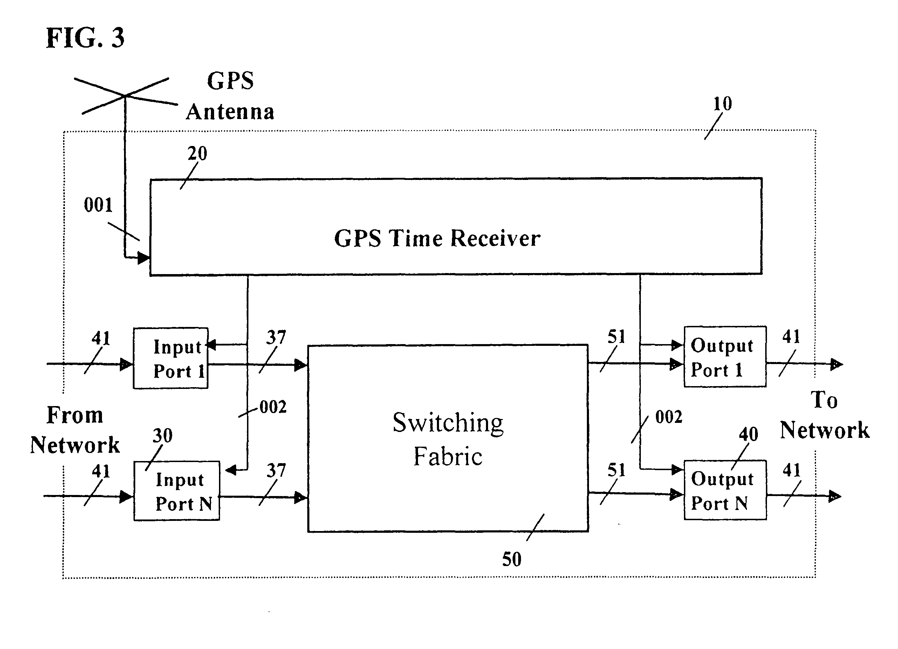

FIG. 3 illustrates the structure of a pipeline switch **10.** The switch **10** is comprised of one or a plurality of input ports **30,** one or a plurality of output ports **40,** switching fabric **50**, and global positioning system (GPS) time receiver **20** with a GPS antenna **001.** The GPS time receiver provides a common time reference signal (CTR) 002 to all input and output ports.

### 1.1 The common time reference (CTR) 002

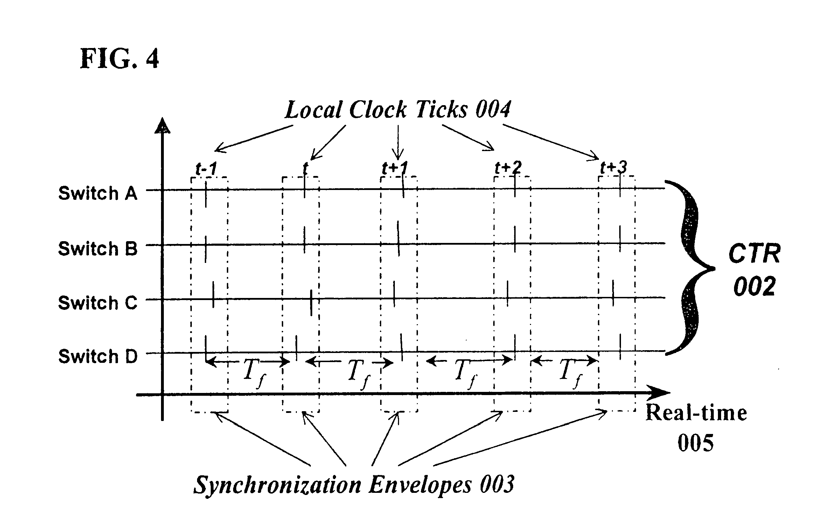

As shown in FIG. 4, the common time reference **002** that is coupled to the switches 10 provides the following property: the local clock ticks **004,** shown in FIG. 4, at all the pipeline switches (e.g., switches **A, B, C,** and **D** in FIGS. 1 and 2) when projected on the real-time axis **005** will all occur within predefined synchronization envelopes **003.** In other words, the local clock ticks **004** occur within the synchronization envelopes **003,** and therefore, outside relative to the synchronization envelopes all local clocks have the same clock value.

The common time reference is divided in a predefined manner into time frames, *Tf,* of equal duration, as shown in FIG. 4, typically *Tf* = 125 microseconds. The time frames are grouped into time cycles. Each time cycle has predefined number of time frames.

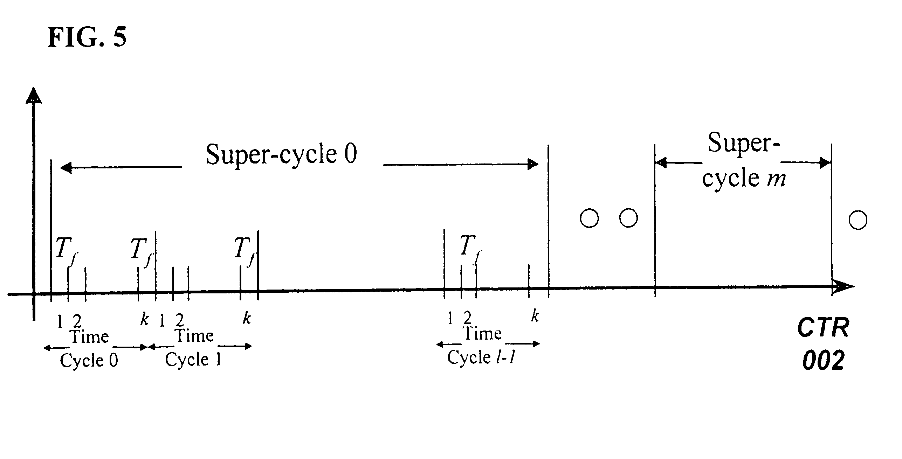

Referring to FIG. 5, there are *k* time frames in each time cycle. Contiguous time cycles are grouped together into contiguous super cycles, and as shown in FIG. 5, there are i time cycles in each super cycle.

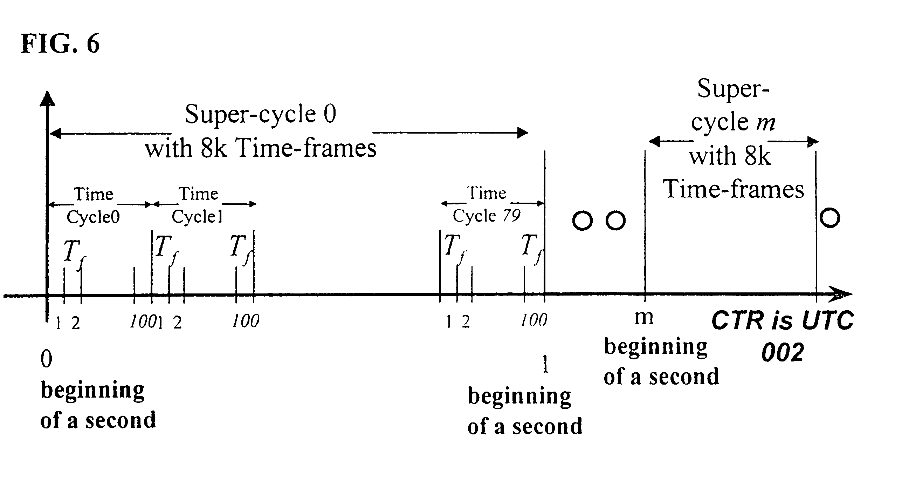

FIG. 6 illustrates how the common time reference can be aligned with the UTC (Coordinated Universal Time) standard. In this illustrated example, the duration of every super cycle is exactly one second as measured by the UTC standard. Moreover, the beginning of each super cycle coincides with the beginning of a UTC second, as shown in FIG. 6. Consequently, when leap seconds are inserted or deleted for UTC corrections (due to changes in the earth rotation period) the cycle and super cycle periodic scheduling will not be affected.

The time frames, time cycles, and super cycles are associated in the same manner with all respective switches within the virtual pipe at all times.

### 1.2 Pipeline forwarding

Pipeline forwarding relates to data packets being forwarded across a virtual pipe **25** with a predefined delay in every stage (either across a communication link **41** or across a switch **10** from input port **30** to output port **40).** Data packets enter a virtual pipe **25** from one or more sources and are forwarded to one or more destinations.

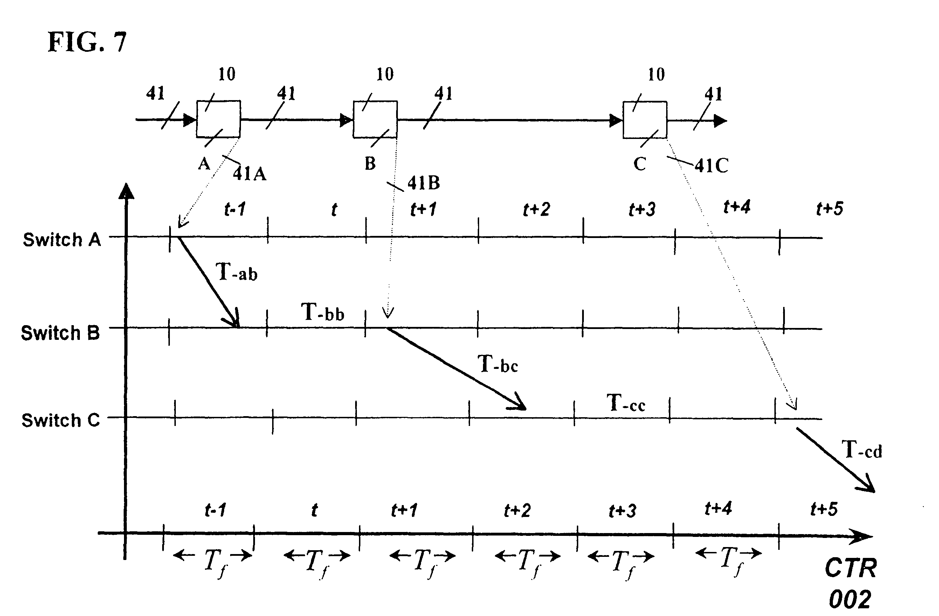

This sort of pipeline forwarding used in accordance with the present invention is illustrated in FIG. 7. Data packet **41A** is forwarded out of switch **A** during time frame t-1. This data packet **41A** will reach switch **B** after a delay of T-ab. This data packet **41A** will be forwarded out of switch **B** as data packet **41B** during time frame t+ and will reach switch C after a delay of T-bc. This data packet **41B** will be forwarded out of switch C as data packet **41C** during time frame *t*+5. Data packet **41C** will reach switch **D** after a delay of T-cd. Consequently, the delay from the output of switch **A** to the output of switch C is 6=*t*+5-(*t*-*l*) time frames. As illustrated in FIG. 7, all data packets that are forwarded over that virtual pipe will have a delay of six time frames from the output of switch **A** to the output of switch **C.**

Referring again to FIG. 1, the timely pipeline forwarding of data packets over the virtual pipe **25** is illustrated. A data packet is received by one of the input ports **30** of switch **A** at time frame 1, and is forwarded along this virtual pipe **25** in the following manner: (i) the data packet **41A** is forwarded from the output port **40** of switch **A** at time frame 2 of time cycle 1, (ii) the data packet **41B** is forwarded from the output port **40** of switch **B,** after 18 time frames, at time frame **10** of time cycle 2, (iii) the data packet **41C** is forwarded from the output port **40** of switch C, after 42 time frames, at time frame 2 of time cycle 7, and (iv) the data packet **41D** is forwarded from the output port **40** of switch **D,** after 19 time frames, at time frame 1 of time cycle 9.

As illustrated in FIG. 1,
- All data packets enter the virtual pipe **25** (i.e., forwarded out of the output port **40** of switch **A)** periodically at the second time frame of a time cycle, are output from this virtual pipe **25** (i.e., are forwarded out of the output port **40** of switch **D)** after 79 time frames.
- The data packets that enter the virtual pipe **25** (i.e., forwarded out of the output port **40** of switch **A)** can come from one or more sources and can reach switch **A** over one or more input links **41.**
- The data packets that exit the virtual pipe **25** (i.e., forwarded out of the output port **40** of switch **D)** can be forwarded over plurality of output links 41 to one of plurality of destinations.
- The data packets that exit the virtual pipe 25 (i.e., forwarded out of the output port **40** of switch **D)** can be forwarded simultaneously to multiple destinations, (i.e., multicast (one-to-many) data packet forwarding).
- The communication link **41** between two adjacent ones of the switches **10** can be used simultaneously by at least two of the virtual pipes.

In FIG. 2, where there are three virtual pipes:
- The three virtual pipes can multiplex (i.e., mix their traffic) over the same communication links.
- The three virtual pipes can multiplex (i.e., mix their traffic) during the same time frames and in an arbitrary manner.
- The same time frame can be used by multiple data packets from one or more virtual pipes.

### 1.3 Virtual pipe capacity assignment

For each virtual pipe there are predefined time frames within which respective data packets are transferred into its respective switches, and separate predefined time frames within which the respective data packets are transferred out of its respective switches. Though the time frames of each virtual pipe on each of its switches can be assigned in an arbitrary manner along the common time reference, it is convenient and practical to assign time frames in a periodic manner in time cycles and super cycles.

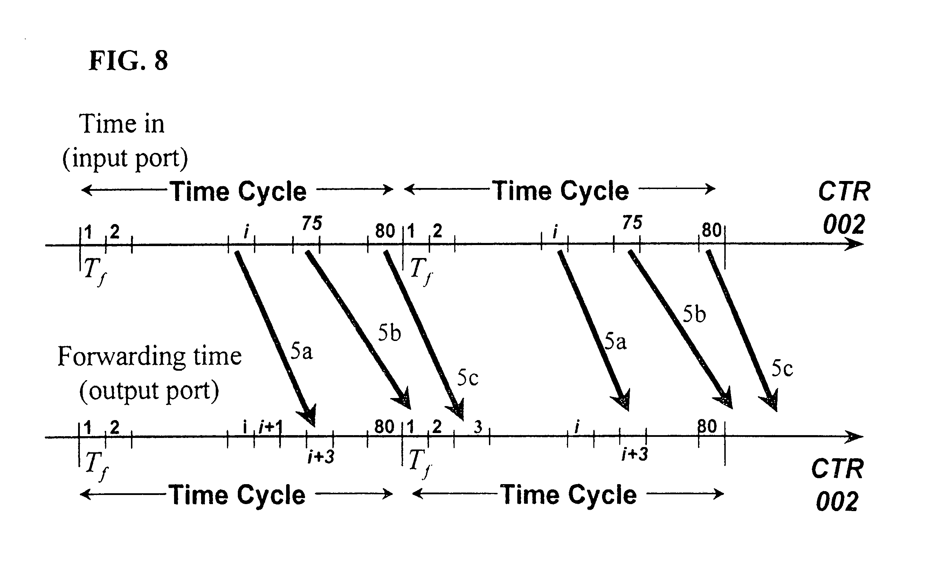

FIG. 8 illustrates the timing of a switch of a virtual pipe wherein there are a predefined subset of time frames (*i*, 75, and 80) of every time cycle, during which data packets are transferred into that switch, and wherein for that virtual pipe there are a predefined subset time frames (*i*+3, 1, and 3) of every time cycle, during which the data packets are transferred out of that switch. If each of the three data packets has 125 bytes or 1000 bits, and there are 80 time frames of 125 microseconds in each time cycle (i.e., time cycle duration of 10msec), then the bandwidth allocated to this virtual pipe is 300,000 bits per second.

In general, the bandwidth or capacity allocated for a virtual pipe is computed by dividing the number of bits transferred during each of the time cycles by the time cycle duration. In the case of a super cycle, the bandwidth allocated to a virtual pipe is computed by dividing the number of bits transferred during each of the super cycles by the super cycle duration.

The switch **10** structure, as shown in FIG. 3, can also be referred to as a pipeline switch, since it enables a network comprised of such switches to operate as a large distributed pipeline architecture, as it is commonly found inside digital systems and computer architectures.

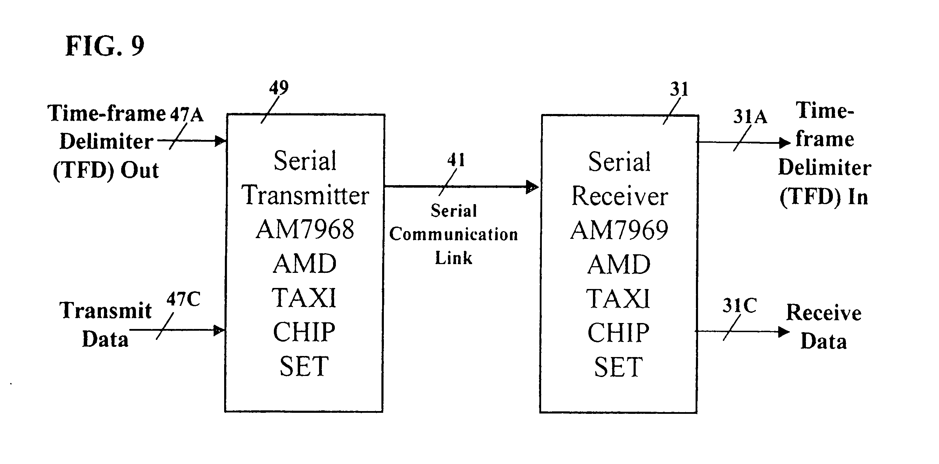

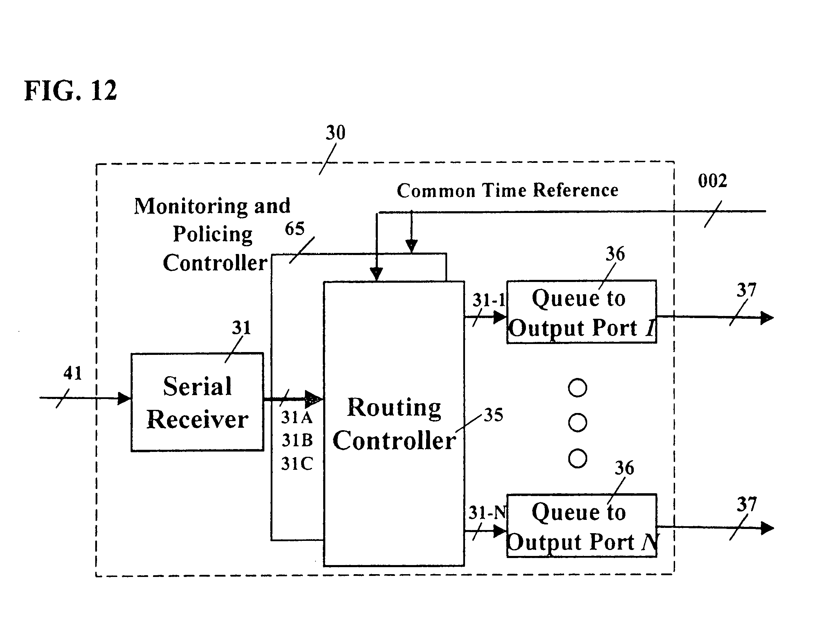

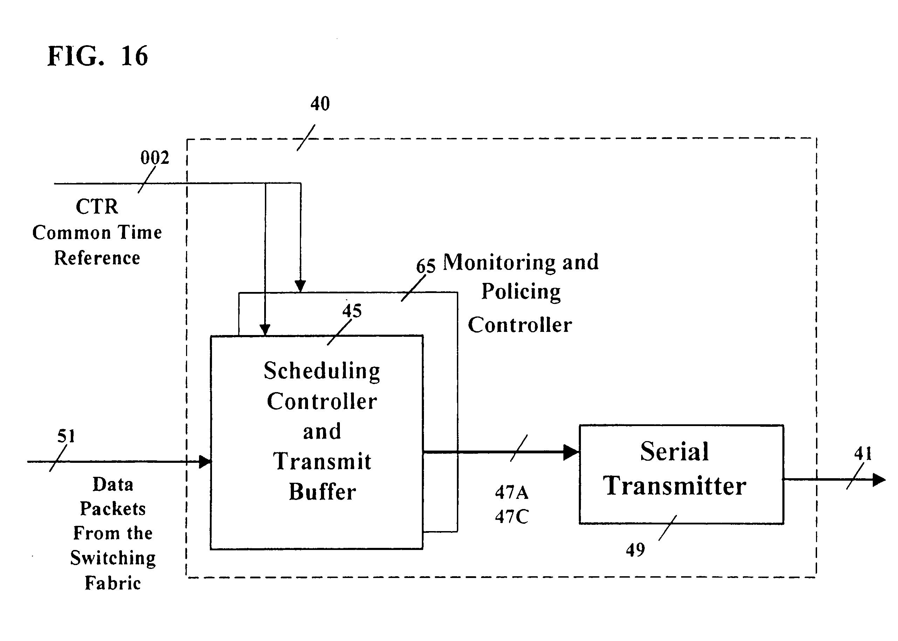

Each pipeline switch 10 is comprised of a plurality of addressable input ports 30 and output ports 40. As illustrated in FIG. 12, the input port 30 is further comprised of a routing controller 35 for mapping each of the data packets that arrives at each one of the input ports to a respective one of the output ports. As illustrated in FIG. 16, the output port **40** is further comprised of a scheduling controller and transmit buffer **45.** An output port 40 is connected to an input port 30 via a communication link 41, as shown in FIG. 9. The communication link can be realized using various technologies compatible with the present invention.

As shown in FIG. 3, the common time reference **002** is provided to the input ports 30 and output ports 40 from the GPS time receiver 20, which receives its timing signal from the GPS antenna **001.** GPS time receivers are available from variety of manufacturers, such as, True Time, Inc. (Santa Rosa, CA). With such equipment, it is possible to maintain a local clock with accuracy of ±1 microsecond from the UTC (Coordinated Universal Time) standard everywhere around the globe.

### 1.4 The communication link and time frame delimiter encoding

The communication links 41 used for the system disclosed is in this invention can be of various types: fiber optic, wireless, etc. The wireless links can be between at least one of a ground station and a satellite, between two satellites orbiting the earth, or between two ground stations, as examples.

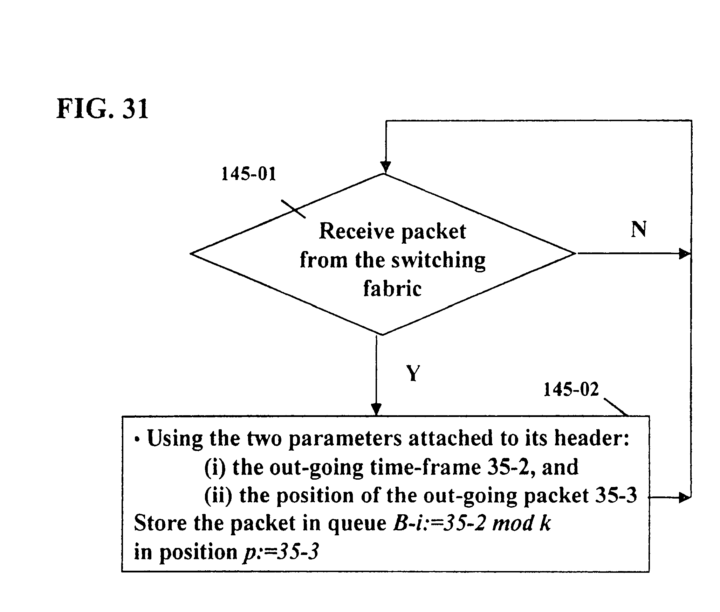

Referring to FIG. 9, a serial transmitter 49 and serial receiver 31 are illustrated as coupled to each link 41. A variety of encoding schemes can be used for a serial line link **41** in the context of this invention, such as, SONET/SDH, 8B/10B Fiber Channel, 4B/5B FDDI (fiber distributed data interface). In addition to the encoding and decoding of the data transmitted over the serial link, the serial transmitter/receiver **(49** in FIG. 12 and 31 in FIG. 16) sends/receives control words for a variety of control purposes, mostly unrelated to the present invention description. However, one control word, time frame delimiter (TFD), is used in accordance with the present invention. The TFD marks the boundary between two successive time frames and is sent by a serial transmitter **49** when a CTR **002** clock tick occurs in a way that is described hereafter as part of the output port operation. It is necessary to distinguish in an unambiguous manner between the data words, which carry the information, and the control signal or words (e.g., the TFD is a control signal) over the serial link **41.** There are many ways to do this. One way is to use the known 4B/5B encoding scheme (used in FDDI). In this scheme, every 8-bit character is divided into two 4-bit parts and then each part is encoded into a 5-bit codeword that is transmitted over the serial link **41.**

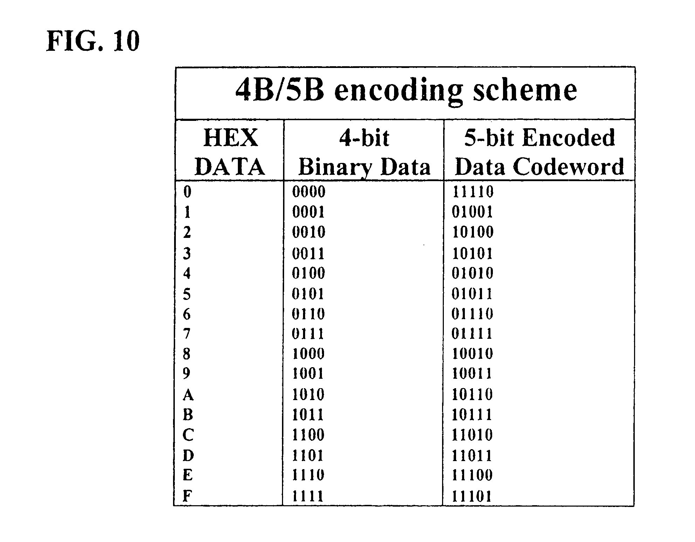

FIG. 10 illustrates an encoding table from 4-bit data to 5-bit serial codewords. The 4B/5B is a redundant encoding scheme, which means that there are more codewords than data words. Consequently, some of the unused or redundant serial codewords can be used to convey control information.

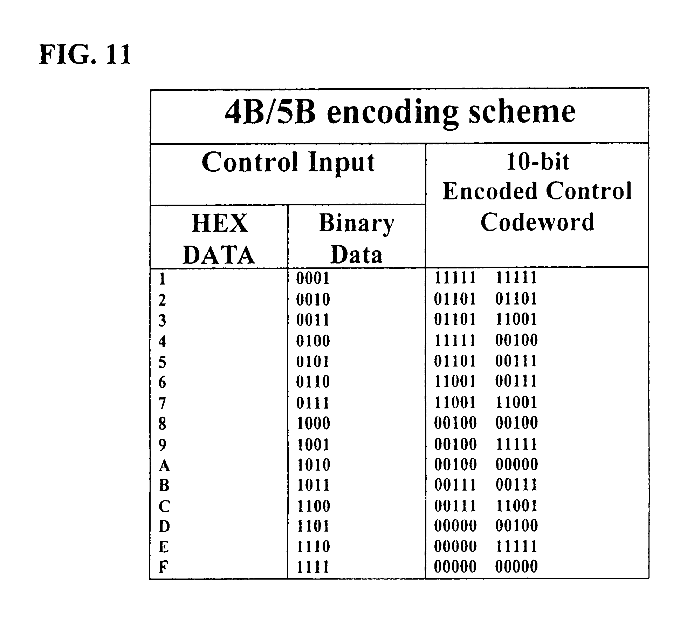

FIG. 11 is a table with 15 possible encoded control codewords, which can be used for transferring the time frame delimiter (TFD) over the serial link. The TFD transfer is completely transparent to the data transfer, and therefore, it can be sent in the middle of the data packet transmission in a non-destructive manner.

When the communication links **41** are SONET/SDH, the time frame delimiter cannot be embedded as redundant serial codewords, since SONET/SDH serial encoding is based on scrambling with no redundancy. Consequently, the TFD is implemented using the SONET/SDH frame control fields: transport overhead (TOH) and path overhead (POH). Note that although SONET/SDH uses a 125 microseconds frame, it cannot be used directly in accordance with the present invention, at the moment, since SONET/SDH frames are not globally aligned and are also not aligned to UTC. However, if SONET/SDH frames are globally aligned, SONET/SDH can be used compatibly with the present invention.

### 1.5 The input port

As shown in FIG. 12, the input port **30** has three parts: serial receiver **31,** a routing controller **35** and separate queues to the output ports **36.** The serial receiver **31** transfers the data packets and the time frame delimiters to the routing controller **35.**

The routing controller **35** is constructed of a central processing unit (CPU), a random access memory (RAM) for storing the data packet, read only memory (ROM) for storing the routing controller processing program and the routing table that is used for determining the output port that the incoming data packet should be switched to.

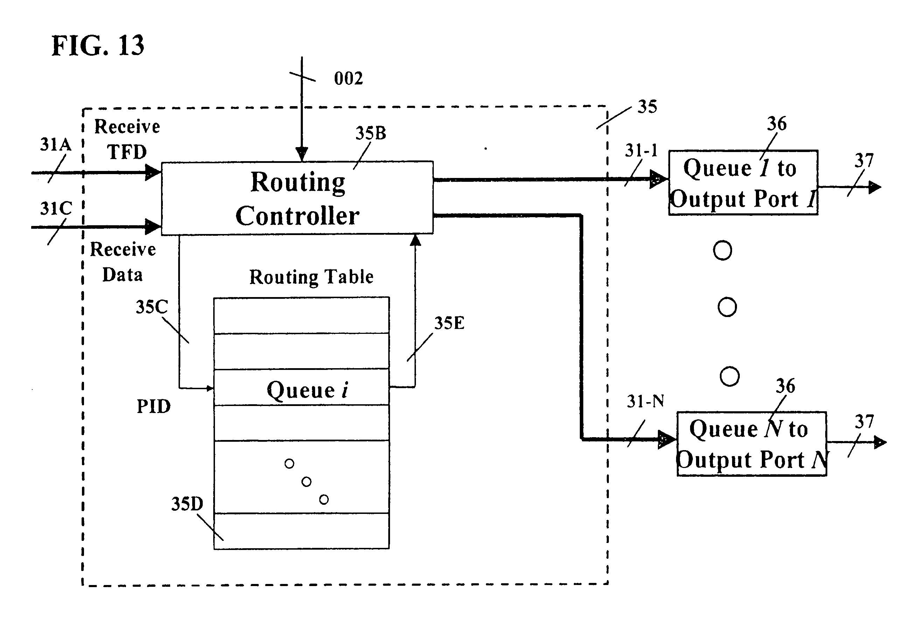

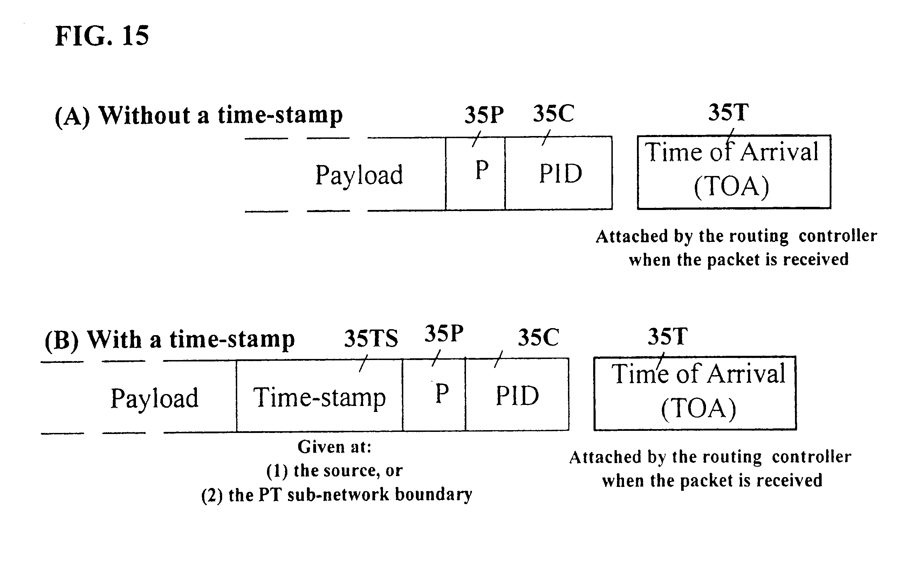

As illustrated in FIG. 13, the incoming data packet header includes a virtual pipe identification, PID **35C,** that is used to lookup in the routing table **35D** the address **35E** of the queue **36** that the incoming data packet should be transferred into. Before the packet is transferred into its queue **36,** the time of arrival (ToA) **35T** is attached to the packet header as illustrated in FIGS 15A and 15B. The ToA **35T** is used by the scheduling controller **45** of the output port **40** in the computation of the forwarding time out of the output port, and shown in FIG. 16.

The data packet can have various formats, such as, Internet protocol version 4 (IPv4), Internet protocol version 6 (IPv6), asynchronous transfer mode (ATM) cells, etc. The data packets PID can be determined by one of the following: an Internet protocol (IP) address, an asynchronous transfer mode (ATM) a virtual circuit identifier, a virtual path identifier (VCI/VPI), Internet protocol version 6 (IPv6) addresses, Internet MPLS (multi protocol label swapping or tag switching) labels, and IEEE 802 MAC (media access control) address, etc..

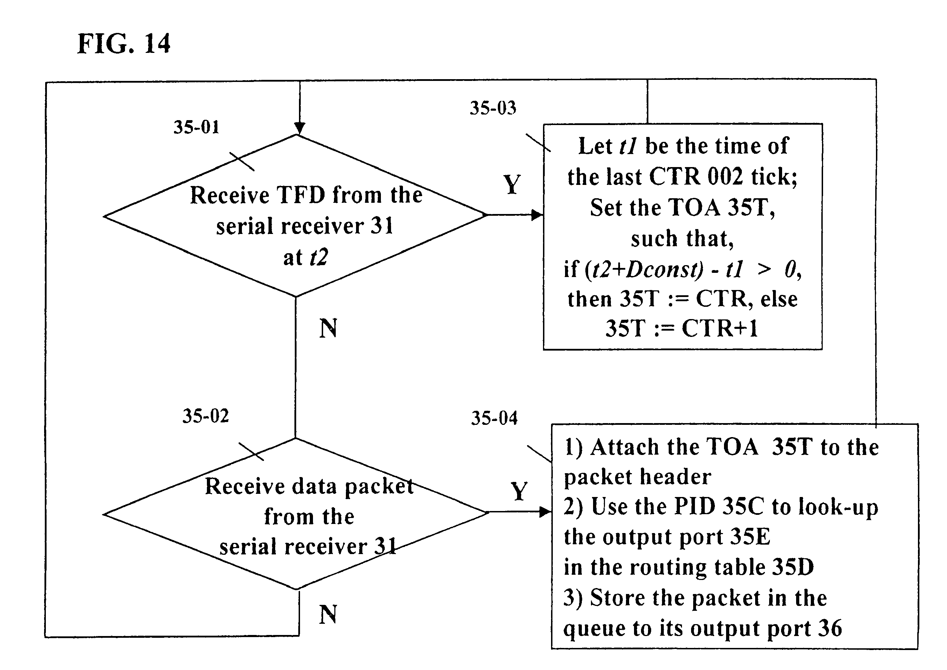

FIG. 14 illustrates the flow chart for the router controller 35 processing program executed by the routing controller **35B.** The program is responsive to two basic events from the serial receiver **31** of FIG. 12: the received time frame delimiter TFD at step **35-01,** and the receive data packet at step **35-02.** After receiving a TFD, the routing controller **35** computes the time of arrival (ToA) **35T** value at step **35-03** that is attached to the incoming data packets. For this computation it uses a constant, Dconst, which is the time difference between the common time reference (CTR) **002** tick and the reception of the TFD at time t2 (generated on an adjacent switch by the CTR **002** on that node). This time difference is caused by the fact that the delay from the serial transmitter **49** to the serial receiver **31** is not an integer number of time frames. When the data packet is received at step **35-02,** the routing controller **35B** executes three operations as set forth in step **35-04:** attach the ToA, lookup the address of the queue **36** using the PID, and storing the data packet in that queue **36**.

### 1.6 The switching fabric

There are various ways to implement a switching fabric. However, the switching fabric is peripheral to the present invention, and so it will be described only briefly. The main property that the switching fabric should ensure is that packets for which the priority bit P (35P in FIGS. 15A and 15B) is set to high, then priority (i.e., reserved traffic) will be switched into the output port in a constant bounded delay - measured in time frames.

This is possible in accordance with the present invention, where the packets in the input ports are already separated into queues to their respective output ports. Then, by using the Clos theorem in the time domain (see J.Y. Hui, "Switching and Traffic Theory for Integrated Broadband Networks", page 65), the delay can be bounded by two time frames, one time frame at the input port and one time frame to get across the switching fabric. Other implementations can be used, such as based on shared bus with round robin service of the high priority data packets, or on a crossbar switch.

Another possible switch design is shared memory, which ensures a deterministic delay bound from an input port to an output port. Shared memory packet switches are commercially available from various vendors, for example, MMC Networks Inc. (Santa Clara, CA).

FIGS. 15A and 15B illustrate data packets without and with a time stamp attached, respectively.

### 1.7 The output port

The output port **40** is illustrated in FIG. 16, comprised of a scheduling controller with a transmit buffer **45,** and serial transmitter **49** (as previously described herein). The scheduling controller **45** performs a mapping of each of the data packets between the associated respective time of arrival (ToA) and an associated forwarding time out of the output port via the serial transmitter **49.** The forwarding time is determined relative to the common time reference (CTR) **002.**

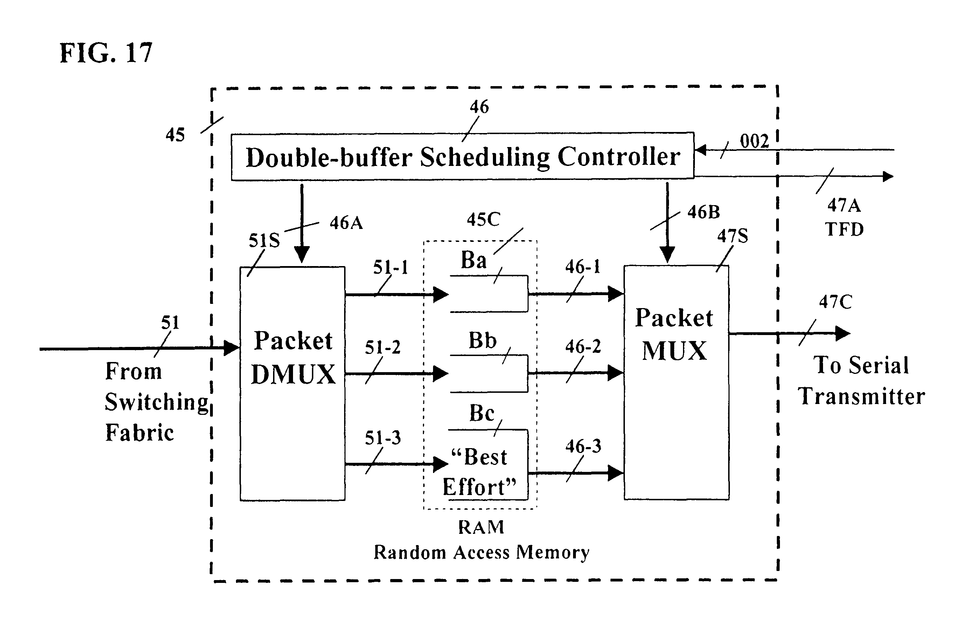

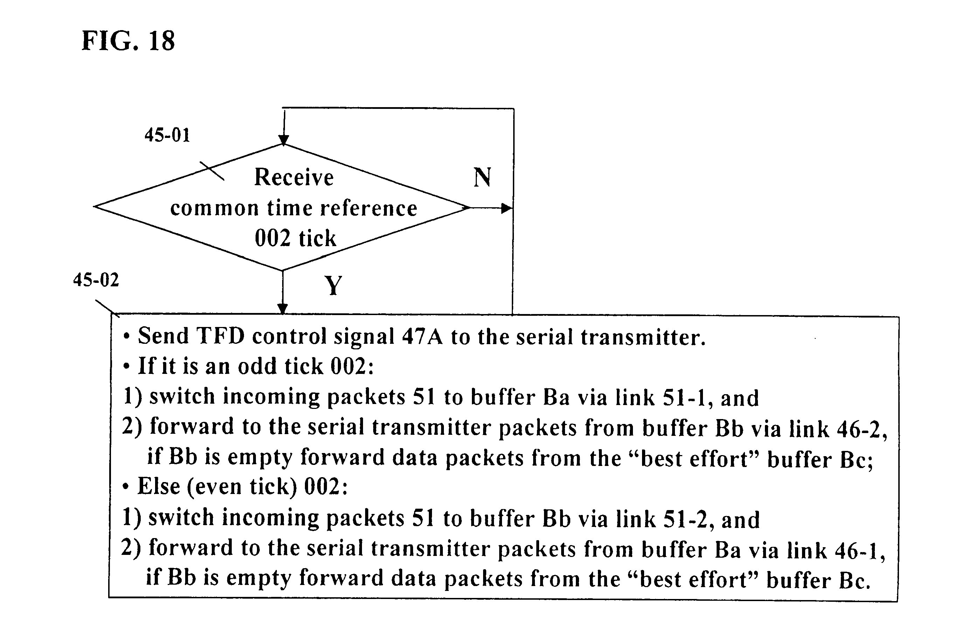

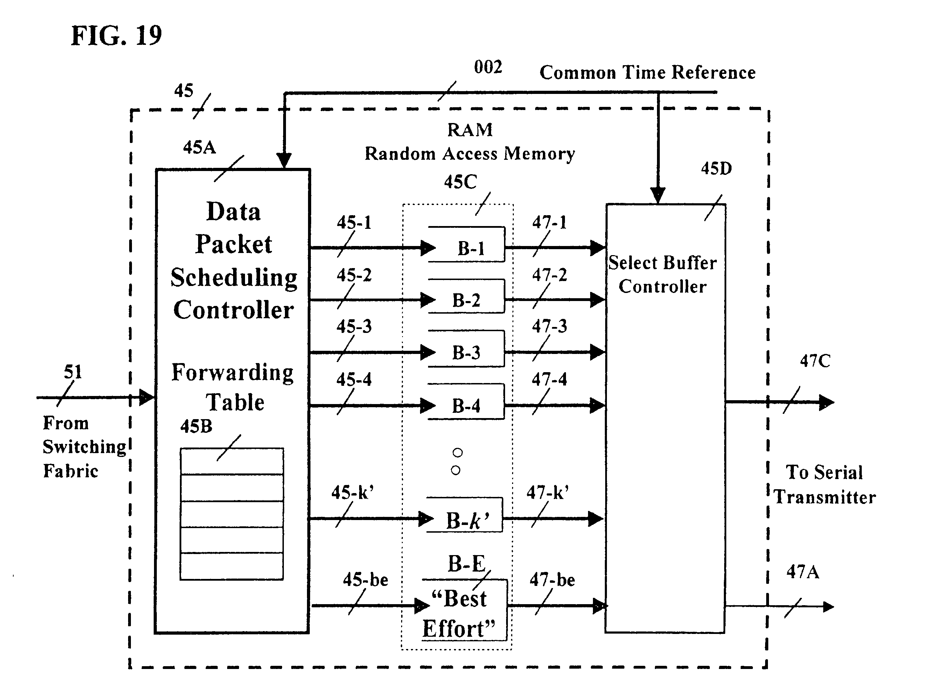

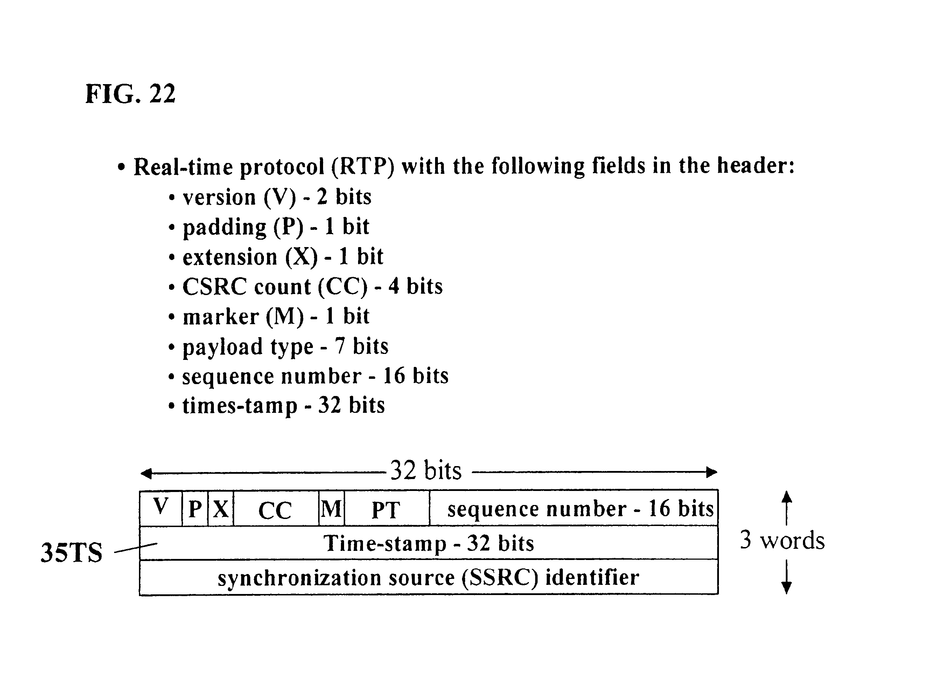

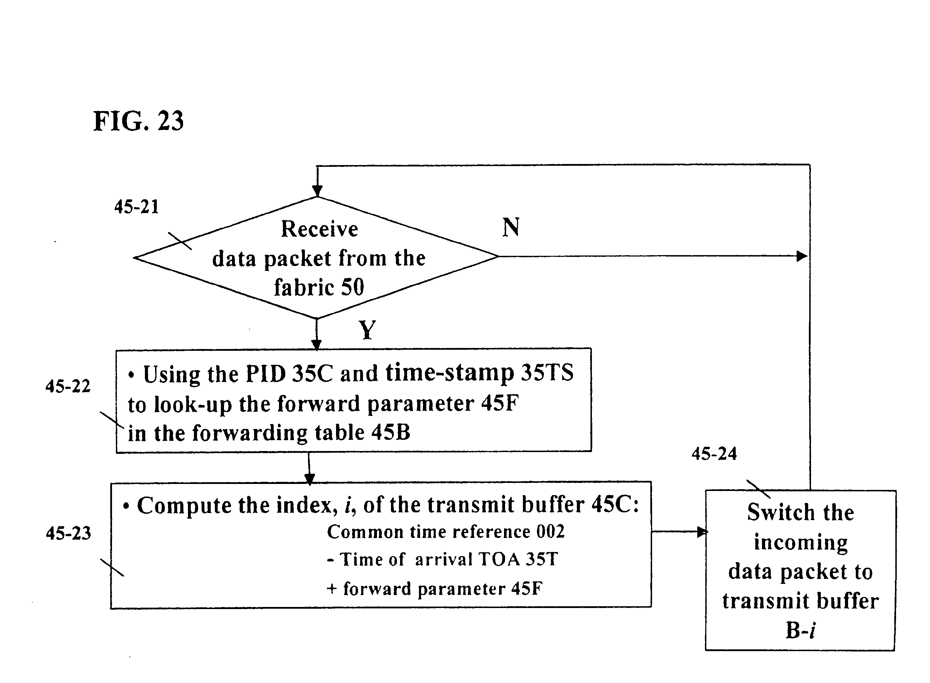

Three output port configurations are illustrated herein: a double-buffer scheduling controller, as shown in FIGS. 17 and 18, a general scheduling controller, as shown in FIGS. 19, 20, and 21, and a general scheduling controller with time-stamp, as shown in FIGS. 22 and 23.

The double-buffer scheduling controller **46,** as illustrated in the block diagram of FIG. 17 and flow chart of FIG. 18, is constructed of a central processing unit (CPU), a random access memory (RAM) for storing the data packet, and read only memory (ROM) for storing the controller processing program. Each time frame as specified by the common time reference **002** is considered to be one of an even tick or an odd tick. The determination of even tick vs. odd tick is made relative to the beginning of a time cycle. In the preferred embodiment, the first time frame of a time cycle is determined to be an odd tick, the second time frame of the time cycle is determined to be an even tick, the third time frame of the time cycle is determined to be an odd tick, and so forth, where the determination of even tick vs. odd tick alternates as shown for the duration of the time cycle. In an alternate embodiment, the first time frame of a time cycle is determined to be an even tick, the second time frame of the time cycle is determined to be an odd tick, the third time frame of the time cycle is determined to be an even tick, and so forth, where the determination of even tick vs. odd tick alternates as shown for the duration of the time cycle. The actual sequence of even ticks vs. odd ticks of time frames within a time cycle may be arbitrarily started with no loss in generality.

The double-buffer scheduling controller **46** operates in the following manner. Data packets arrive from the switching fabric **50** via link **51.** When the priority bit **35P** is asserted (i.e., reserved traffic), the packet is switched through the packet DMUX (demultiplexer) **51S** (during odd ticks of the common time reference) to buffer **Ba** via link **51-1,** and during even ticks of the common time reference to buffer **Bb,** via link **51-2.** Data packets in which the priority bit **35P** is not asserted (i.e., non-reserved traffic) are switched through the packet DMUX (demultiplexer) **51S** to the "best effort" buffer **Bc** via link **51-3.** The transmit buffer selection operation is controlled by the select signal **46A**, which connects the double-buffer scheduling controller with the packet DMUX (demultiplexer) **51S**.

Data packets are forwarded to the serial transmitter **49** through the packet MUX (multiplexer) **47S,** and link **47C** in FIG. 17, during odd ticks of the common time reference from buffer **Bb** via link **46-2**, and during even ticks of the common time reference from buffer **Ba** via link **46-1.** If during odd ticks of the common time reference buffer **Bb** is empty, data packets from the "best effort" buffer **Bc** are forwarded to the serial transmitter. If during even ticks of the common time reference buffer **Ba** is empty, data packets from the "best effort" buffer **Bc** are forwarded to the serial transmitter. The transmit buffer selection operation is controlled by the select signal **46B,** which connects the double-buffer scheduling controller **46** with the packet MUX (multiplexer) **47S**.

A more general scheduling controller **45** operation is described in FIGS. 19, 20, and 21, which includes a transmit buffer **45C** and a select buffer controller **45D.** The data packet scheduling controller **45A,** together with the select buffer controller **45D**, perform the mapping, using the PID **35C** and the data packet time of arrival (ToA) **35T** in order to determine the respective time frame a respective packet should be forwarded out of the output port. Both controllers **45A** and **45D** are constructed of a central processing unit (CPU), a random access memory (RAM) for storing the data, and read only memory (ROM) for storing the controller processing program.

Data packets arrive from the switching fabric **50** via link **51.** Data packets which have the priority bit **35P** asserted (i.e., reserved traffic) are switched by the scheduling controller **45A** to one of the k transmit buffers **45C** (B-1, B-2, ...., B-*k*). Each of the *k* buffers is designated to store packets that will be forwarded in each of the k time frames in every time cycle, as shown in FIG. 5.

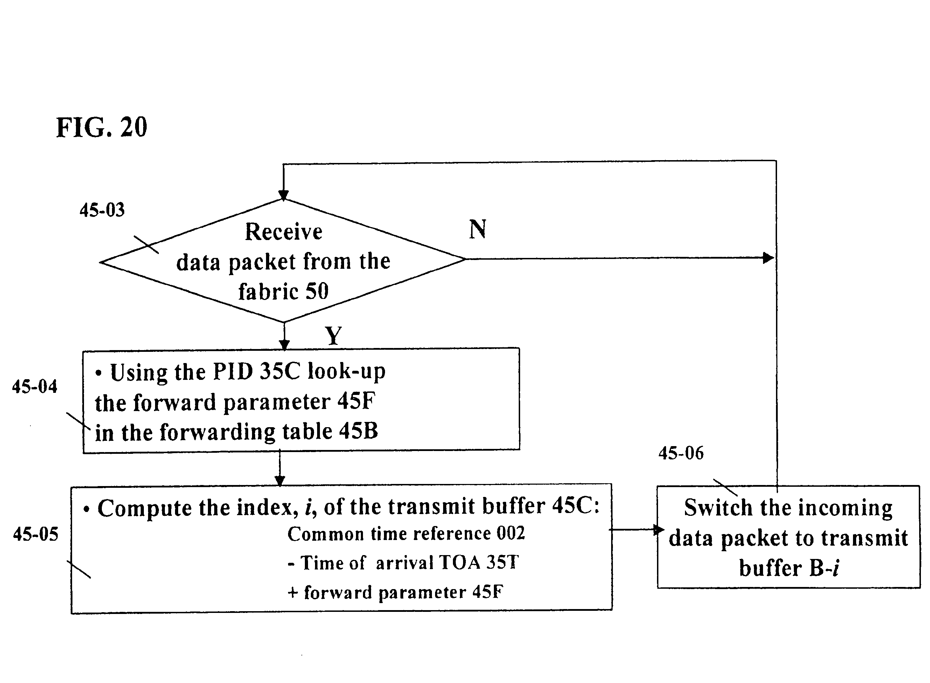

The flow chart for the program executed by the scheduling controller is illustrated in FIG. 20. When the data packet is received from the fabric at step **45-03,** the PID **35C** in the data packet header is used to look-up the forward parameter **45F** in the forwarding table **(45B** of FIG. 19), as specified in step **45-04.** Next, the index i of the transmit buffer, between B-1 and B-k', is computed in step **45-05** by subtracting the time of arrival ToA **35T** from the common time reference CTR **002** and by adding the forward parameter **45F**, and then switching the incoming data packet to transmit buffer B-*i*. as specified in step **45-06.**

Incoming data packets in which the priority bit **35P** is not asserted (i.e., non-reserved traffic) are switched by the scheduling controller to the transmit "best effort" buffer B-E via link **45-be.**

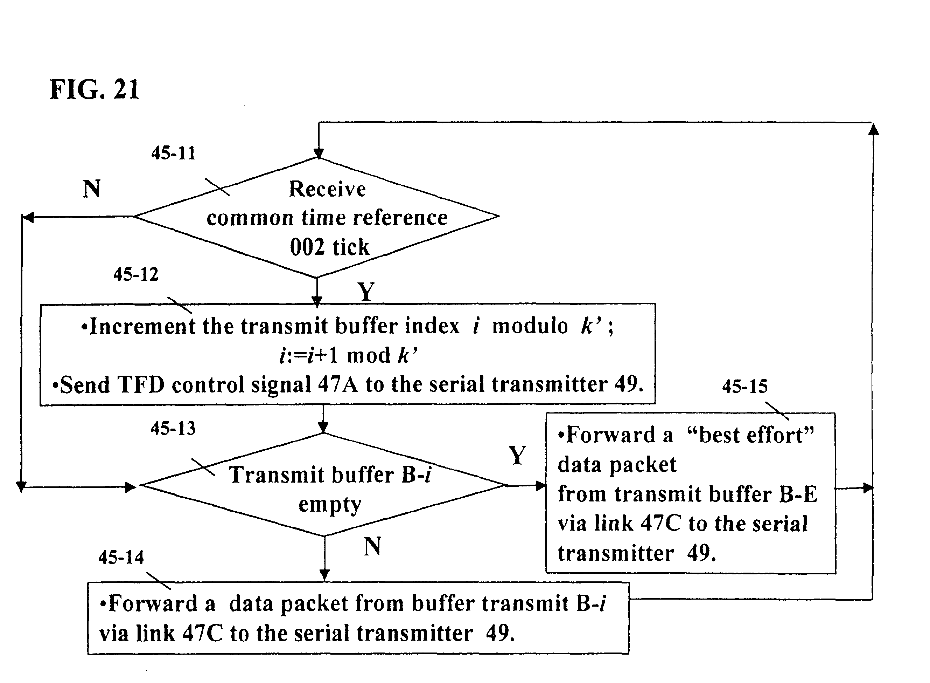

FIG. 21 illustrates the flow chart for the select buffer controller **45D** operation. The controller **45D** is responsive to the common time reference (CTR) tick **002,** and at step 45-11, increments the transmit buffer index *i* (i.e., *i*:*=i*+*1 mod k',* where *k*' is the number of buffers for scheduled traffic) and sends a time frame delimiter TFD to the serial transmitter at step **45-12**. Then, if the transmit buffer B-*i* is not empty, at step **45-13,** it will send a data packet from transmit buffer B-*i*, as specified in at step **45-14,** else it will send a "best effort" data packet from the "best effort" buffer **B-be**, as specified at step **45-15**.

FIGS. 22 and 23 illustrate a system with a scheduling controller, wherein each of the data packets is comprised of a header, including an associated time stamp. The time-stamp is generated by an Internet real-time protocol (RTP) in which its data packet format is illustrated in FIG. 22. Alternatively, the time-stamp can be generated by a predefined one of the switches 10 in the system, or the time stamp can be generated at a respective end station for inclusion in the respective originated data packet.

FIG. 23 illustrates the operation of the scheduling controller for the case where the packet header contains a time-stamp **35TS.** Data packets arrive from the switching fabric **50** via link **51.** Data packets in which the priority bit **35P** is set (i.e., reserved traffic) are switched by the scheduling controller to one of the *k* transmit buffers **45C** (B-1, B-2,..., B-*k*). Each of the *k* buffers is designated to store packets that will be forwarded in each of the *k* time frames in every time cycle, as shown in FIG. 5. The flow chart for the program executed by the scheduling controller is illustrated in FIG. 23. When a data packet is received from the fabric at step **45-21**, the PID **35C** in the data packet header is used to look-up the forward parameter **45F** in the forwarding table **45B,** as specified in step **45-22.** Next the index i of the transmit buffer, between B-1 and B-*k*, is computed in step **45-23** by subtracting the time of arrival ToA **35T** from the common time reference CTR **002** and by adding the forward parameter **45F,** and then switching the incoming data packet to transmit buffer B-*i*, as specified in step **45-24.**

### 2 Time-based routing

In this variant of this invention, a packet that arrives to an input port of a switch is switched to an output port based on (i) its position within the predefined time interval and (ii) the unique address of the incoming input port. Each switch along a route from a source to a destination forwards packets in periodic time intervals that are predefined using the common time reference. The time interval duration can be longer than the time duration required for transmitting a packet.

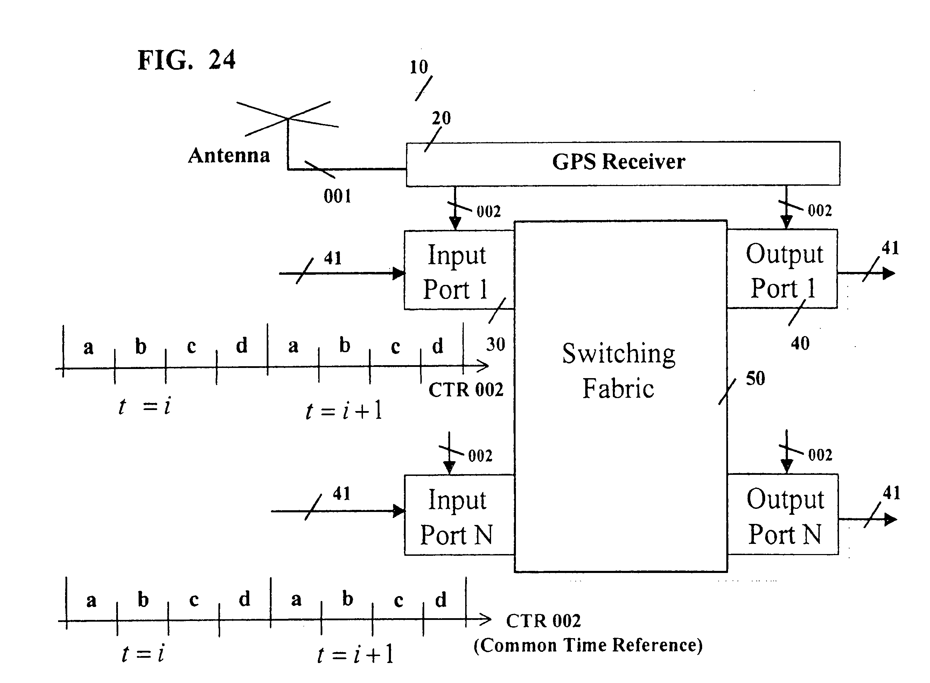

FIG. 24 depicts a schematic description of a switch **10.** The switch **10** is constructed of four components: a plurality of uniquely addressable input ports **30** (in FIG. 24 there are N such ports), a plurality of uniquely addressable output ports **40** (in FIG. 24 there are N such ports), a switching fabric **50,** and a global positioning system (GPS) time receiver **20** with a GPS antenna **001.** The GPS time receiver provides a common time reference (CTR) 002 to all input and output ports. The common time reference is partitioned into time frames. Each of the time frames is further comprised of predefined positions such that the input port can unambiguously identify the positions. The time and position that a data packet arrives into the input port are used by the routing controller 35 in FIG. 12 for determining the output port that incoming data packet should be switched to.

In FIG. 24, each of the time frames, t=i and *t=i+1*, has four predefined positions: a, b, c and d. In each of the positions, one data packet can be stored. The positions can be marked explicitly with position delimiters (PDs) between the variable size data packets, as it will be explained below, or implicitly. Implicit position within a time frame can be achieved by either measuring time delays - this is suitable for sending a fixed size ATM (asynchronous transfer mode) cells, or by placing data packets of variable size in the predefined positions within each of the time frames - if the output port **40** does not have a data packet to transmit in a predefine position an empty or null data packet should be sent.

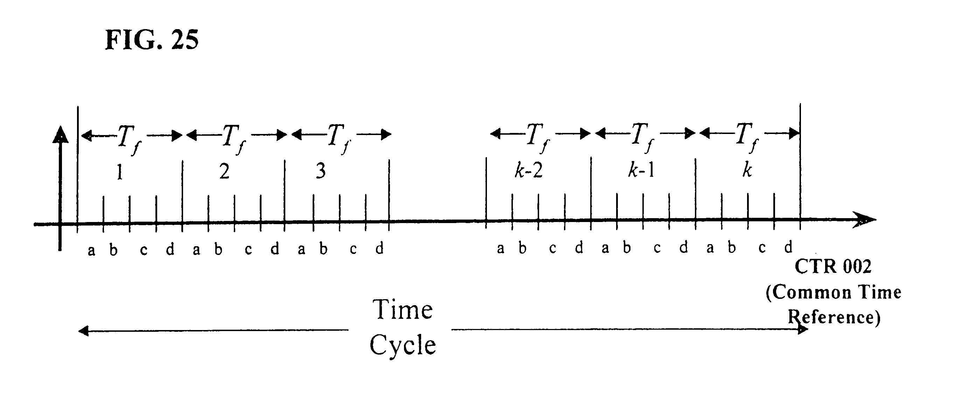

FIG. 25 depicts a common time reference (CTR) **002** axis that is divided into time cycles. Each time cycle is divided into predefined frames. Each of the time frame has predefined positions: a, b, c, and d of either fixed size (in time duration) or variable size (in time duration), consequently, the predefined position can have ether fixed size data packets or variable size data packets, respectively.

### 2.1 The time-based input port

The input port **30,** shown in FIG. 12, has three parts: serial receiver **31,** time-based routing controller **35** and separate queues **36** to the plurality of output ports **40.** The serial receiver **31** transfers to the time-based routing controller 35 data packets, time frame delimiters (TFD) and position delimiters (PD).

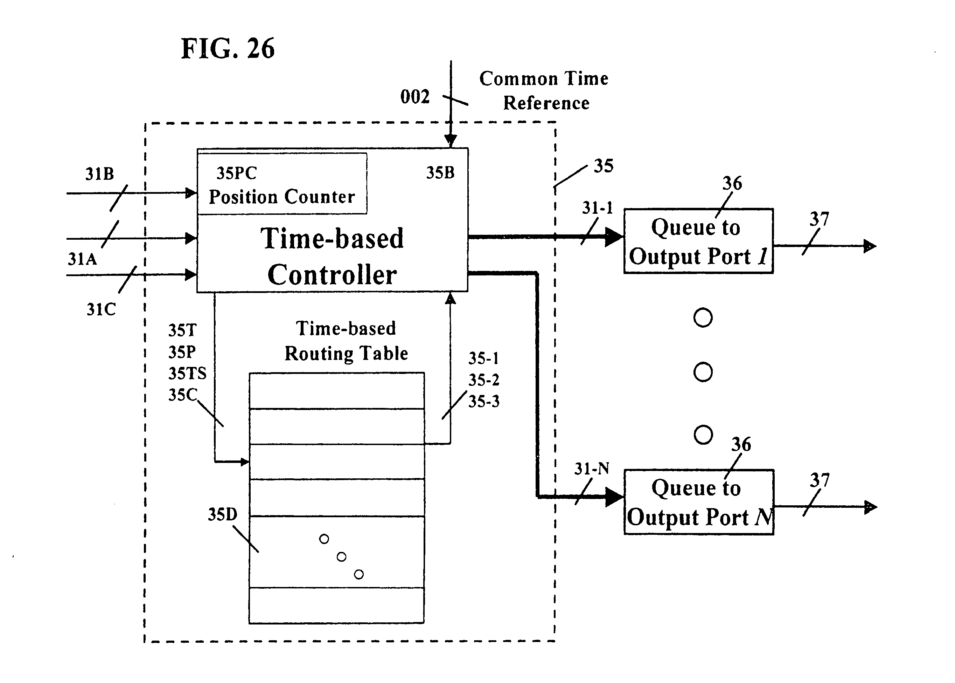

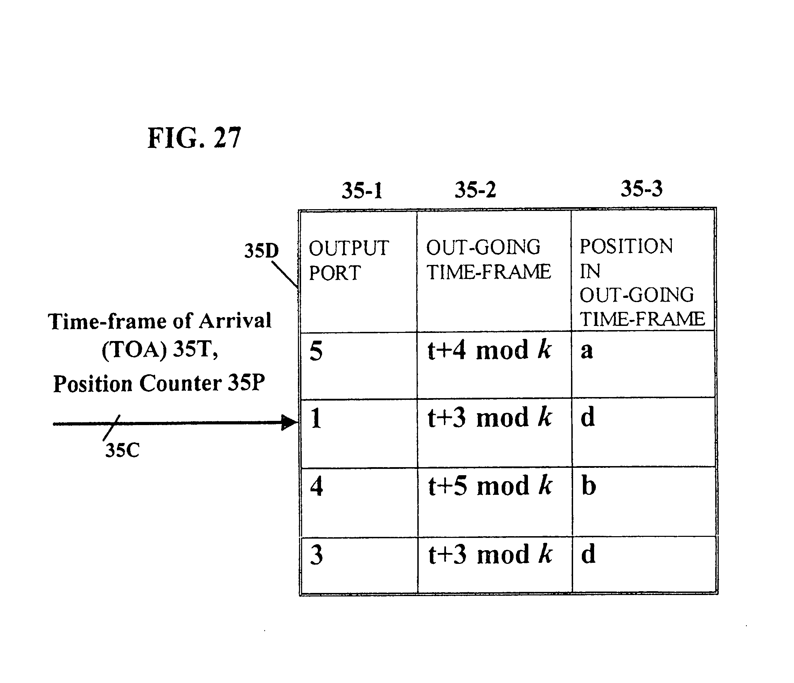

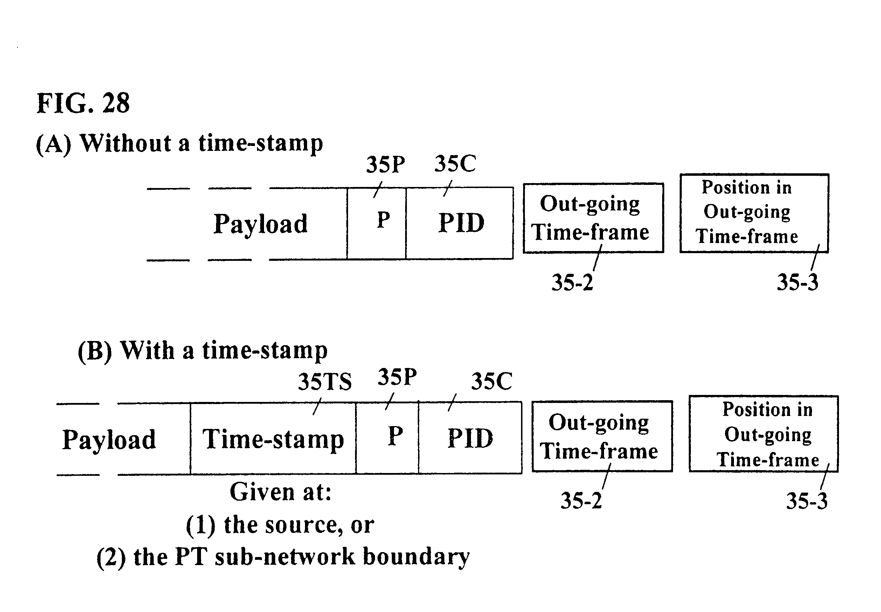

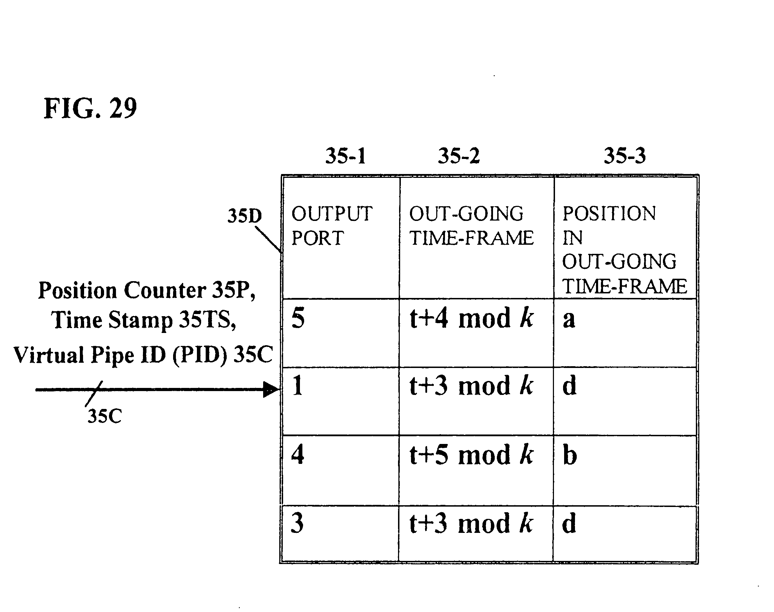

The routing controller is constructed of a central processing unit (CPU), a random access memory (RAM) for storing the data packets, read only memory (ROM) for storing the time-based routing controller processing program, and a time-based routing table is used for determining the following parameters (see **35D** in FIGS. 26, 27, and 29):
1. Parameter **35-1** in table **35D** (FIGS. 27 and 29) - the output port **40** that the incoming data packet should be switched to - this parameter is used for switching the data packet to the queue 36 that is leading to the corresponding output port;
2. Parameter **35-2** in table **35D** (FIGS. 27 and 29) - the out-going time frame in which the data packet will be forwarded out of the output port - this parameter is attached to the data packet header in FIG. 27, and
3. Parameter **35-3** in table **35D** (FIGS. 27 and 29) - the position within the out-going time frame in which the data packet will be forwarded out of the output port - this parameter is attached to the data packet header in FIG. 28.

The time-based routing controller **35B** determines the entry to the time-based routing table **35D,** in FIGS. 27 and 29, in various ways, such as:
1. Local time and position by using (1) the time frame of arrival (ToA) **35T -** the time frame using the common time reference **002,** and (2) the position value **35P** within that time frame as measured by the position counter **35PC.** This is depicted in FIG. 12.
2. Time stamp **35TS** and position **35PC** by using (1) the time stamp **35TS** in the data packet header in FIG. 28B, and (2) the position value **35P** within that time frame as measured by the position counter **35PC.**
3. Time stamp, PID (shown in the packet headers in FIG. 28) and position **35PC** by (1) the time stamp **35TS** in the data packet header in FIG. 28B, (2) the virtual pipe ID (PID) **35C** in the data packet header in FIG. 28B (the virtual pipe is discussed in details at the end of this description), and (3) the position value **35P** within that time frame as measured by the position counter **35PC.** This is depicted in FIG. 29.

The data packets, see for example FIG. 28, can have various formats, such as, Internet protocol version 4 (IPv4), Internet protocol version 6 (IPv6), asynchronous transfer mode (ATM) cells. The data packets PID **35C** can be determined by one of the following: an Internet protocol (EP) address, an asynchronous transfer mode (ATM), a virtual circuit identifier, and a virtual path identifier (VCI/VPI), Internet protocol version 6 (IPv6) addresses, Internet MPLS (multi protocol label swapping or tag switching) labels, and IEEE 802 MAC (media access control) address.

The time stamp 35TS in the packet header in FIG. **28B** can be generated by an application using Internet real-time protocol (RTP) and is used also in the ITU-T H.323 standard. Such data packets use the format depicted in FIG. 22. Alternatively the time-stamp can be generated by a predefined one of the switches in the system, or alternatively the time stamp is generated at the respective end node for inclusion in the respective originated data packet.

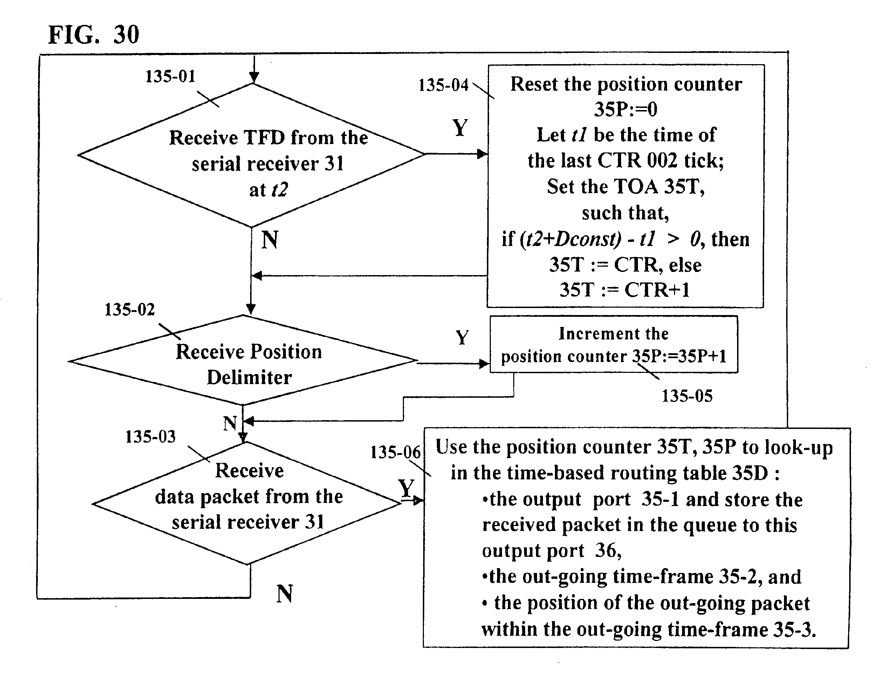

FIG. 30 is a detailed description of the program executed by the time-based routing controller **35B.** The program is responsive to three events from the serial receiver **31** and the position value **35P** within that time frame as measured by the position counter **35PC.** The time-based routing controller program FIG. 30 using the three parameters in table **35D** in FIGS. 27 and 29 that is associated with this incoming packet operates as follows:
1. Receive time frame delimiter TFD **35-1 -** responsive to this event the routing controller resets the position counter (**35P**:=0 in **135-04** of FIG. 30) and computes the time-frame of arrival (ToA) **35T** value as specified in **135-04** of FIG. 30. For this computation it uses a constant, **Dconst,** which is the time difference between the common time reference (CTR) **002** tick and the reception of the TFD at time *t2* (note that the TFD was generated on an adjacent switch by the CTR **002** on that node). This time difference is caused by the fact that the delay from the serial transmitter 49 to the serial receiver **31** is not an integer number of time frames.
2. Receive position delimiter PD **135-02 -** responsive to this event it increments the position counter, **35P:=35P**+1, 135-05 of FIG. 30.
3. Receive data packet **135-03** -responsive to this event three operations are performed as shown in **135-06** of FIG. 30: (1) the out-going time frame parameter **35-2** is attached to the packet header, (2) the position within the out-going time frame parameter **35-3** is attached to the packet header, and (3) the data packet is stored in the queue **36** using the output port parameter **35-1** in table **35D** in FIGS. 27 and 29.

### 2.2 The time-based output port

The output is depicted in FIG. 16, it has two parts a scheduling controller with a transmit buffer **45,** and serial transmitter **49,** which was described before. The data packet scheduling controller **45A**, in FIG. 19, transfers the data packet the transmit buffer which is a random access memory (RAM) **45C,** as described below.

The data packet scheduling controller **45** operation is described in FIGS. 19, 31, and 32, which includes a transmit buffer **45C** and a select buffer controller **45D.** The scheduling controller **45A** together with the select buffer controller **45D** perform the mapping, using the two parameters, **35-2** and **35-3,** that were attached to the data packet by the routing controller **35B.** Both controllers are constructed of a central processing unit (CPU), a random access memory (RAM) for storing the data, and read only memory (ROM) for storing the controller processing program.

Data packets that arrive from the switching fabric **50** via link **51** in which their priority bit **35P** is asserted (i.e., reserved traffic) will be switched by the data packet scheduling controller **45A** to one of the *k'* transmit buffers **45C:** B-1, B-2, ..., B-*k*' (one special case is when *k'*=*k,* where *k* is the time cycle size measured in time frames). Each of the k' buffers is designated to store packet that will be forwarded in a cyclically recurring order in each of the k time frames in every time cycle, as shown in FIGS. 5 and 6. The actual program executed by the data packet scheduling controller is described in FIG. 31. When data packet is received from the fabric **145-01** (in FIG. 31) the two parameters, **35-2** and **35-3,** in the data packet header are used to determine in which of the transmit buffer, between B-1 and B*-k',* to store that data packet and in what position, as specified in **145-02** in FIG. 31.

Incoming data packets in which their priority bit **35P,** see FIG. 28, is not asserted (i.e., non-reserved traffic) will be switched by the data packet scheduling controller to the transmit "best effort" buffer B-E via link **45-be.**

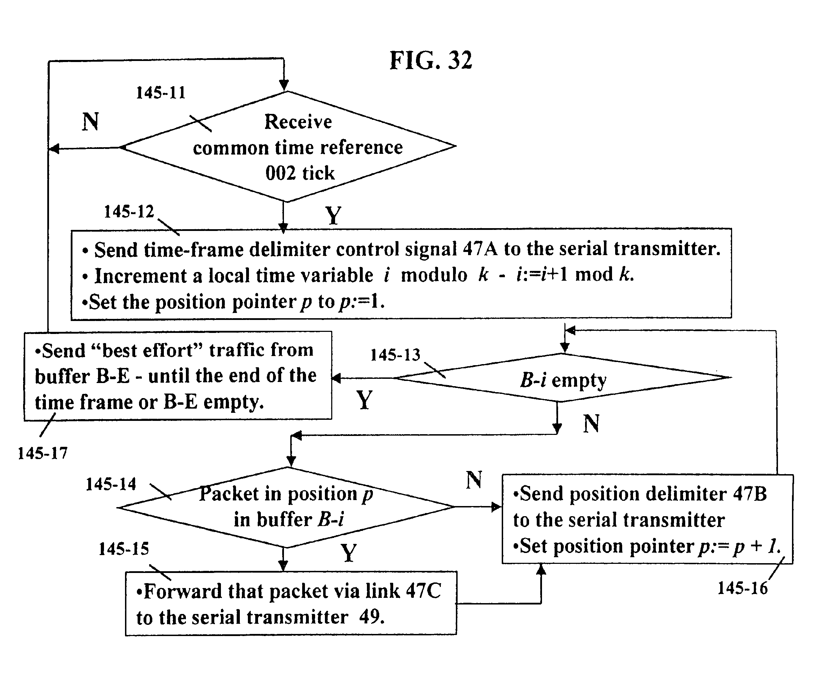

FIG. 32 depicts the select buffer controller **45D** operation, which is responsive to the common time reference (CTR) tick **002,** as specified in **145-11** (FIG. 32). Consequently, the select buffer controller increments the transmit buffer index *i* **145-12** (i.e., *i:*=*i*+*1 mod k',* where *k*' is the number of buffers for scheduled traffic), sends a time frame delimiter TFD **47A** to the serial transmitter **145-12,** and reset the position pointer to one, p:=1 **145-12.** Then while the transmit buffer B- *i* is not empty **145-13,** it will send a data packets from transmit buffer B- *i*, as specified in **145-14, 145-15** and **145-16,** else if the transmit buffer B- *i* is empty, it will send "best effort" data packets from the "best effort" buffer **B-be,** as specified in **145-17,** until the end of the time frame (the next CTR **002** tick) or until buffer **B-E** becomes empty.

When the transmit buffer **B-** *i* is not empty **145-13,** the select buffer controller sends data packets from all of the non-empty predefined positions in that buffer, as specified in **145-14.** After sending a data packet or if position p in buffer B- *i* is empty **145-15,** the select buffer controller sends a position delimiter (PD) **47B** to the serial transmitter and increments the position pointer p:=p+1, as specified in **145-16.**

### 3 Traffic integration

### 3.1 The integrated input port

The input port **30,** shown in FIG. 12, has three parts: serial receiver **31,** routing controller **35** and separate queues to the output ports **36.** The serial receiver **31** transfers to the routing controller 35 the data packets and the time frame delimiters.

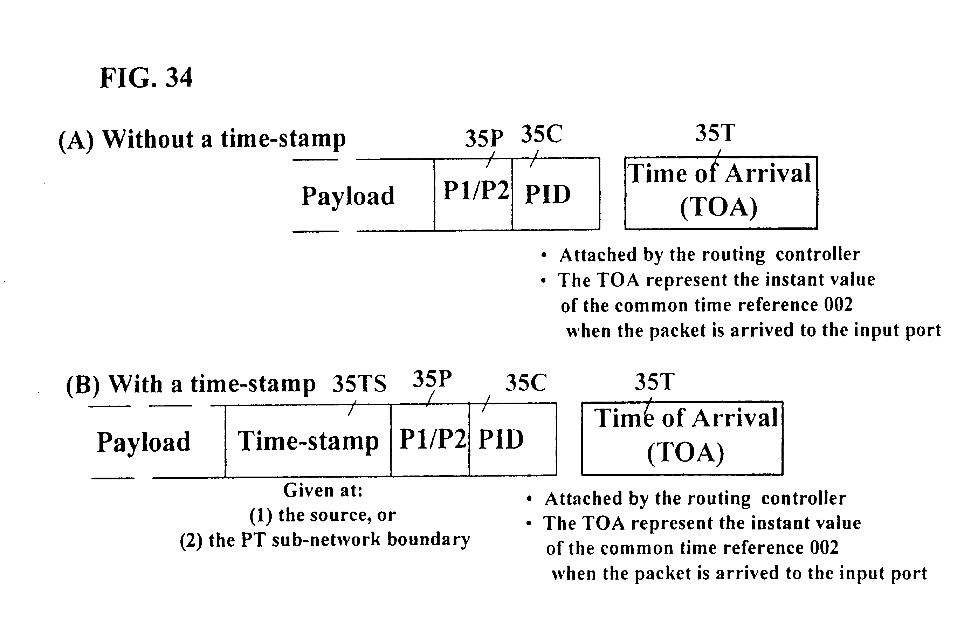

The routing controller is constructed of a central processing unit (CPU), a random access memory (RAM) for storing the data packet, read only memory (ROM) for storing the routing controller processing program, and routing table is used for determining the output port that the incoming data packet should be switched to. The incoming data packet header includes a virtual pipe identification - PID **35C** in FIG. 34, that is used to lookup in the routing table **35D** the address **35E** of the queue the incoming data packet should be transferred into its queue **36.** Before the packet is transferred into its queue **36** the time of arrival (ToA) **35T** in FIG. 34 is attached to the packet header. The ToA **35T** will be used by the scheduling controller **45** in FIG. 16 in the computation of the forwarding time out of the output port.

The data packet can have various formats, such as, Internet protocol version 4 (IPv4), Internet protocol version 6 (IPv6), asynchronous transfer mode (ATM) cells. The data packets PID can be determined by one of the following: an Internet protocol (IP) address, an asynchronous transfer mode (ATM) a virtual circuit identifier, and a virtual path identifier (VCI/VPI), Internet protocol version 6 (IPv6) addresses, Internet MPLS (multi protocol label swapping or tag switching) labels, and IEEE 802 MAC (media access control) address.

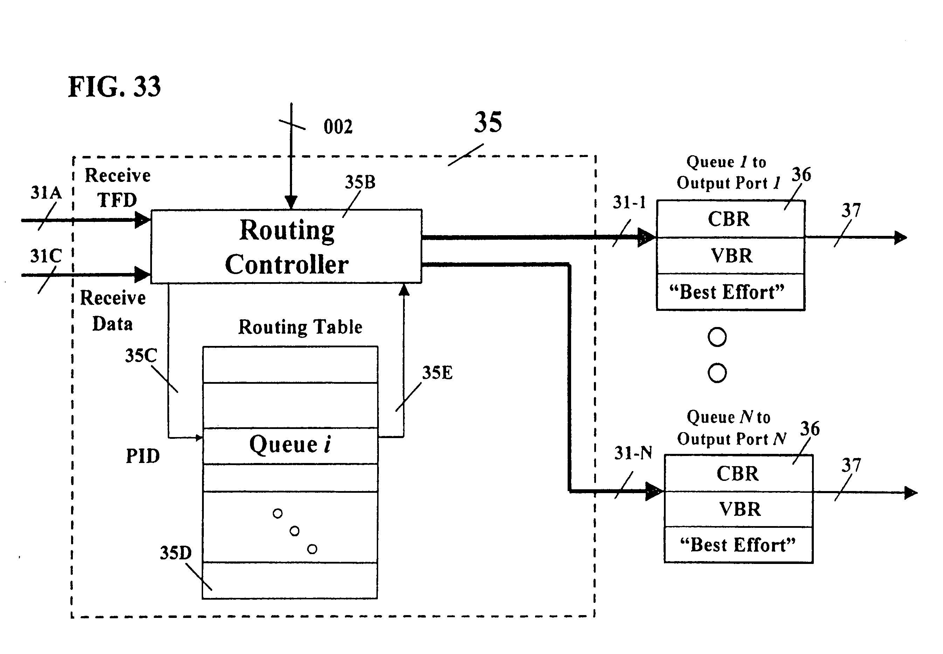

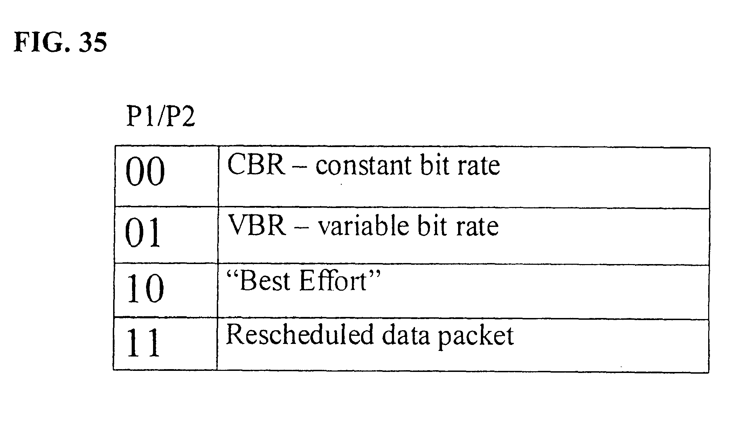

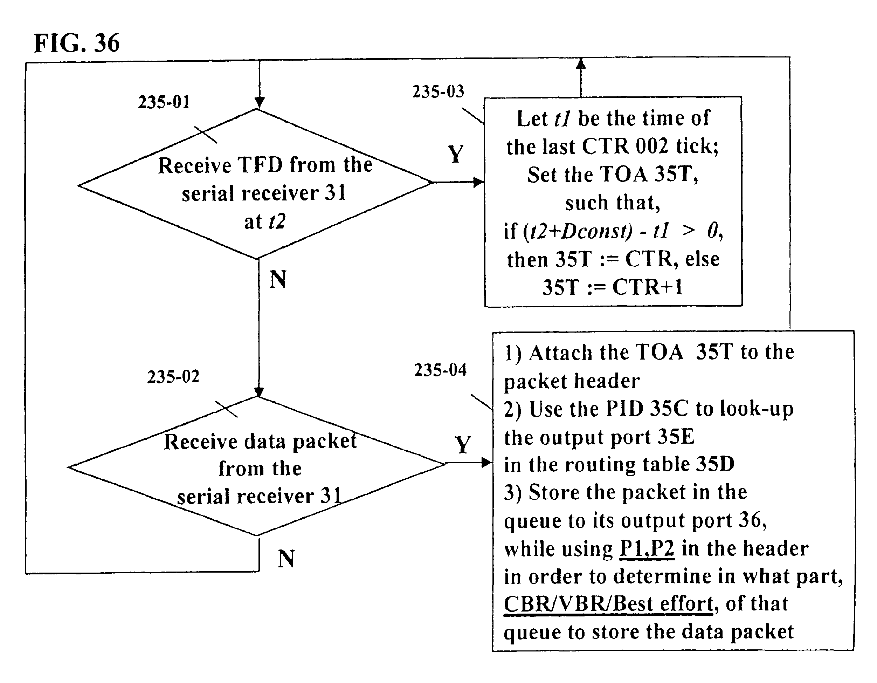

FIG. 35 is a table for defining two bits, P1 and P2, in the packet headers in FIG. 34. The two bits classify three types of data packets: P1/P2 are "00" constant bit rate (CBR) data traffic; P1, P2 are 01 variable bit rate (VBR) data traffic; and P1, P2 are "10" "best effort" data traffic. The above classification is used by the program executed by the routing controller **35B,** as shown in FIG. 36, in order to determine into which of the three parts of the queue to the output port **36,** shown in FIG. 33, the data packet should be switched into.

FIG. 36 is a detailed description of the program executed by the routing controller **35B.** The program is responsive to two basic events from the serial receiver **31:** receive time frame delimiter TFD **235-01,** and receive data packet **235-02.** After receiving a TFD the routing controller computes the time of arrival (ToA) **35T** value **235-03** in FIG. 34, that is attached to the incoming data packets. For this computation it uses a constant, Dconst, which is the time difference between the common time reference (CTR) **002** tick and the reception of the TFD at time *t2* (note that the TFD was generated on an adjacent switch by the CTR **002** on that node). This time difference is caused by the fact that the delay from the serial transmitter **49** to the serial receiver **31** is not an integer number of time frames. When data packet is received **235-02** the routing controller **35B** executes three operations **235-04** in FIG. 36: attach the ToA, lookup the address of the queue **36** using the PID, and storing the data packet in the queue **36** to the output port 37, while using P1/P2 in the header, in FIG. 34, in order to determine in what part, CBRNBR/Best effort, of that queue to store the incoming data packet.

### 3.2 Integrated scheduling controller in the output port

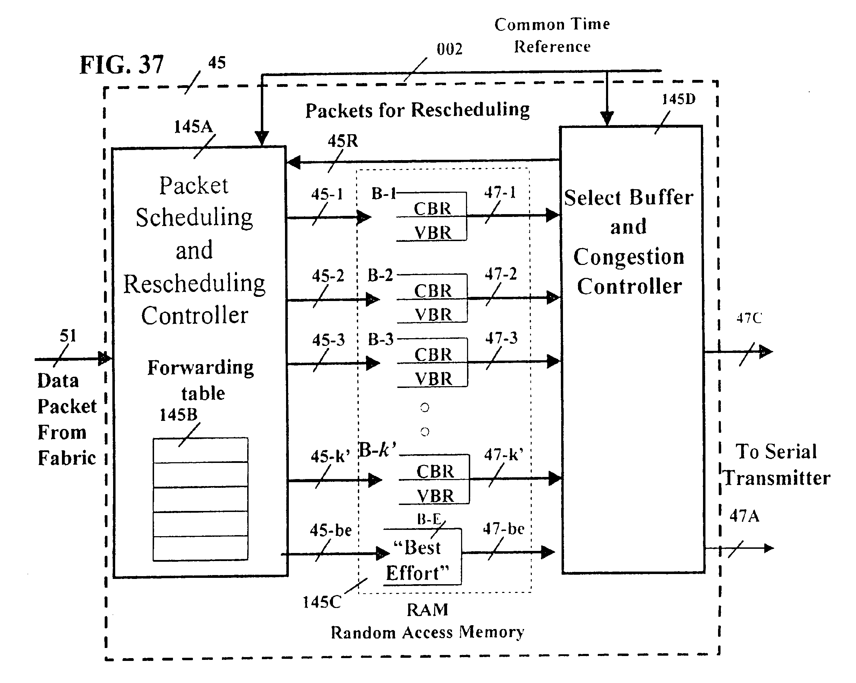

A more general scheduling controller **45** operation is described in FIGS. 37-39, which includes a scheduling and rescheduling controller **145A,** a transmit buffer **145C,** and a select buffer and congestion controller **145D,** as shown in FIG. 37. The scheduling and rescheduling controller **145A** together with the select buffer controller **145D** perform the mapping of the data packet into the time frame. The mapping is done on the scheduling and rescheduling controller using the PID 35C and the data packet time of arrival (ToA) **35T** in order to determine the respective time frame in which the respective packet should be forwarded out of the output port. The details are presented below. Both controllers, **145A** and **145D,** are constructed of a central processing unit (CPU), a random access memory (RAM) for storing the data, and read only memory (ROM) for storing the controller processing program.

In the more general configuration, depicted in FIG. 37, data packets that arrive from the switching fabric **50** via link **51** in which their priority bits **35P** (P1/P2) are either "00" or "01" (i.e., reserved CBR traffic, or VBR traffic, respectively) will be switched by controller **145A** to one of the k transmit buffers in **145C:** B-1, B-2, ..., B-*k*. Each of the k buffers is designated to store packet that will be forwarded in each of the k time frames in every time cycle, that where defined in FIGS. 5 and 6. Another possible operation is to map the incoming packets separately to each of the time frames of a super-cycle. When a super-cycle mapping is implemented there are *k*l* transmit buffers in **145C:** B-1, B-2,..., B-*k***l*, i.e., *k* buffers to each of the *l* cycles of a super-cycle.

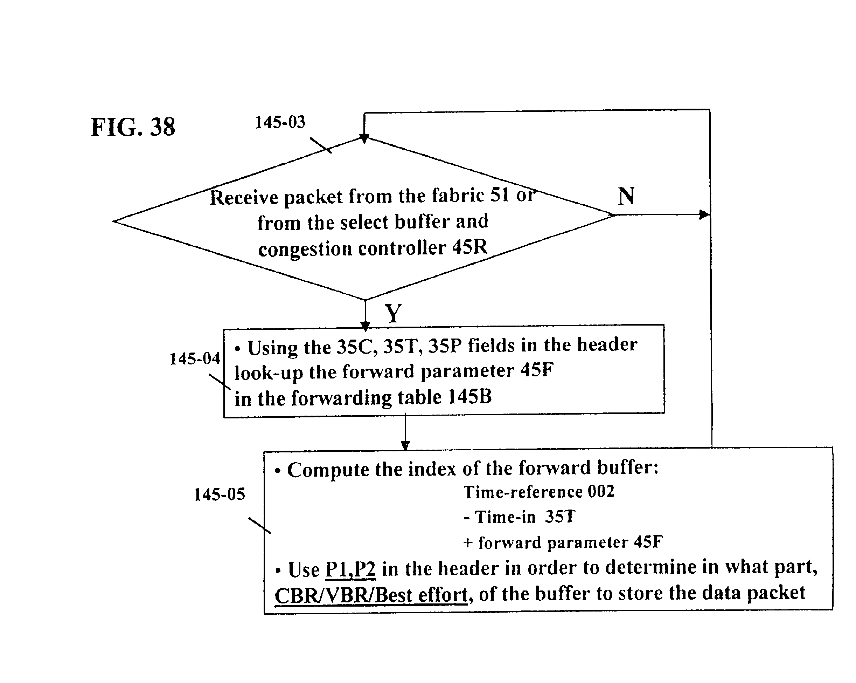

The actual program executed by the scheduling and rescheduling controller is described in FIG. 38. When a data packet is received from either the fabric via link 51 or from the select buffer and congestion controller 145D via link 45R, as specified in **145-03,** the **35C**, **35T** and **35P** in the data packet header are used to look-up the forward parameter **45F** in the forwarding table **145B,** as specified in **145-04.** Next, the index *i* of the transmit buffer, between B-1 and B-*k*, is computed in **145-05** by subtracting the time of arrival ToA **35T** from the common time reference CTR 002 and by adding the forward parameter 45F, and then switching the incoming data packet to transmit buffer B-*i*, as specified in **145-05.**

Incoming data packets in which their priority bits **35P,** P1/P2, are either "10" (i.e., non-reserved traffic or "best effort") or "11" (i.e., rescheduled packet) are switched by the scheduling and rescheduling controller to the transmit "best effort" buffer B-E via link 45-be.

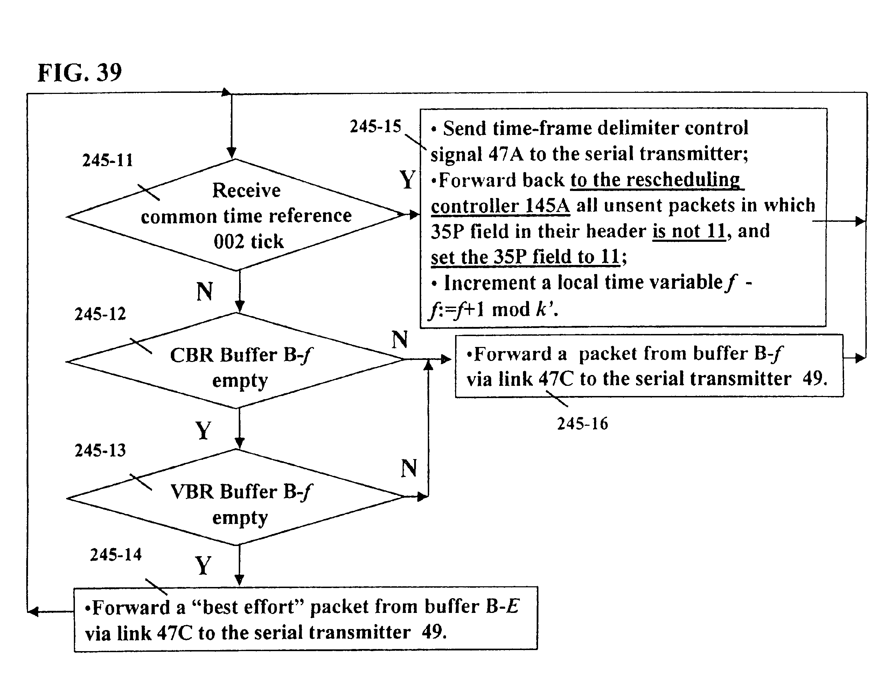

FIG. 39 depicts the operation of the select buffer and congestion controller 145D operation, which is responsive to the common time reference (CTR) tick 002. When CTR signal is received 245-11 the following operations are executed by controller 45D in 245-15:
1. Send time frame delimiter (TFD) control signal **47A** to the serial transmitter 49;
2. Forward back to controller **145A** all unsent packets in transmit buffer **B-f** in which the **35P** field in their header is not "11", i.e., it is not a rescheduled packet and set the 35P field to "11", i.e., a rescheduled packet (note that a packet can be rescheduled only once);
3. If the number of data packets need to be rescheduled exceeds some predefined number, say n, then select at random n data packets and sends them back to the packet scheduling and rescheduling controller 145A via link 45R and discard the remainder of the packets.
4. Increment the transmit buffer index f (i.e., *f: =f*+*1 mod k',* where *k*' is the number of buffers for scheduled traffic). If the CBR part of buffer B-f is not empty 245-12, then it will send a data packet from transmit buffer B-f first CBR packets and then VBR packets, as specified in **245-16** and **245-13**, else it will send a "best effort" data packet from the "best effort" buffer B-E as specified in **245-14.**

### 4 Operation with links with variable delay

The present invention further relates to a system and method for transmitting and forwarding packets over a packet switching network in which some of its communication links have dynamically varying delays. Such variations in the link delay can be the consequence of having mobile switching node (e.g., satellites).

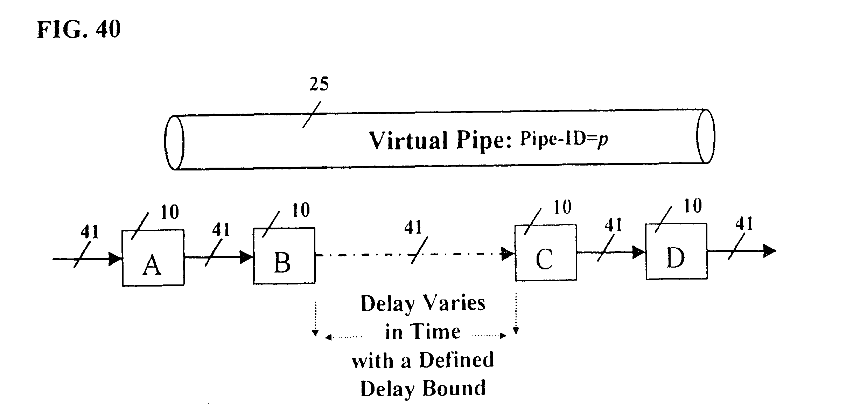

FIG. 40 illustrates a virtual pipe 25 from the output port 40 of switch A, through switches B and C. This virtual pipe ends at the output port 40 of node D. The virtual pipe 25 transfers data packets from at least one source to at least one destination. In FIG. 40 the communication link that connects switch B to switch C may have a delay that varies in time with a defined delay bound. Such communication links are found in various network architectures, such as, mobile wireless networks, satellite networks, and self-healing SONET rings. In satellite networks the delay between a satellite in space and a base-station on earth changes in the following manner. First the delay decreases, as the satellite appears above the horizon and is moving towards the base-station, and then the delay increases as the satellite is moving away from the base-station until it disappears below the horizon.

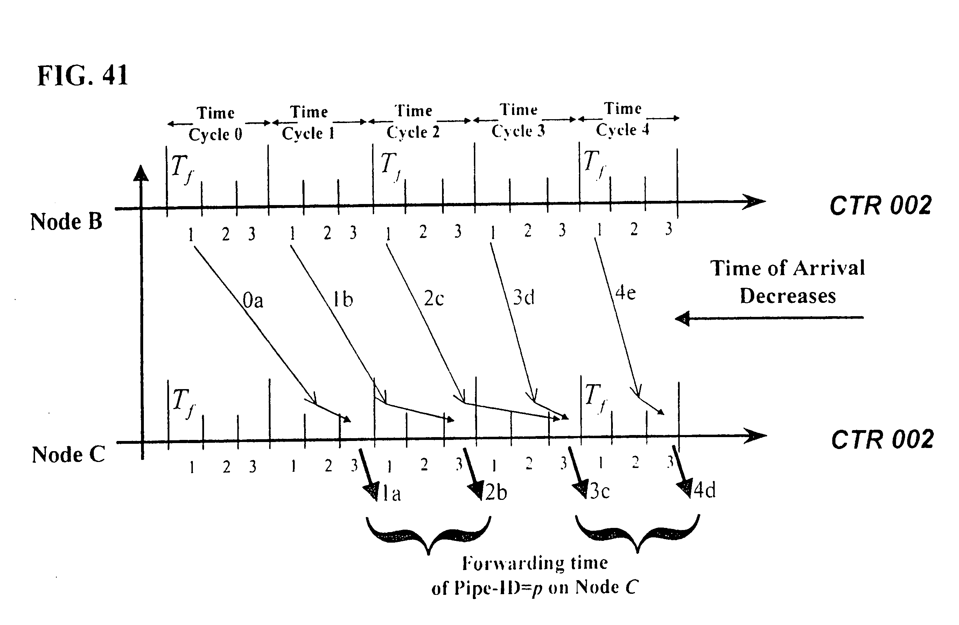

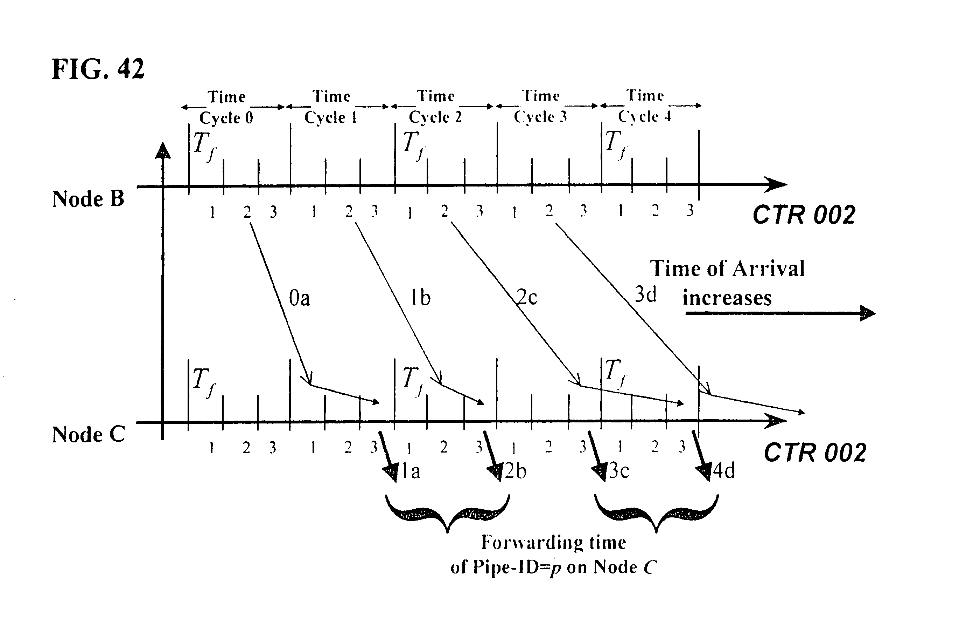

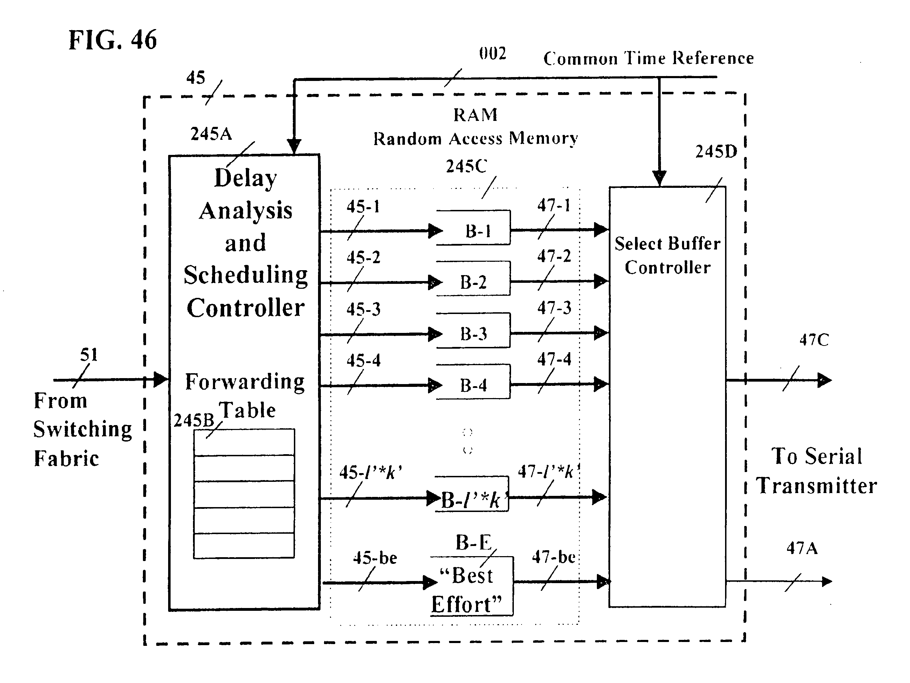

FIGS. 41 and 42 describe the delay changes on the link between Nodes **B** and **C** as it is projected on a common time reference (CTR), which is discussed in details in FIGS. 4, 5, and 6 above. FIG. 41 describes a communication link between Nodes **B** and C, where the time of arrival to Node C decreases, i.e., the delay between Nodes **B** and **C** gets shorter. In FIG. 41, the delay of data packet **0a** is longer than data packet **1b,** the delay of data packet **1b** is longer than data packet 2c, and so on. FIG. 42 describes a communication link between Nodes B and C, where the time of arrival to Node C increases, i.e., the delay between Nodes B and C gets longer. In FIG. 42, the delay of data packet 0a is shorter than data packet **1b,** the delay of data packet **1b** is shorter than data packet **2c,** and so on. A complete description of the above resynchronization operation is part of the output operation described below in FIGS. 46, 47, 48, 50, and 51.

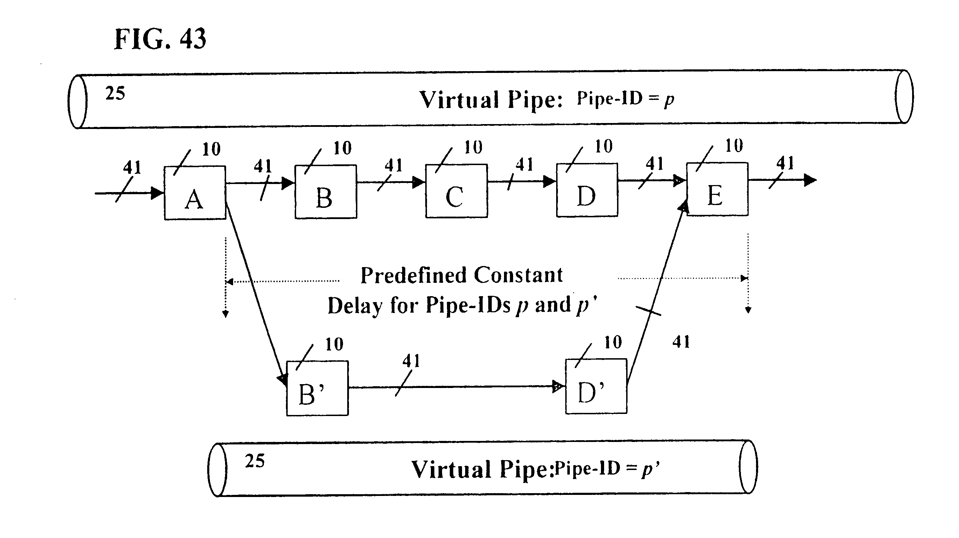

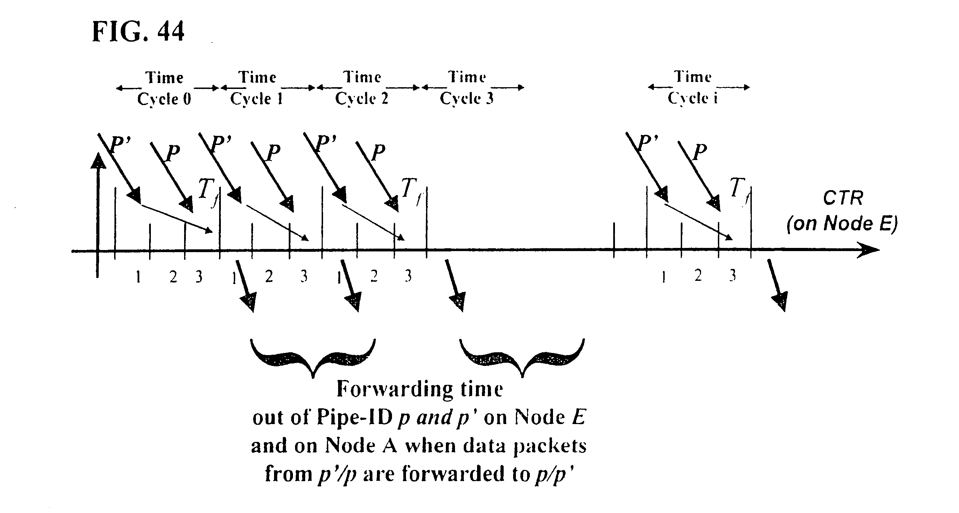

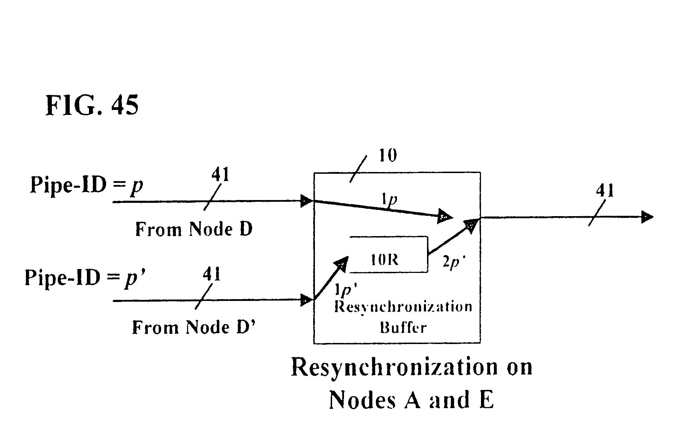

FIGS. 43, 44, and 45 describe a delay variations that are due to the forwarding of successive data packets on alternate paths or routes in the network. FIG. 43 shows two virtual pipes (defined below), p (from Node **A** to **B** to C to **D** and to **E)** and p' (from **Node** A to **B'** to *D'* and to **E),** with the requirement that data packets will be forwarded out of Node E at the same predefined time regardless which virtual pipe, *p* or *p',* they were forwarded on. FIG. 44 shows the scenario in which the data packets on virtual pipe p' arrive to Node E before the time they would have arrived to Node **E** on virtual pipe p. Consequently, the data packets on path p' should be delayed, as shown in FIG. 44 and forwarded, in time, as if they have arrived on virtual pipe p. FIG. 45 shows how such resynchronization can be achieved by using a resynchronization buffer on node **E.** In FIG. 45, a data packet from virtual pipe *p'*, 1 *p',* enters a resynchronization buffer **10R,** such that, when this data packet exits this buffer, 2 *p',* it will be forwarded from the output of Node **E** as if this packet was forwarded on virtual pipe p. A complete description of the above resynchronization operation is part of the output port operation is described below in FIGS. 16, 46, 47, 48, 49, 50, and 51.

The output port **40** is illustrated in FIG. 16, comprised of a scheduling controller with a transmit buffer **45,** and serial transmitter **49** (as previously described herein). The scheduling controller **45** performs a mapping of each of the data packets between the associated respective time of arrival (ToA) and an associated forwarding time out of the output port via the serial transmitter **49.** The forwarding time is determined relative to the common time reference (CTR) **002.**

The scheduling controller and transmit buffer 45 has various modes of operation which are described in FIGS. 46, 47, 48, 49, 50, and 51. The different operation modes correspond to some of the possible variations in the communications link delay as was discussed in FIGS. 40-45. The scheduling controller and transmit buffer 45 in FIG. 46 includes three parts:
1. a delay analysis and scheduling controller **245A** which further comprises a forwarding table **245B,**
2. a transmit buffer **245C** which is typically realized as a random access memory (RAM), and
3. a select buffer controller **245D** which forward data packets to the serial transmitter.

The delay analysis and scheduling controller **245A**, together with the select buffer controller **245D,** perform the mapping, using the PID **35C**, the time-stamp **35TS** and the data packet time of arrival (ToA) **35T** in order to determine the respective time frame a respective packet should be forwarded out of the output port. Both controllers **245A** and **245D** are constructed of a central processing unit (CPU), a random access memory (RAM) for storing the data, and read only memory (ROM) for storing the controller processing program.

Data packets arrive from the switching fabric **50** via link **51.** Data packets which have the priority bit **35P** asserted (i.e., reserved traffic) are switched by the delay analysis and scheduling controller **245A** to one of the *l*k* transmit buffers **45C** (B-1, B-2..., B-*l*k*). Each of the *l*k* buffers is designated to store packets that will be forwarded in each of the *l*k* time frames in every super cycle, as shown in FIG. 5 and FIG. 6. Having *l*k* transmit buffers enables the delay analysis and scheduling controller **245A** to schedule data packets in a wide range of delay variations. When the super cycle is one second the scheduling capability of the delay analysis and scheduling controller **245A** is up to one second. However, this is an extreme case and in most practical scenarios the scheduling requirements, even with delay varying links, is only a small number of time frames.

The transmit buffer **245C** includes an additional buffer **B-E** for "best effort" data packets. The priority bit **35P** in the "best effort" data packets is not asserted and this how the delay analysis and scheduling controller determines that such data packets should be stored in the "best effort" buffer. The "best effort" data packets are forwarded to the serial transmitter **49** whenever there are no more scheduled data packets (priority bit **35P** asserted).

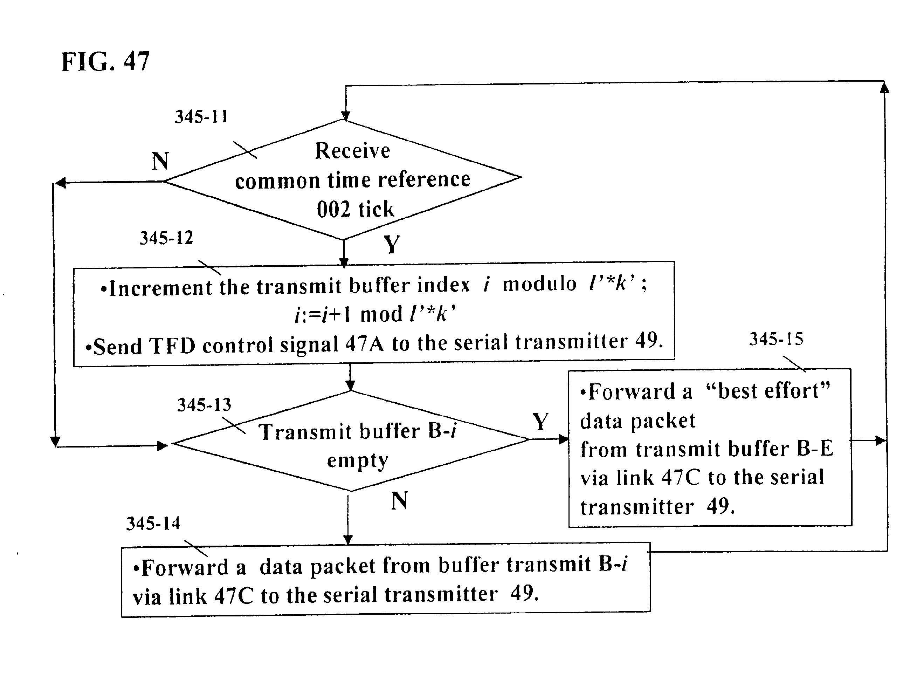

FIG. 47 illustrates the flow chart for the select buffer controller **45D** operation. The controller **45D** is responsive to the common time reference (CTR) tick **002** at step **345-11,** and then, at step **345-12,** it increments the transmit buffer index i (i.e., i: =i+*1 mod l'*k',* where *l'*k'* is the number of buffers for scheduled traffic), and sends a time frame delimiter TFD to the serial transmitter **49.** Then, if the transmit buffer B-*i* is not empty, at step **345-13***,* it will send a data packet from transmit buffer B-*i*, as specified in at step **345-14,** else it will send a "best effort" data packet from the "best effort" buffer B-E, as specified at step **345-15.**

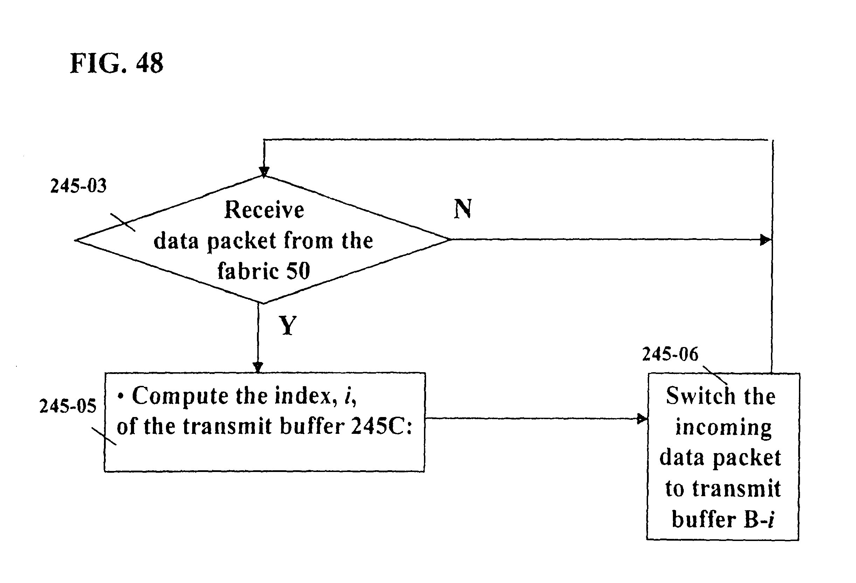

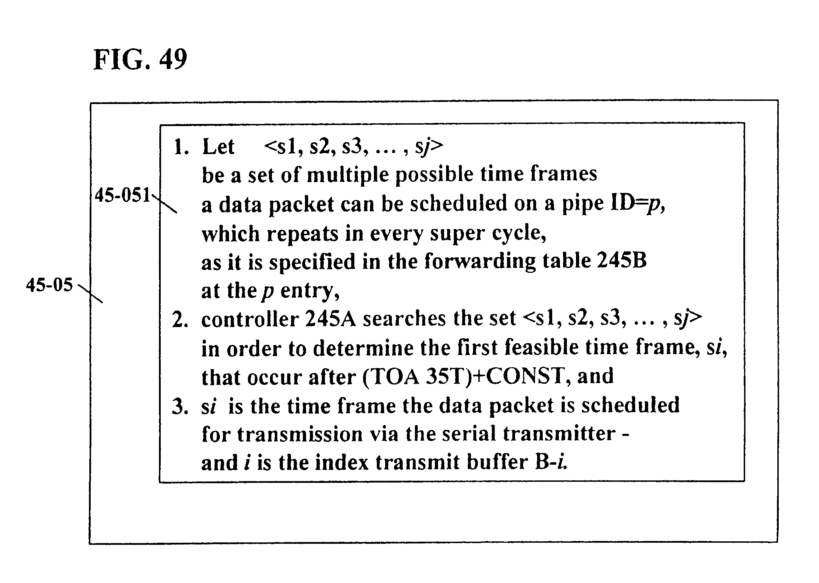

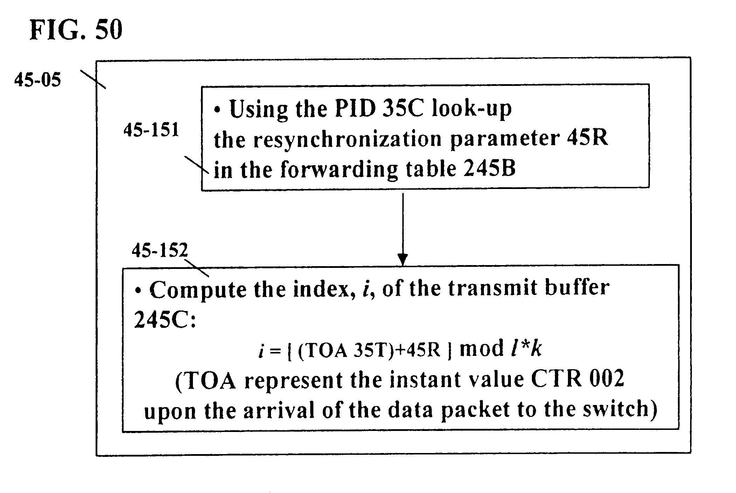

The flow chart for the program executed by the delay analysis and scheduling controller is illustrated in FIG. 48. The main task of the program is to compute the index, i, of the transmit buffer, B-*i*, between B-1 and B-*l*'**k*', is computed in step **245-05.** There are several possible methods to perform the computation in step **245-05,** which depends on the type of delay variations that can occur on the communication links. In FIGS. 49 and 50 three possible computation methods are described:

I. FIG. 49 - the case of continuous delay variations as described in FIGS. 40-42, as specified in **45-051:**
1. Let <s1, s2, s3, ... , s*j*> be the set of time frames of a PID=*p*, which repeats in every super cycle, as it is specified in the forwarding table **245B** at the *p* entry,
2. Controller **245A** searches the set <s1, s2, s3, ... , s*j*> in order to determine the first feasible time frame, *si*, that occur after (ToA **35T)**+CONST (where CONST is a constant bound on the delay across the switching fabric, and
3. *si* is the time frame the data packet is scheduled for transmission via the serial transmitter - where i is the index transmit buffer B-*i*.

The set <s1, s2, s3, ... , s*j*> constitute plurality of time frame in which a data packet can be scheduled for transmission out of the output port of a switch.

II. FIG. 50 - the case of multiple path with resynchronization as described in FIGS. 43, 44, and 45: When the data packet is received from the fabric at step **245-03**, the PID **35C** in the data packet header is used to look-up the resynchronization parameter **45R** in the forwarding table (**245B** of FIG. 46, as specified in step **45-151**, and then in step **45-152:** Compute the index, i, of the transmit buffer **245C:** i = ((ToA **35T)+45R]** mod *l'*k'* (where *l*'**k*' is the number of buffers for scheduled traffic). In the case of two virtual pipes: *p* and *p*', where one is an alternative to the other, as shown in FIGS. 43, 44, and 45, the above resynchronization is needed on both ends. More specifically resynchronization is needed on both Node A and Node **E,** as shown in FIGS. 43, 44, and 45.

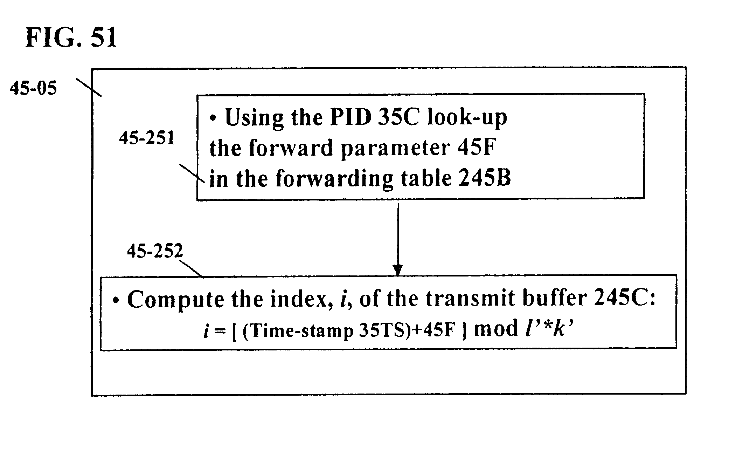

III. FIG. 51 - the case when using a time-stamp in the packet header, FIGS. 15 and 22: When the data packet is received from the fabric at step **45-03,** the PID 35C in the data packet header is used to look-up the forward parameter **45F** in the forwarding table **(245B** of FIG. 46), as specified in step **45-251,** and then in step **45-252:** Compute the index, i, of the transmit buffer **245C:** i = [(Time-stamp **35TS)+45F]** mod *l*k'* (where *l'*k'* is number of buffers for scheduled traffic).

### 5 Monitoring, policing and billing

The present invention further relates to a system and method for monitoring, policing and billing of the transmission and forwarding of data packets over a packet switching network. The switches of the network maintain a common time reference, which is obtained either from an external source (such as GPS - Global Positioning System) or is generated and distributed internally.

The output port **40** is illustrated in FIG. 16, comprised of a scheduling controller with a transmit buffer **45,** serial transmitter **49** (as previously described herein), and the monitoring and policing controllers. The scheduling controller **45** performs a mapping of each of the data packets between the associated respective time of arrival (ToA) and an associated forwarding time out of the output port via the serial transmitter **49.** The forwarding time is determined relative to the common time reference (CTR) **002.**

A general scheduling controller **45** operation was previously described in FIGS. 19-21, which includes a transmit buffer **45C** and a select buffer controller **45D**. The data packet scheduling controller **45A,** together with the select buffer controller **45D,** perform the mapping, using the PID **35C** and the data packet time of arrival (ToA) **35T** in order to determine the respective time frame a respective packet should be forwarded out of the output port. Both controllers **45A** and **45D** are constructed of a central processing unit (CPU), a random access memory (RAM) for storing the data, and read only memory (ROM) for storing the controller processing program.

### 5.1 The monitoring and policing controllers

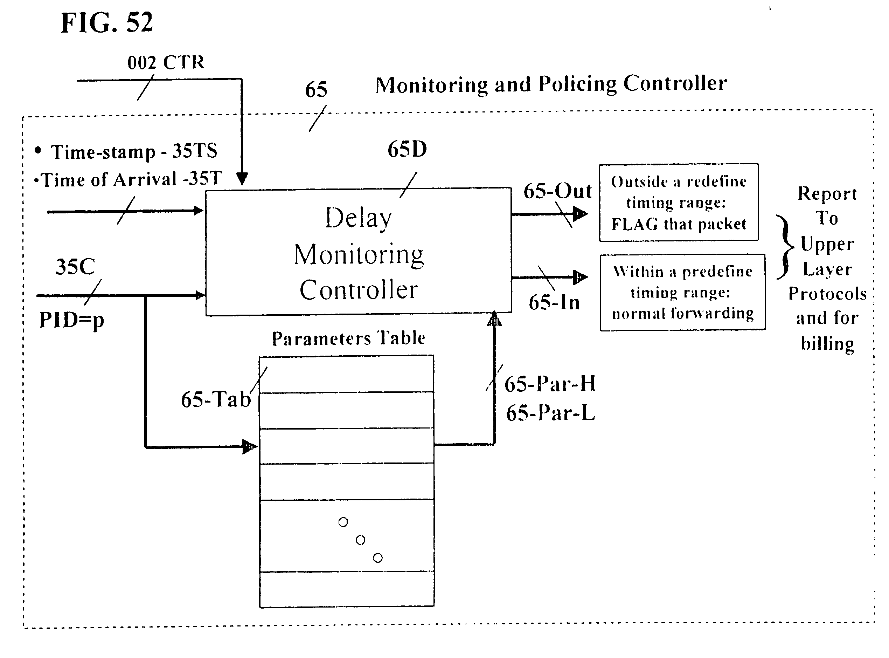

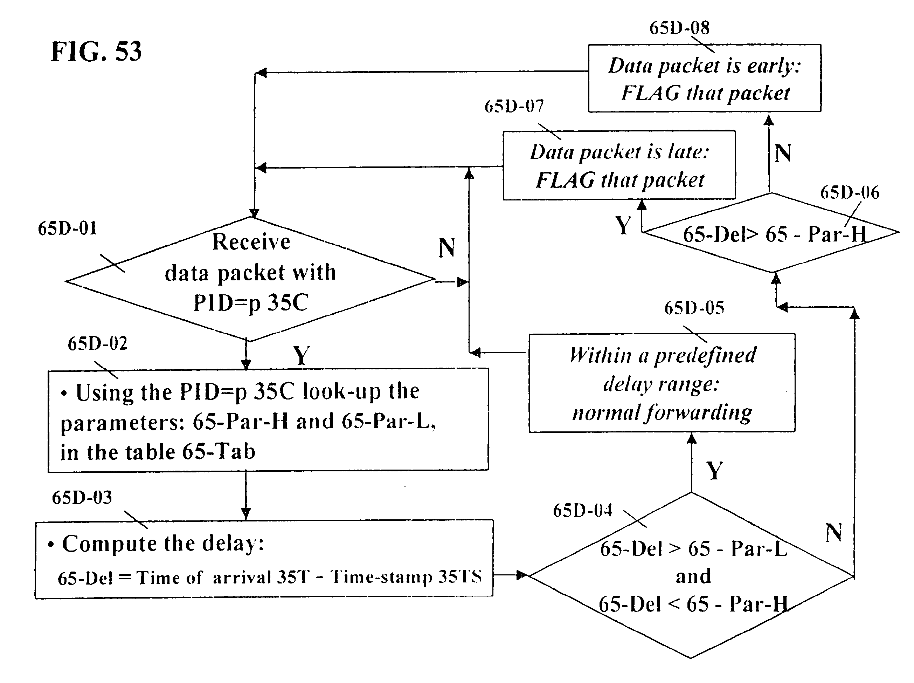

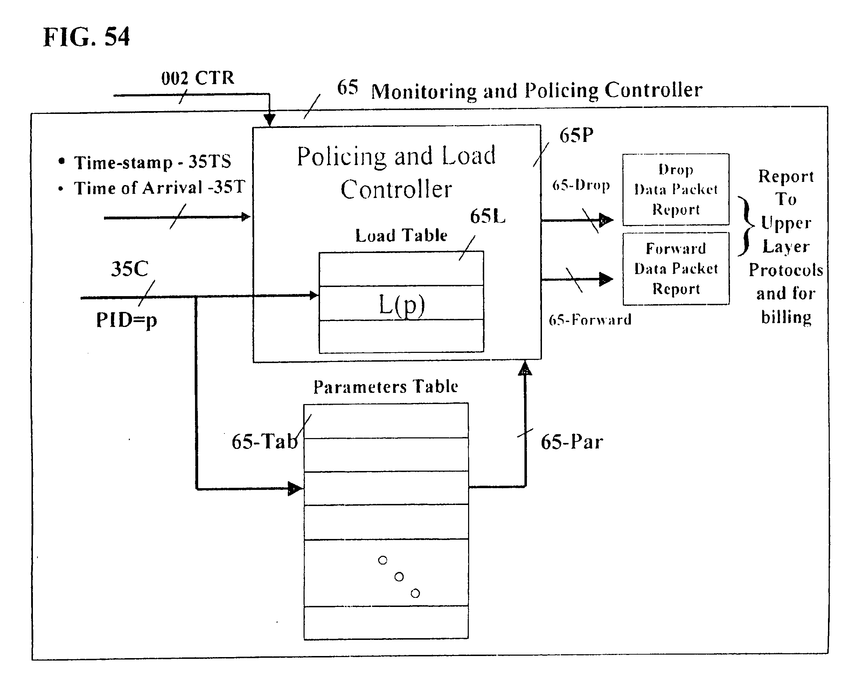

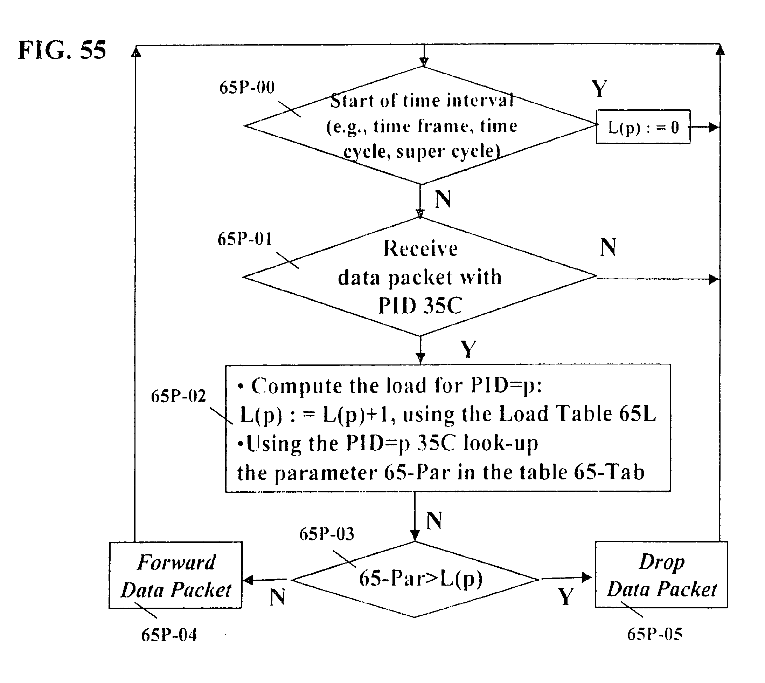

The monitoring and policing controllers **65** (FIGS. 52-55) are part of both the input port in FIG. 12 and the output port in FIG. 16. Monitoring and policing controllers 65 are of two basic types:
1. The delay monitoring controller **65D -** for ensuring the correct timing behavior by PID=*p* (FIGS. 52, 53).
2. The policing and load controller **65P -** for ensuring the correct capacity usage by PID=*p* (FIGS. 54, 55).

Both controllers **65D** and **65P** are constructed of a central processing unit (CPU), a random access memory (RAM) for storing the data, and read only memory (ROM) for storing the controller processing program.

### 5.2 The delay monitoring controller 65D

FIGS. 52 and 53 describe the operation of a delay monitoring controller **65D.** This controller checks data packets in which their reserved priority bit, **35P** in their headers, is asserted for three cases:
1. Data packet is within two predefined delay parameters range (see box **65D-05):** between the two delay parameters: **65-par-L** and **65-par-H,** which were found PID=*p* **35C** entry in the parameters table **65-Tab** (see box **65D-02).** More specifically, the delay monitoring controller 65D computes the actual delay the data packet already experienced: **65-Del** = Time of arrival 35T - Time-stamp **35TS** (see box **65D-03),** then comparing that it is in the predefined delay range: **(65-Del** > **65 - Par-L** and **65-Del** < **65 - Par-H)** (see box **65D-04**).
2. Data packet is late (see box **65D-07):** its delay is greater than **65-par-H,** i.e., **65-Del >65 - Par-H** (see box **65D-06**), and
3. Data packet is early (see box **65D-08**): its delay is smaller than **65-par-L**, i.e., **65-Del < 65 - Par-L.**

The three cases have importance on ensuring proper network operations and the adherence to the user quality of service (QoS) requirements. Furthermore, the information collected by the delay monitoring controller is reported to upper layer protocols, which are outside the scope of this invention.

### 5.3 The policing and load controller 65P

FIGS. 54 and 55 describe the operation of an alternate embodiment of policing and load controller **65P** that checks and ensures that a data packets in which its reserved priority bit **35P** (in its header) is asserted will not exceed the predefined load of its virtual pipe PID=p. This controller operation can be used for both:
1. Policing - detecting PID=p that exceeds its reserved capacity, and
2. Billing - recording the actual capacity usage of PID=p.

The two cases have importance on ensuring proper network operations and the adherence to the user quality of service (QoS) requirements.

When a data packet is received (see box **65P-01)** the policing an load controller **65P** first computes the current load, L(p) for PID=p (see box **65P-02)** by L(p): = L(p)+1 (see box **65P-02)** using the load table **65L** that stores previous values of L(p). The load can be computed in various ways: (i) per time frame of PID=p, (ii) per time cycle of PID=p, or (iii) per super cycle of PID=p.

Next the policing and load controller **65P** using the PID=p **35C** looks-up the parameter **65-Par** in the table **65-Tab.** Then if **65-Par>L(p)** (see box **65P-03)** the data packet is dropped (see box **65P-05),** otherwise the data packet is forwarded (see box **65P-04).**

In the above two cases, the load L(p) information on PID=p is recorded and reported to upper layer protocols for billing the usage for the usage of PID=p. Furthermore, the policing and load information is used also for ensuring proper network operations and the adherence to the user quality of service (QoS) requirements. The information collected by the policing and load controller is reported to upper layer protocols, which are outside the scope of this invention.

### 6 Interconnecting a synchronous with an asynchronous switching networks

The present invention further relates to a system and method for transmitting and forwarding packets over a heterogeneous packet switching network in which some of its some of its switches are synchronous and some switches are asynchronous. The invention specifically ensures that the synchronous switches will forward data packets in predefined time intervals although are arriving to the synchronous switches with relatively large, but bounded, delay uncertainty. Such delay uncertainty is the consequence of having asynchronous switches on the route of a data packet before it reaches the synchronous switch.

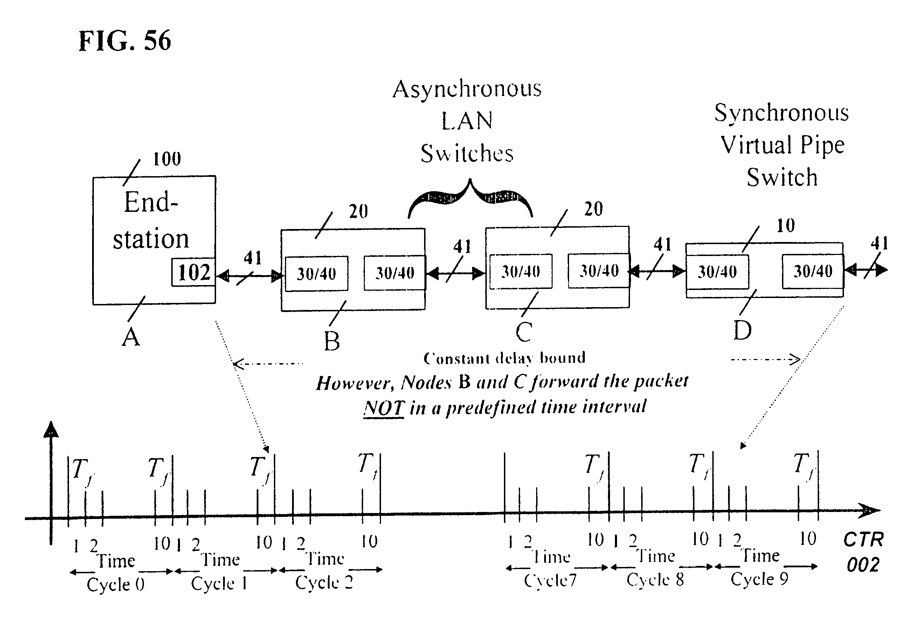

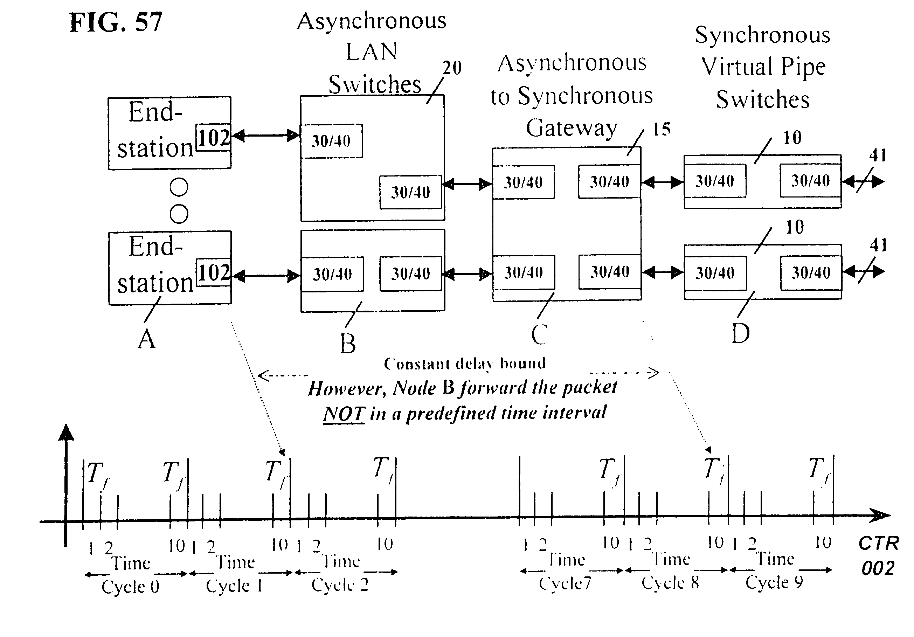

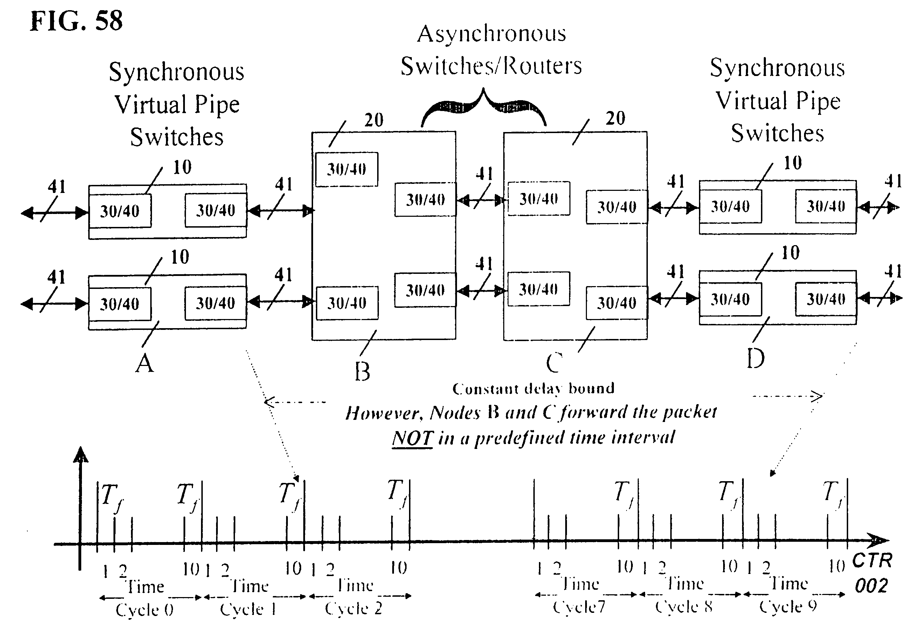

A system is provided for managing in a timely manner transfer of data packets across asynchronous switches with three configurations:
1. From an end-station **100** across asynchronous LAN switches **20** to a synchronous virtual pipe switch **10,** as shown in FIG. 56. In this embodiment, an end-station **100** sends data packets from its network interface **102.** The data packet is switched through one or more asynchronous switches **20** (e.g., Nodes **B** and **C** in FIG. 56) until it reaches the synchronous virtual pipe switch **10.** In this configuration, the synchronous switch **10** will resynchronized the incoming data packet as it is explained below.
2. From an end-station **100** network interface **102** across asynchronous LAN switches **20** to an asynchronous to synchronous gateway **15,** which converts the asynchronous data packets stream to a synchronous stream and then forward the data packets to a synchronous virtual pipe switch, as shown in FIG. 57.
3. From a first synchronous virtual pipe switch 10 across asynchronous switches or routers **20** to a second synchronous virtual pipe switch **10,** as shown in FIG. 58. In this configuration, the incoming data packet to the second synchronous virtual pipe switch 10 will be resynchronized as it is explained below.

### 6.1 Resynchronization by the router controller at the input port

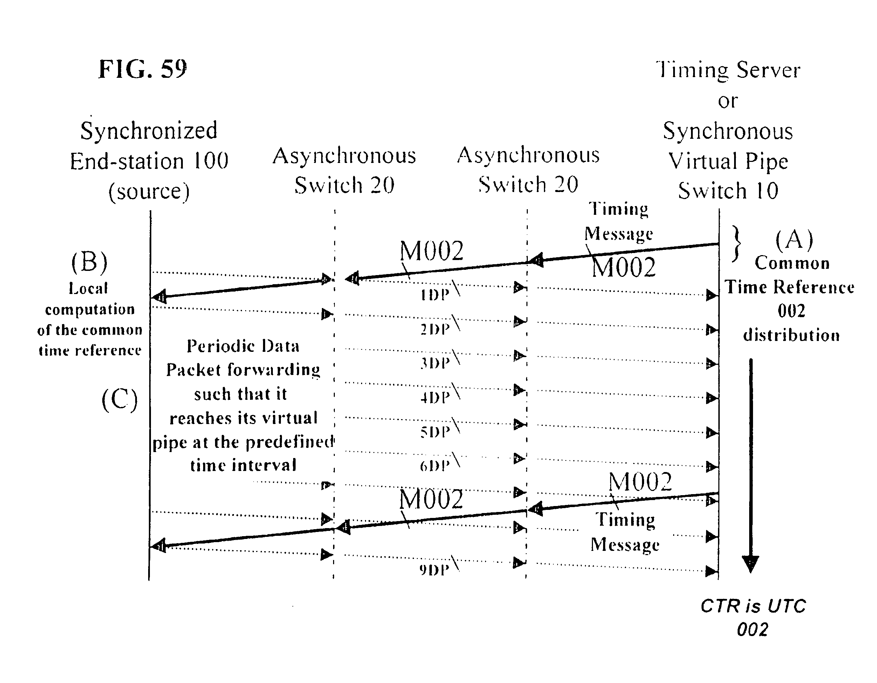

A data packet that has been forwarded by one or asynchronous switches **20,** i.e., switches without common time references can be resynchronized to its original schedule at either the input port or the output port. FIGS. 59-61 describe the resynchronization operation at the input port of either a synchronous virtual pipe switch **10** or a gateway **15.**

In order to facilitates the resynchronization of data packets sent by the end-station **100,** the synchronous virtual pipe switch **10** periodically sends timing messages **M002** to the end-station **100,** as shown in FIG. 59. The timing messages **M002** represent the value of the common time reference (CTR) **002** as it is received by the synchronous switch **10.**

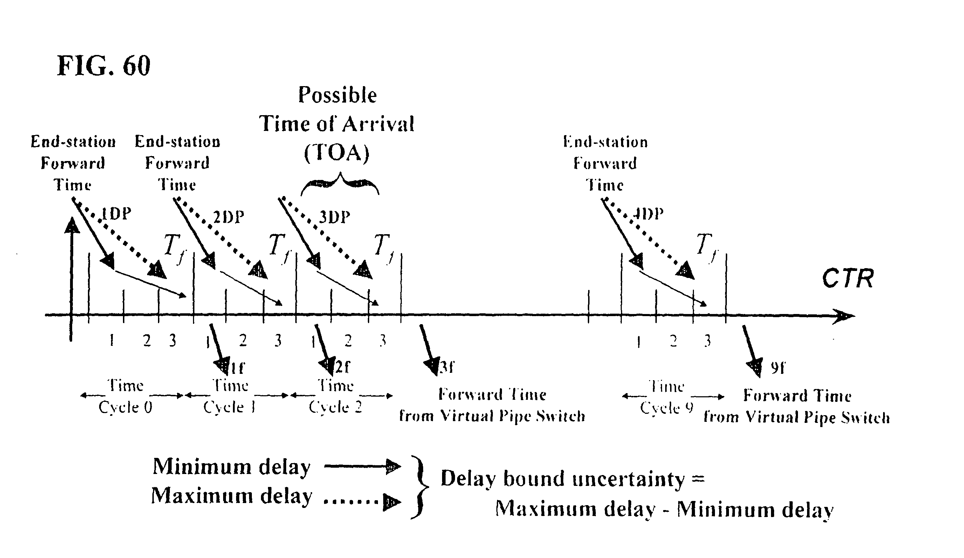

The network interface **102** at the end-station **100** incorporates the timing information obtained from the timing message **M002** into the time-stamp field **35TS** (FIG. 15) in the header of the data packets, **1DP, 2DP, 3DP, ... , 9DP** in FIG. 59, it sends across the asynchronous switches 20 to the synchronous virtual pipe switch **10.** FIG. 60 show the possible time of arrival of data packets, **1DP, 2DP, 3DP, ... , 9DP**, to the input port **35.** A data packet can experience delay that is ranging between minimum delay and maximum delay, which constitute the delay bound uncertainty to be Maximum delay - Minimum delay, as shown in FIG. 60.

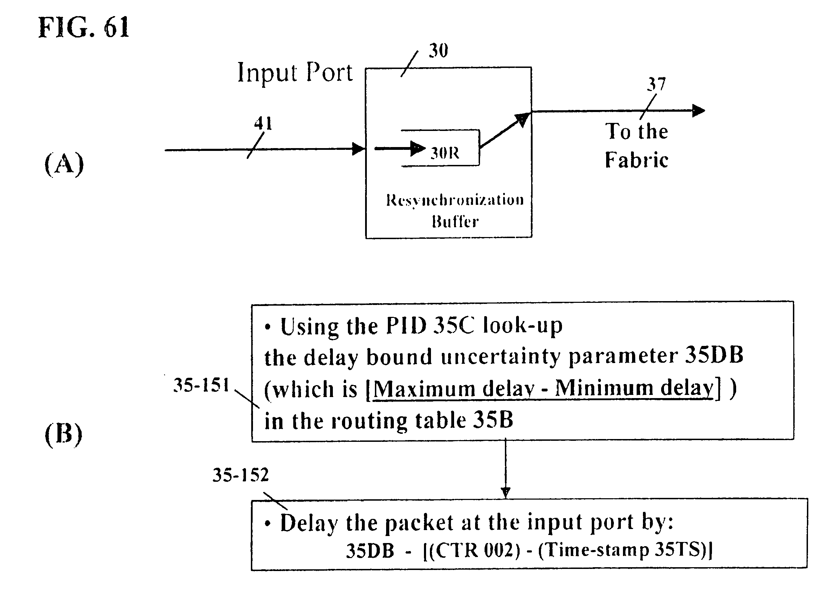

FIGS. 61 A and 61B show the resynchronization operation performed by the routing controller **35** at the input port **30** using a resynchronization buffer **30R,** which is executed in the following two steps:
1. Using the PID **35C** look-up the delay bound uncertainty parameter **35DB** (which is [Maximum delay - Minimum delay]) in the routing table 35B.
2. Delay the packet at the input port by: **35DB** - [(CTR **002**) - (Time-stamp **35TS**)].

### 6.2 The router controller operation with a gateway

When there is an asynchronous to synchronous gateway **15** before the input to virtual pipe switch the router controller operates as was previously specified herein in FIG. 14. In this case, the gateway receives the CTR **002** and also forward time frame delimiter (TFD) **47A** to the serial receiver, as it will be specified below. More specifically, its operation can be identical to the output operation which will be described below.

FIG. 14 illustrates the flow chart for the router controller **35** processing program executed by the routing controller **35B.** The program is responsive to two basic events from the serial receiver **31** of FIG. 14: the receive time frame delimiter TFD at step **35-01,** and the receive data packet at step **35-02.** After receiving a TFD, the routing controller 35 computes the time of arrival (ToA) **35T** value at step **35-03** that is attached to the incoming data packets. For this computation it uses a constant, **Dconst,** which is the time difference between the common time reference (CTR) **002** tick and the reception of the TFD at time t2 (generated on an adjacent switch by the CTR **002** on that node). This time difference is caused by the fact that the delay from the serial transmitter **49** to the serial receiver **31** is not an integer number of time frames. When the data packet is received at step **35-02,** the routing controller **35B** executes three operations as set forth in step **35-04:** attach the ToA, lookup the address of the queue **36** using the PID, and storing the data packet in that queue **36.**

### 6.3 The router controller operation without a gateway

When the virtual pipe switch **10** is connected directly to the asynchronous network the virtual pipe switch **10** cannot receive TFD, and therefore, the operation of the routing controller, as specified was previously specified herein in FIG. 14, should be changed in the following way. The operations in **35-01** and **35-03** are taken out and in part one of the operation specified in **35-04,** in FIG. 14, should clearly state that the time of arrival value attached to the packet header should be derived directly from the common time reference (CTR) **002.**

### 6.4 The output port

The output operation described herein applies to both the synchronous virtual pipe switch **10,** in FIGS. 56 and 58, and the asynchronous to synchronous gateway **15,** in FIG. 57.

The output port **40** was previously specified herein in FIG. 16, comprised of a scheduling controller with a transmit buffer **45,** and serial transmitter **49** (as previously described herein). The scheduling controller 45 performs a mapping of each of the data packets between the associated respective time of arrival (ToA) and an associated forwarding time out of the output port via the serial transmitter **49.** The forwarding time is determined relative to the common time reference (CTR) **002.** As it will be described, this mapping resynchronized the stream of data packets forwarded by the virtual pipe switch.

The scheduling controller and transmit buffer **45** has various modes of operation which are described in FIGS. 19, 48-49, and 62. The different operation modes corresponds to some of the possible configurations with the asynchronous switches, as was discussed in FIGS. 56-58. The scheduling controller and transmit buffer **45** in FIG. 19 includes three parts:
1. a delay analysis and scheduling controller which further comprises a forwarding table **45B;**
2. a transmit buffer **45C** which is typically realized as a random access memory (RAM); and
3. a select buffer controller **45D** which forward data packets to the serial transmitter.

The delay analysis and scheduling controller **45A**, together with the select buffer controller **45D,** perform the mapping, using the PID **35C**, the time-stamp **35TS** and the data packet time of arrival (ToA) **35T** in order to determine the respective time frame a respective packet should be forwarded out of the output port. Both controllers **45A** and **45D** are constructed of a central processing unit (CPU), a random access memory (RAM) for storing the data, and read only memory (ROM) for storing the controller processing program.

Data packets arrive from the switching fabric **50** via link **51.** Data packets which have the priority bit **35P** asserted (i.e., reserved traffic) are switched by the delay analysis and scheduling controller **45A** to one of the k transmit buffers **45C** (B-1, B-2, ...., B-*k*). Each of the k buffers is designated to store packets that will be forwarded in each of the k time frames in every time cycle, as shown in FIGS. 5 and 6. Having k transmit buffers enables the delay analysis and scheduling controller **45A** to schedule data packets in a wide range of delay variations.

The transmit buffer **45C** includes an additional buffer B-E for "best effort" data packets. The priority bit **35P** in the "best effort" data packets is not asserted and this is how the delay analysis and scheduling controller determine that such data packets should be stored in the "best effort" buffer. The "best effort" data packets are forwarded to the serial transmitter **49** whenever there are no more scheduled data packets (priority bit **35P** asserted).

### 6.5 The select buffer controller operation:

FIG. 21 illustrates the flow chart for the select buffer controller **45D** operation. The controller **45D** is responsive to the common time reference (CTR) tick **002** at step **45-11***,* and then, at step **45-12**, it increments the transmit buffer index *i* (i.e., *i: =i*+*1 mod k*', where *k*' is the number of buffers for scheduled traffic) and sends a time frame delimiter TFD to the serial transmitter **49.** Then, if the transmit buffer B-i is not empty, at step **45-13,** it will send a data packet from transmit buffer B-*i*, as specified in at step **45-14**, else it will send a "best effort" data packet from the "best effort" buffer B-E, as specified at step **45-15**.

### 6.6 The delay analysis and scheduling controller

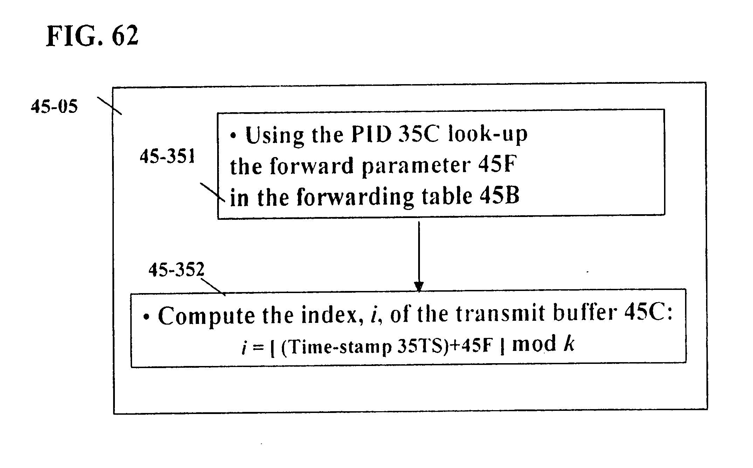

The flow chart for the program executed by the delay analysis and scheduling controller is illustrated in FIG. 48. The main task of the program is to compute the index, *i*, of the transmit buffer, B-*i*, between B-1 and B-*k*, is computed in step **245-05**. There are several possible methods to perform the computation in step **245-05**, which depends on the type of delay variations that can occur on the communication links. In FIGS. 49 and 62, two possible computation methods are described:
I. FIG. 49 - the case of arbitrary, but bounded, delay variations as described in FIGS. 56-58, as specified in **45-051**:
   1. Let <s1, s2, s3, ... , *sj*> be the set of time frames of a PID=p, which repeats in every time cycle, as it is specified in the forwarding table **45B** at the p entry,
   2. controller **45A** searches the set <s1, s2, s3, ... , *sj*> in order to determine the first feasible time frame, *si*, that occur after (ToA **35T)+CONST** (where CONST is a constant bound on the delay across the switching fabric); and
   3. si is the time frame the data packet is scheduled for transmission via the serial transmitter - where i is the index transmit buffer B-*i*.

   The set <s 1, s2, s3, ... , sj> constitute plurality of time frame in which a data packet can be scheduled for transmission out of the output port of a switch.
II. FIG. 62 - the case when using a time-stamp in the packet header (FIGS. 15 and 22): When the data packet is received from the fabric at step **45-03,** the PID **35C** in the data packet header is used to look-up the forward parameter **45F** in the forwarding table (45B of FIG. 19), as specified in step **45-351,** and then in step **45-352:** Compute the index, *i*, of the transmit buffer **45C:** *i* = [(Time-stamp **35TS)+45F]** mod *k*' where *k*' is the number of buffers for scheduled traffic.

## Claims

1. A system for scheduling and managing data transfer of data packets, said system comprising:
a plurality of switches (10) with a plurality of input ports (30) and output ports (40), each having a unique address for receiving the data packets, the data packets being of at least one type (35P);
a virtual pipe (25) comprising at least two of the switches interconnected via communications links (41) in a path for transferring data packets of the selected type (35P) from at least one source to at least one destination; and
a common time reference signal (002) coupled to selected ones of the switches; wherein the common time reference signal (002) is partitioned into a plurality of time frames (TFs); and wherein each time frame (TF) has a predefined duration;
**characterised in that** upon selecting selected ones of the switches (10) data packets of the selected type (35P) begin to be forwarded from said selected ones of the switches (10) along the virtual pipe (25) during a selected sequence of time frames (FIG. 7) responsive to the common time reference signal (002);
the time frames of the selected sequence of time frames have a respective sequence of time frame start times; and
wherein there are predefined time intervals among the start times of the respective sequence of time frames.

2. The system as in claim 1, wherein when there are no data packets of the selected type to be forwarded then "best effort" data packets are forwarded (47-be).

3. The system as in claim 1, wherein the position of data packet in time frame is at least one of the following: arbitrary and predefined.

4. The system as in claim 1, wherein there are a plurality of the virtual pipes (25); and wherein selected ones of the communications links are used simultaneously by at least one virtual pipe (FIG. 2).

5. The system as in claim 1, wherein the common time reference signal (002) is coupled from at least one of the following: GPS (Global Positioning System), Galileo, GLONAS (GLObal NAvigation Satellite System), TWTFT (Two-Way Satellite Time and Frequency Transfer), WWV radio station, WWVB radio station, IRIG (Inter-Range Instrumentation Group) time codes, directly via a single communications link from selected switches, indirectly via a plurality of communications links from selected switches, directly via a single communications link from adjacent network interfaces and gateways (15), and indirectly via a plurality of communications links from network interfaces and gateways (15).

6. The system as in claim 1, wherein the communications links are at least one of the following: optical fiber, copper cable, coaxial cable, twisted pair cable, wireless channel, 10 Megabit per second Ethernet, 100 Megabit per second Ethernet, 1 Gigabit per second Ethernet, 10 Gigabit per second Ethernet, IEEE 802.11 wireless channel, UMTS (Universal Mobile Telephone System) wireless channel, SONET, SDH, and Fiber Channel.

7. The system as in claim 1, wherein the communications links are wireless communications links between at least one of the following: a ground station and a satellite, and between two satellites orbiting the earth.

8. The system as in claim 1, wherein the data packets of the selected type are at least one of the following: Internet protocol (IP) data packets, multi-protocol label switching (MPLS) frames, Ethernet frames, fiber channel (FC) frames, and asynchronous transfer mode (ATM) cells.

9. The system as in claim 1, further comprising a scheduling controller (45),
wherein the scheduling controller (45) provides associated forwarding times for data packets of the selected type.

10. The system as in claim 9, wherein the data packets of the selected type (35P) that are forwarded over a selected virtual pipe have at least one associated pipe identification (PID) (35C).

11. The system as in claim 10, wherein a predefined number of contiguous time frames comprising a time cycle; and wherein the time cycles are contiguous (FIG. 1).

12. The system as in claim 11, wherein the sequence of time frames associated with the switches of a selected virtual pipe are associated with the respective switches for all time cycles (FIG. 8).

13. The system as in claim 11, wherein there is a predefined time interval between the input into and output from said selected one of the switches within each of the time cycles (FIG. 8).

14. The system as in claim 11, wherein a predefined number of time cycles comprises a super cycle; wherein the super cycle is periodic (FIG. 6).

15. The system as in claim 14, wherein the common time reference signal is in accordance with the UTC (Coordinated Universal Time) standard.

16. The system as in claim 15, wherein the super cycle duration is equal to at least one of the following: one second as measured using the UTC standard, a fraction of a second as measured using the UTC standard, a predefined number of seconds as measured using the UTC standard.

17. The system as in claim 10,
wherein the PID (35C) is at least one of the following: an Internet protocol (IP) address, IPv4 address, IPv6 address, Internet protocol group multicast address, asynchronous transfer mode (ATM) labels, virtual circuit identifier (VCI), virtual path identifier (VPI), label as defined by multi-protocol label switching (MPLS), forwarding equivalent class (FEC), IEEE 802 MAC (media access control) address, and IP address together with IP port number.

18. The system as in claim 9, wherein selected ones of the data packets of the selected type are including time stamps (35TS); and
wherein the scheduling controller (45) provides forwarding times for selected ones of the data packets of the selected type responsive to the respective time stamps and the common time reference.

19. The system as in claim 18**,** wherein the time stamp (35TS) is generated by at least one of the following: Internet real-time protocol (RTP), a predefined one of the switches, a data packet source, an end-station (100), a gateway(15), and a network interface.

20. The system as in claim 15, wherein there is a first predefined time frame within which a selected data packet of the selected type start to be transferred into the switch, and a second predefined time frame within which the selected data packet of the selected type starts to be forwarded out of said switch; and
wherein the first predefined time frame and the second predefined time frame are non-overlapping.

21. The system as in claim 20, wherein the first predefined time frame reflects the UTC (Coordinated Universal Time) and is represented in at least one of the following formats: a time frame number within a time cycle and as time cycle number within a super cycle, a fixed-point number representation, a floating-point number representation, and a number with two parts: (i) integer number of seconds and (ii) a fraction of a second.

22. The system as in claim 20, wherein there is a predefined time difference between the first predefined time frame and the second predefined time frame.

23. The system as in claim 22, wherein for each switch the predefined time difference is at least one of the following: a constant number, predefined for each PID, predefined for each time frame within each time cycle.

24. The system as in claim 10, wherein for selected ones of the input ports there are associated predefined positions within a predefined time frame within which data packets of the selected type are transferred into the respective input ports and associated separate predefined positions within a second predefined time frame within which the respective data packets of the selected type are forwarded from selected ones of the output ports (FIG. 24).

25. The system as in claim 9, wherein the scheduling controller of each selected ones of the switches there is a first scheduled time within a first predefined time frame within which a respective data packet is scheduled to start to be forwarded out of the respective switch determined by said scheduling controller; and
wherein the time frames and the first scheduled time are determined responsive to the common time reference signal.

26. The system as in claim 25, wherein for each of said time frames there is a defined bandwidth limiting the capacity to transmit the data packets during the time frame;
wherein the scheduling controller determines congestion responsive to the defined bandwidth being exceeded for a respective one of the time frames; and
wherein the scheduling controller responsive to the determination of congestion for a particular one of the time frames, reschedules for selected ones of the data packets of the selected type a second predefined time within a second predefined time frame for transfer of said respective data packets out from the respective switch.

27. The system as in claim 10,
wherein the scheduling controller has a forwarding table for assigning predefined time frame for transfer out from each of the respective output ports responsive to a time stamp field (35TS), the unique address of the input port, and the PID (35C).

28. The system as in claim 27, wherein the predefined time frame for transferring the data packet of the selected type out is determined by adding a predefined number of time frames to the time stamp (35TS).

29. The system as in claim 28, wherein the number of predefined time frames added to the time stamp field in order to determine transferring time frame of said data packet out, is determined responsive to looking this number up in the forwarding table in the scheduling controller using the PID (35C) as an index to said forwarding table.

30. The system as in claim 27, wherein the scheduling controller computes the time difference in time frames between common time reference and the time stamp (35TS) and provides means for discarding the respective data packet of the selected type when said time difference is above a predefined time threshold.

31. The system as in claim 9,
wherein the virtual pipe has a defined maximum delay between any two of the selected ones of the switches;
wherein the input ports provide means for receiving the data packets of the selected type and for recording a time of arrival (TOA) (35T) for each said data packet;
wherein the scheduling controller determines a first scheduled time within a first predefined time frame within which a respective one of said data packets is scheduled to start to be forwarded out of a respective output port of the respective switch, and a second scheduled time within a second predefined time frame within which said data packet is alternately scheduled to start to be transferred out of the respective switch, and a third predefined scheduled time. within a third predefined time frame for alternately scheduling the transfer of said data packet from the respective output port of the switch; and
wherein the first, second, and third predefined time frames are determined responsive to at least one of: the common time reference and TOA (35T).

32. The system as in claim 9, wherein for each selected ones of the switches there is a predefined time frame within which a respective data packet of the selected type starts to be transferred into the respective switch, and a separate predefined time frame within which the respective packet starts to be transferred out of the respective switch;
wherein each switch has an associated predefined set of time frames
wherein during one time frame of the predefined set of time frames, the switch outputs a data packet from said virtual pipe;
wherein when each of the packets arrives, it is assigned a time of arrival (TOA) (35T) responsive to an instant value of the common time reference, where the packet is scheduled to be output during a not fully occupied subsequently available time frame of the respective predefined set of time frames; and
wherein the subsequently available time frame is determined responsive to determining that the time elapsed since the TOA is greater than a predefined threshold.

33. The system as in claim 10,
wherein the PIDs have an associated parameter table which contains a predefined set of values specifying the reserved number of data packets of the selected type that can be forwarded in each of the predefined time frames;
wherein a policing and load controller is counting and comparing the number of data packets with the same subset PID in each of said time intervals and storing a count value in a load value table, and providing an output responsive to comparing the count value in the load table with respective ones of the predefined set of values (FIG. 44, FIG. 55).

34. The system as in claim 33, wherein the policing and load controller determines the number of data packets of the selected type with the same subset PID to be one of within a predefined range and outside the predefined range.

35. The system as in claim 34, wherein if the number of data packets of the selected type with the same subset of PIDs is outside the predefined range a violation message is generated and output.

36. The system as in claim 9,
wherein the switches are at least one of a synchronous switch and at least one of an asynchronous switch;
wherein an end-station (100) is interconnected by communication links in a path to one of the synchronous switches through respective asynchronous switches;
wherein there is a defined delay between the end-station and said synchronous switch; and
wherein the scheduling controller determines, for each of the synchronous switches, a first scheduled time which a selected one of the data packets is scheduled to start to be forwarded out of the respective synchronous switch.

37. The system as in claim 36, wherein the scheduling controller computes the delay that each of the data packets should be delayed before being forwarded.

38. The system as in claim 37, wherein a time-stamp (35TS) is attached to each said data packet when it is forwarded from the end-station (100),
wherein the time-stamp is derived from the common time reference; and
wherein the scheduling controller computes the time difference that said data packets should be delayed before being forwarded out of the respective output port of the respective synchronous switch responsive to the time-stamp value.

39. The system as in claim 38, wherein the common time reference is transferred into the end-station by at least one of the following means: by a timing message carried in a data packet, directly from a UTC (coordinated universal time) source, and from a timing server.

40. The system as in claim 10,
wherein the switches are at least one of a synchronous switch and at least one of an asynchronous switch;
wherein there is a path in the network for connecting a first of the synchronous switches to a second of the synchronous switches through a plurality of the asynchronous switches (FIG. 58);
wherein there is a defined delay in the transfer of respective ones of the data packets between the first synchronous switch and the second synchronous switch;
wherein the second synchronous switch records the time of arrival (TOA) (35T) for each said separate data packet responsive to receiving the respective data packet from the first synchronous switch; and
wherein the scheduling controller in the second synchronous switch determines a first scheduled time within which a respective data packet is scheduled to start to be forwarded out of the second synchronous switch responsive to the PID, TOA and common time reference.

41. The system as in claim 40, wherein a time-stamp (35TS) is selectively attached to selected respective ones of the data packets when they are forwarded from out of the first synchronous switch;
wherein the time-stamp value is received from the common time reference; and
wherein the scheduling controller computes the first scheduled time said data packets should forwarded out of the second synchronous switch responsive to the time-stamp value.

42. The system as in claim 9,
wherein at least one of the switches is an asynchronous to synchronous gateway (15) coupled to at least one end-station (100);
wherein at least one of the switches is an asynchronous switch (20);
wherein there is an interconnected communication links in a path for connecting the end-station to the asynchronous to synchronous gateway through the asynchronous switch (20);
wherein there is a defined delay for transfer of the data packets between the end-station (100) and the first asynchronous to synchronous gateway (15);
wherein the asynchronous to synchronous gateway receives data packets from the end-station and separately records a time of arrival (TOA) (35T) for each of said data packets; and wherein the scheduling controller determines for each said data packet a first scheduled time within a first predefined time frame within which a respective said data packet is scheduled to start to be transferred out of the respective asynchronous to synchronous gateway responsive to the PID (35C) and TOA (35T) associated with the respective said data packet.

43. The system as in claim 42, wherein the scheduling controller computes the delay that the respective said data packet is to be delayed before being forwarded out of the asynchronous to synchronous gateway (15).

44. The system as in claim 42, wherein a time-stamp (35TS) is attached to each said data packet when it is forwarded by the end-station; and
wherein the time-stamp value is derived from the common time reference.

## Patentansprüche

1. System für die Planung und für das Management der Datenübertragung von Datenpaketen, wobei das genannte System umfasst:
eine Mehrzahl von Vermittlungen (10) mit einer Mehrzahl von Eingangsports (30) und Ausgangsports (40), die jeweils eine eindeutige Adresse zum Empfangen der Datenpakete haben, wobei die Datenpakete wenigstens von einem Typ (35P) sind;
eine virtuelle Pipe (25), die wenigstens zwei der Vermittlungen umfasst, die über Kommunikationsverbindungen (41) in einem Weg miteinander verbunden sind, um Datenpakete des ausgewählten Typs (35P) von wenigstens einer Quelle zu wenigstens einem Ziel zu übertragen; und
ein gemeinsames Zeitreferenzsignal (002), das mit ausgewählten der Vermittlungen gekoppelt ist; wobei das gemeinsame Zeitreferenzsignal (002) in eine Mehrzahl von Zeitrahmen (TF) aufgeteilt ist; und wobei jeder Zeitrahmen (TF) eine vordefinierte Dauer hat;
**dadurch gekennzeichnet, dass** bei der Auswahl ausgewählter der Vermittlungen (10) Datenpakete des ausgewählten Typs (35P) in Reaktion auf das gemeinsame Zeitreferenzsignal (002) während einer ausgewählten Folge von Zeitrahmen (Fig.7) von den genannten ausgewählten der Vermittlungen (10) entlang der virtuellen Pipe (25) weitergeleitet zu werden beginnen;
die Zeitrahmen der ausgewählten Folge von Zeitrahmen eine jeweilige Folge von Zeitrahmen-Startzeiten haben; und
wobei es unter den Startzeiten der jeweiligen Folge von Zeitrahmen vordefinierte Zeitintervalle gibt.

2. System gemäß Anspruch 1, bei dem dann, wenn keine Datenpakete des ausgewählten Typs weiterzuleiten sind, Datenpakete des "besten Bemühens" weitergeleitet werden (47-be).

3. System gemäß Anspruch 1, bei dem die Position des Datenpakets im Zeitrahmen wenigstens eines der Folgenden ist: beliebig und vordefiniert.

4. System gemäß Anspruch 1, bei dem es eine Mehrzahl virtueller Pipes (25) gibt; und bei dem ausgewählte der Kommunikationsverbindungen von wenigstens einer virtuellen Pipe (Fig. 2) gleichzeitig verwendet werden.

5. System gemäß Anspruch 1, bei dem das gemeinsame Zeitreferenzsignal (002) von wenigstens einem der Folgenden gekoppelt wird: GPS (Global Positioning System), Galileo, GLONAS (GLObal NAvigation Satellite System), TWTFT (Two-Way Satellite Time and Frequency Transfer), WWV-Funkstation, WWVB-Funkstation, IRIG-Zeitcodes (Inter-Range-Instrumentation-Group-Zeitcodes), direkt über eine einzelne Kommunikationsverbindung von ausgewählten Vermittlungen, indirekt über eine Mehrzahl von Kommunikationsverbindungen von ausgewählten Vermittlungen, direkt über eine einzelne Kommunikationsverbindung von angrenzenden Netzschnittstellen und Gateways (15) und indirekt über eine Mehrzahl von Kommunikationsverbindungen von Netzschnittstellen und Gateways (15).

6. System gemäß Anspruch 1, bei dem die Kommunikationsverbindungen wenigstens eines der Folgenden sind: Glasfaser, Kupferkabel, Koaxialkabel, verdrilltes Aderpaar, drahtloser Kanal, 10-Megabit/Sekunde-Ethernet, 100-Megabit/Sekunde-Ethernet, 1-Gigabit/Sekunde-Ethernet, 10-Gigabit/Sekunde-Ethernet, drahtloser IEEE-802.11-Kanal, drahtloser UMTS-Kanal (drahtloser Kanal des Universal Mobile Telephone System), SONET, SDH und Faserkanal.

7. System gemäß Anspruch 1, bei dem die Kommunikationsverbindungen drahtlose Kommunikationsverbindungen zwischen wenigstens einem der Folgenden sind: einer Bodenstation und einem Satelliten und zwischen zwei Satelliten, die sich auf einer Umlaufbahn um die Erde bewegen.

8. System gemäß Anspruch 1, bei dem die Datenpakete des ausgewählten Typs wenigstens eines der Folgenden sind: Internet-Protocol-Datenpakete (IP-Datenpakete), Multi-Protocol-Label-Switching-Rahmen (MPLS-Rahmen), Ethernet-Rahmen, Faserkanalrahmen (FC-Rahmen) und Zellen des asynchronen Transfermodus (ATM-Zellen).

9. System gemäß Anspruch 1, das ferner eine Planungssteuereinheit (45) umfasst,
wobei die Planungssteuereinheit (45) für die Datenpakete des ausgewählten Typs zugeordnete Weiterleitungszeiten liefert.

10. System gemäß Anspruch 9, bei dem die Datenpakete des ausgewählten Typs (35P), die über eine ausgewählte virtuelle Pipe weitergeleitet werden, wenigstens eine zugeordnete Pipe-Kennung (PID) (35C) haben.

11. System gemäß Anspruch 10, bei dem eine vordefinierte Anzahl aneinandergrenzender Zeitrahmen einen Zeitzyklus umfassen; und bei dem die Zeitzyklen aneinandergrenzend sind (Fig. 1).

12. System gemäß Anspruch 11, bei dem die Folge von Zeitrahmen, die den Vermittlungen einer ausgewählten virtuellen Pipe zugeordnet sind, den jeweiligen Vermittlungen für alle Zeitzyklen zugeordnet sind (Fig. 8).

13. System gemäß Anspruch 11, bei dem es zwischen der Eingabe in die genannte ausgewählte der Vermittlungen und der Ausgabe von der genannten ausgewählten der Vermittlungen innerhalb jedes der Zeitzyklen ein vordefiniertes Zeitintervall gibt (Fig. 8).

14. System gemäß Anspruch 11, bei dem eine vordefinierte Anzahl von Zeitzyklen einen Superzyklus umfassen; wobei der Superzyklus periodisch ist (Fig. 6).

15. System gemäß Anspruch 14, bei dem das gemeinsame Zeitreferenzsignal in Übereinstimmung mit dem UTC-Standard (Coordinated-Universal-Time-Standard) ist.

16. System gemäß Anspruch 15, bei dem die Superzyklusdauer wenigstens gleich einem der Folgenden ist: einer Sekunde, gemessen unter Verwendung des UTC-Standards, einem Bruchteil einer Sekunde, gemessen unter Verwendung des UTC-Standards, einer vordefinierten Anzahl von Sekunden, gemessen unter Verwendung des UTC-Standards.

17. System gemäß Anspruch 10,
bei dem die PID (35C) wenigstens eines der Folgenden ist: eine Internet-Protocol-Adresse (IP-Adresse), eine IPv4-Adresse, eine IPv6-Adresse, eine Internet-Protocol-Group-Gruppenadresse, Etiketten des asynchronen Transfermodus (ATM-Etiketten), eine Kennung einer virtuellen Verbindung (VCI), eine virtuelle Wegkennung (VPI), ein Etikett, wie es durch die Mehrprotokoll-Etikettvermittlung (MPLS) definiert ist, eine Weiterleitungsäquivalenzklasse (FEC), eine IEEE-802-MAC-(Media-Access-Control-)Adresse und eine IP-Adresse zusammen mit einer IP-Portnummer.

18. System gemäß Anspruch 9, bei dem ausgewählte der Datenpakete des ausgewählten Typs Zeitstempel (35TS) enthalten; und
wobei die Planungssteuereinheit (45) in Reaktion auf die jeweiligen Zeitstempel und auf die gemeinsame Zeitreferenz Weiterleitungszeiten für ausgewählte der Datenpakete des ausgewählten Typs liefert.

19. System gemäß Anspruch 18, bei dem der Zeitstempel (35TS) durch wenigstens eines der Folgenden erzeugt wird: Internet-Real-Time-(RTP-)Protokoll, eine vordefinierte der Vermittlungen, eine Datenpaketquelle, eine Endstation (100), ein Gateway (15) und eine Netzschnittstelle.

20. System gemäß Anspruch 15, bei dem es einen ersten vordefinierten Zeitrahmen, innerhalb dessen ein ausgewähltes Datenpaket des ausgewählten Typs in die Vermittlung übertragen zu werden beginnt, und einen zweiten vordefinierten Zeitrahmen, innerhalb dessen das ausgewählte Datenpaket des ausgewählten Typs aus der genannten Vermittlung weitergeleitet zu werden beginnt, gibt; und
wobei der erste vordefinierte Zeitrahmen und der zweite vordefinierte Zeitrahmen nicht überschneidend sind.

21. System gemäß Anspruch 20, bei dem der erste vordefinierte Zeitrahmen die UTC (Coordinated Universal Time) widerspiegelt und in wenigstens einem der folgenden Formate dargestellt ist: eine Zeitrahmennummer innerhalb eines Zeitzyklus und als Zeitzyklusnummer innerhalb eines Superzyklus, eine Festkommazahlendarstellung, eine Gleitkommazahlendarstellung und eine Zahl mit zwei Teilen: (i) eine ganze Zahl von Sekunden und (ii) ein Bruchteil einer Sekunde.

22. System gemäß Anspruch 20, bei dem es zwischen dem ersten vordefinierten Zeitrahmen und dem zweiten vordefinierten Zeitrahmen eine vordefinierte Zeitdifferenz gibt.

23. System gemäß Anspruch 22, bei dem die vordefinierte Zeitdifferenz für jede Vermittlung wenigstens eines der Folgenden ist: eine konstante Zahl, für jede PID vordefiniert, für jeden Zeitrahmen innerhalb jedes Zeitzyklus vordefiniert.

24. System gemäß Anspruch 10, bei dem für ausgewählte der Eingangsports vordefinierte Positionen innerhalb eines vordefinierten Zeitrahmens, innerhalb dessen Datenpakete des ausgewählten Typs in die jeweiligen Eingangsports übertragen werden, zugeordnet sind und getrennte vordefinierte Positionen innerhalb eines zweiten vordefinierten Zeitrahmens, innerhalb dessen die jeweiligen Datenpakete des ausgewählten Typs von ausgewählten der Ausgangsports weitergeleitet werden, zugeordnet sind (Fig. 24).

25. System gemäß Anspruch 9, bei dem es in der Planungssteuereinheit jeder ausgewählten der Vermittlungen eine erste, durch die genannte Planungssteuereinheit bestimmte geplante Zeit innerhalb eines ersten vordefinierten Zeitrahmens gibt, innerhalb deren ein jeweiliges Datenpaket dafür geplant wird, aus der jeweiligen Vermittlung weitergeleitet zu werden zu beginnen, und
wobei die Zeitrahmen und die erste geplante Zeit in Reaktion auf das gemeinsame Zeitreferenzsignal bestimmt werden.

26. System gemäß Anspruch 25, bei dem es für jeden der genannten Zeitrahmen eine definierte Bandbreite gibt, die die Kapazität zum Senden der Datenpakete während des Zeitrahmens begrenzt;
wobei die Planungssteuereinheit in Reaktion darauf, dass die definierte Bandbreite für einen jeweiligen der Zeitrahmen überschritten wird, eine Stauung bestimmt; und
wobei die Planungssteuereinheit in Reaktion auf die Bestimmung einer Stauung für einen besonderen der Zeitrahmen für ausgewählte der Datenpakete des ausgewählten Typs eine zweite vordefinierte Zeit innerhalb eines zweiten vordefinierten Zeitrahmens für die Übertragung der genannten jeweiligen Datenpakete von der jeweiligen Vermittlung heraus neu plant.

27. System gemäß Anspruch 10,
bei dem die Planungssteuereinheit eine Weiterleitungstabelle zum Zuweisen vordefinierter Zeitrahmen für die Übertragung von jedem der jeweiligen Ausgangsports heraus in Reaktion auf ein Zeitstempelfeld (35TS), auf die eindeutige Adresse des Eingangsports und auf die PID (35C) besitzt.

28. System gemäß Anspruch 27, bei dem der vordefinierte Zeitrahmen für die Übertragung des Datenpakets des ausgewählten Typs heraus durch Addieren einer vordefinierten Anzahl von Zeitrahmen zu dem Zeitstempel (35TS) bestimmt wird.

29. System gemäß Anspruch 28, bei dem die Anzahl vordefinierter Zeitrahmen, die zu dem Zeitstempelfeld addiert werden, um den Übertragungszeitrahmen des genannten Datenpakets heraus zu bestimmen, in Reaktion auf das Nachschlagen dieser Zahl in der Weiterleitungstabelle in der Planungssteuereinheit unter Verwendung der PID (35C) als ein Index in die genannte Weiterleitungstabelle bestimmt wird.

30. System gemäß Anspruch 27, bei dem die Planungssteuereinheit die Zeitdifferenz in Zeitrahmen zwischen der gemeinsamen Zeitreferenz und dem Zeitstempel (35TS) berechnet und Mittel bereitstellt, um das jeweilige Datenpaket des ausgewählten Typs zu verwerfen, wenn die genannte Zeitdifferenz über einem vordefinierten Zeitschwellenwert liegt.

31. System gemäß Anspruch 9,
bei dem die virtuelle Pipe eine definierte maximale Verzögerung zwischen zwei beliebigen der ausgewählten der Vermittlungen besitzt;
bei dem die Eingangsports Mittel zum Empfangen der Datenpakete des ausgewählten Typs und zum Aufzeichnen einer Ankunftszeit (TOA) (35T) für jedes genannte Datenpaket bereitstellen;
bei dem die Planungssteuereinheit eine erste geplante Zeit innerhalb eines ersten vordefinierten Zeitrahmens, innerhalb deren ein jeweiliges der genannten Datenpakete dafür geplant wird, aus einem jeweiligen Ausgangsport der jeweiligen Vermittlung weitergeleitet zu werden zu beginnen, und eine zweite geplante Zeit innerhalb eines zweiten vordefinierten Zeitrahmens, innerhalb deren das genannte Datenpaket alternativ dafür geplant wird, aus der jeweiligen Vermittlung übertragen zu werden zu beginnen, und eine dritte vordefinierte geplante Zeit innerhalb eines dritten vordefinierten Zeitrahmens zum alternativen Planen der Übertragung des genannten Datenpakets von dem jeweiligen Ausgangsport der Vermittlung bestimmt; und
wobei der erste, der zweite und der dritte vordefinierte Zeitrahmen in Reaktion auf wenigstens eines der Folgenden bestimmt werden: die gemeinsame Zeitreferenz und die TOA (35T).

32. System gemäß Anspruch 9, bei dem es für jede ausgewählte der Vermittlungen einen vordefinierten Zeitrahmen, innerhalb dessen ein jeweiliges Datenpaket des ausgewählten Typs in die jeweilige Vermittlung übertragen zu werden beginnt, und einen getrennten vordefinierten Zeitrahmen, innerhalb dessen das jeweilige Paket aus der jeweiligen Vermittlung übertragen zu werden beginnt, gibt;
wobei jede Vermittlung eine zugeordnete vordefinierte Menge von Zeitrahmen besitzt, wobei die Vermittlung während eines Zeitrahmens der vordefinierten Menge von Zeitrahmen ein Datenpaket von der genannten virtuellen Pipe ausgibt;
wobei jedem der Datenpakete, wenn es ankommt, in Reaktion auf einen Momentanwert der gemeinsamen Zeitreferenz eine Ankunftszeit (TOA) (35T) zugewiesen wird, wobei das Paket während eines nicht vollständig belegten nachfolgend verfügbaren Zeitrahmens der jeweiligen vordefinierten Menge von Zeitrahmen dafür geplant wird, ausgegeben zu werden; und
wobei der nachfolgend verfügbare Zeitrahmen in Reaktion auf die Bestimmung bestimmt wird, dass die seit der TOA verstrichene Zeit größer als ein vordefinierter Schwellenwert ist.

33. System gemäß Anspruch 10,
bei dem die PIDs eine zugeordnete Parametertabelle haben, die eine vordefinierte Menge von Werten enthält, die die reservierte Anzahl von Datenpaketen des ausgewählten Typs spezifizieren, die in jedem der vordefinierten Zeitrahmen weitergeleitet werden können;
bei dem eine Zeitstromkontrollen- und Laststeuereinheit die Anzahl der Datenpakete mit der gleichen Teilmengen-PID in jedem der genannten Zeitintervalle zählt und vergleicht und einen Zählwert in einer Lastwerttabelle speichert und in Reaktion auf den Vergleich des Zählwerts in der Lasttabelle mit jeweiligen der vordefinierten Menge von Werten eine Ausgabe liefert (Fig. 44, Fig. 55).

34. System gemäß Anspruch 33, bei dem die Zeitstromkontrollen- und Laststeuereinheit die Anzahl der Datenpakete des ausgewählten Typs mit der gleichen Teilmengen-PID als innerhalb eines vordefinierten Bereichs oder außerhalb des vordefinierten Bereichs bestimmt.

35. System gemäß Anspruch 34, bei dem eine Verletzungsnachricht erzeugt und ausgegeben wird, falls die Anzahl der Datenpakete des ausgewählten Typs mit der gleichen Teilmenge von PIDs außerhalb des vordefinierten Bereichs liegt.

36. System gemäß Anspruch 9,
bei dem die Vermittlungen wenigstens eine synchrone Vermittlung und wenigstens eine asynchrone Vermittlung sind;
wobei eine Endstation (100) durch Kommunikationsverbindungen in einem Weg über jeweilige asynchrone Vermittlungen zu einer der synchronen Vermittlungen verbunden ist;
wobei es zwischen der Endstation und der genannten synchronen Vermittlung eine definierte Verzögerung gibt; und
wobei die Planungssteuereinheit für jede der synchronen Vermittlungen eine erste geplante Zeit bestimmt, zu der ein ausgewähltes der Datenpakete aus der jeweiligen synchronen Vermittlung dafür geplant wird, weitergeleitet zu werden zu beginnen.

37. System gemäß Anspruch 36, bei dem die Planungssteuereinheit die Verzögerung berechnet, um die jedes der Datenpakete verzögert werden sollte, bevor es weitergeleitet wird.

38. System gemäß Anspruch 37, bei dem an jedem genannten Datenpaket ein Zeitstempel (35TS) angebracht wird, wenn es von der Endstation (100) weitergeleitet wird, wobei der Zeitstempel von der gemeinsamen Zeitreferenz abgeleitet wird; und
wobei die Planungssteuereinheit in Reaktion auf den Zeitstempelwert die Zeitdifferenz berechnet, um die die genannten Datenpakete verzögert werden sollten, bevor sie aus dem jeweiligen Ausgangsport der jeweiligen synchronen Vermittlung weitergeleitet werden.

39. System gemäß Anspruch 38, bei dem die gemeinsame Zeitdifferenz durch wenigstens eines der folgenden Mittel in die Endstation übertragen wird: durch eine Zeitgebungsnachricht, die in einem Datenpaket übermittelt wird, direkt von einer UTC-Quelle (Quelle der Coordinated Universal Time) und von einem Zeitgebungs-Server.

40. System gemäß Anspruch 10,
bei dem die Vermittlungen wenigstens eine synchrone Vermittlung und wenigstens eine asynchrone Vermittlung sind;
wobei es in dem Netz einen Weg zum Verbinden einer ersten der synchronen Vermittlungen mit einer zweiten der synchronen Vermittlungen über eine Mehrzahl der asynchronen Vermittlungen gibt (Fig. 58);
wobei es in der Übertragung jeweiliger der Datenpakete zwischen der ersten synchronen Vermittlung und der zweiten synchronen Vermittlung eine definierte Verzögerung gibt;
wobei die zweite synchrone Vermittlung in Reaktion auf den Empfang des jeweiligen Datenpakets von der ersten synchronen Vermittlung die Ankunftszeit (TOA) (35T) für jedes genannte getrennte Datenpaket aufzeichnet; und
wobei die Planungssteuereinheit in Reaktion auf die PID, die TOA und die gemeinsame Zeitreferenz in der zweiten synchronen Vermittlung eine erste geplante Zeit bestimmt, innerhalb derer ein jeweiliges Datenpaket dafür geplant wird, aus der zweiten synchronen Vermittlung weitergeleitet zu werden zu beginnen.

41. System gemäß Anspruch 40, bei dem an ausgewählten jeweiligen der Datenpakete selektiv ein Zeitstempel (35TS) angebracht wird, wenn sie aus der ersten synchronen Vermittlung weitergeleitet werden;
wobei der Zeitstempelwert von der gemeinsamen Zeitreferenz empfangen wird; und
wobei die Planungssteuereinheit in Reaktion auf den Zeitstempelwert die erste geplante Zeit berechnet, zu der die genannten Datenpakete aus der zweiten synchronen Vermittlung weitergeleitet werden sollten.

42. System gemäß Anspruch 9,
bei dem wenigstens eine der Vermittlungen ein Asynchron-Synchron-Gateway (15) ist, das mit wenigstens einer Endstation (100) gekoppelt ist;
wobei wenigstens eine der Vermittlungen eine asynchrone Vermittlung (20) ist;
wobei es in einem Weg miteinander verbundene Kommunikationsverbindungen zum Verbinden der Endstation mit dem Asynchron-Synchron-Gateway über die asynchrone Vermittlung (20) gibt;
wobei es zwischen der Endstation (100) und dem ersten Asynchron-Synchron-Gateway (15) eine definierte Verzögerung für die Übertragung der Datenpakete gibt;
wobei das Asynchron-Synchron-Gateway Datenpakete von der Endstation empfängt und für jedes der genannten Datenpakete eine Ankunftszeit (TOA) (35T) getrennt aufzeichnet; und
wobei die Planungssteuereinheit in Reaktion auf die PID (35C) und die TOA (35T), die dem jeweiligen genannten Datenpaket zugeordnet sind, für jedes genannte Datenpaket eine erste geplante Zeit innerhalb eines ersten vordefinierten Zeitrahmens, innerhalb deren ein jeweiliges genanntes Datenpaket dafür geplant wird, aus dem jeweiligen Asynchron-Synchron-Gateway (15) übertragen zu werden zu beginnen, bestimmt.

43. System gemäß Anspruch 42, bei dem die Planungssteuereinheit die Verzögerung berechnet, um die das jeweilige genannte Datenpaket zu verzögern ist, bevor es aus dem Asynchron-Synchron-Gateway (15) weitergeleitet wird.

44. System gemäß Anspruch 42, bei dem an jedem genannten Datenpaket ein Zeitstempel (35TS) angebracht wird, wenn es durch die Endstation weitergeleitet wird; und
wobei der Zeitstempelwert von der gemeinsamen Zeitreferenz abgeleitet wird.

## Revendications

1. Système pour planifier et gérer le transfert de données en paquets de données, ledit système comprenant :
une pluralité de commutateurs (10) avec une pluralité de ports d'entrée (30) et de ports de sortie (40), chacun ayant une adresse unique pour recevoir des paquets de données, les paquets de données correspondant à au moins un type (35P) ;
un canal virtuel (25), comprenant au moins deux des commutateurs interconnectés par l'intermédiaire de liaisons de communication (41) dans un trajet permettant de transférer des paquets de données du type sélectionné (35P) à partir d'au moins une source vers au moins une destination ; et
un signal de référence temporelle commune (002) couplé à ceux sélectionnés parmi les commutateurs ;
dans lequel le signal de référence temporelle commune (002) est subdivisé en une pluralité de trames temporelles (TF) ; et dans lequel chaque trame temporelle (TF) a une durée prédéfinie ;
**caractérisé en ce que**, lors de la sélection de ceux sélectionnés parmi les commutateurs (10), les paquets de données du type sélectionné (35P) commence à être envoyés à partir desdits commutateurs sélectionnés (10) à travers le canal virtuel (25) pendant une séquence sélectionnée de trames temporelles (figure 7) en réponse au signal de référence temporelle commune (002) ;
les trames temporelles de la séquence sélectionnée de trames temporelles ont une séquence respective de temps de démarrage de la trame temporelle ; et
dans lequel des intervalles de temps sont prédéfinis entre les temps de démarrage de la séquence respective de trames temporelles.

2. Système selon la revendication 1, dans lequel, dans le cas où il n'y aurait pas de paquets de données du type sélectionné à envoyer, ce sont les paquets de données du "meilleur effort" qui sont envoyées (47-be).

3. Système selon la revendication 1, dans lequel la position de paquet de données dans la trame temporelle est au moins l'une entre : une position arbitraire et une position prédéfinie.

4. Système selon la revendication 1, dans lequel il y a une pluralité de canaux virtuels (25) ; et dans lequel celles sélectionnées parmi les liaisons de communication sont utilisées de façon simultanée par au moins un canal virtuel (figure 2).

5. Système selon la revendication 1, dans lequel le signal de référence temporelle commune (002) est couplé à partir d'au moins l'un des temps codés suivants: GPS (système mondial de radiorepérage), Galileo, GLONAS (système mondial de navigation par satellite), TWTFT (transfert de temps et de fréquence par satellite dans les deux sens), station radio WWW, station radio WWWB, IRIG (Inter-Range Instrumentation Group), directement par l'intermédiaire d'une liaison de communication simple à partir de commutateurs sélectionnés, indirectement par l'intermédiaire d'une pluralité de liaisons de communication à partir de commutateurs sélectionnés, directement par l'intermédiaire d'une liaison de communication simple à partir d'interfaces de réseau et de passerelles voisines (15) et indirectement par l'intermédiaire de liaisons de communication à partir d'interfaces de réseaux et de passerelles (15).

6. Système selon la revendication 1, dans lequel les liaisons de communication sont au moins l'une parmi les suivantes: une fibre optique, un câble en cuivre, un câble coaxial, un câble à paire torsadée, un canal sans fil, une liaison Ethernet à 10 mégaoctets par seconde, une liaison Ethernet à 100 mégaoctets par seconde, une liaison Ethernet à 1 gigaoctet par seconde, une liaison Ethernet à 10 gigaoctet par seconde, un canal sans fil IEEE 802.11, un canal sans fil UMTS (système de télécommunications mobiles universelles), un SONET (réseau optique synchrone),un SDH (hiérarchie numérique synchrone) et un canal Fibre Channel.

7. Système selon la revendication 1, dans lequel les liaisons de communication sont des liaisons de communication sans fil entre au moins l'un parmi : une station de base et un satellite, et entre deux satellites en orbite autour de la terre.

8. Système selon la revendication 1, dans lequel les paquets de données du type sélectionné sont au moins l'un entre les suivants: paquets de données du protocole Internet (IP), trames commutées avec étiquettes entre protocoles multiples (MPLS), trames Ethernet, trames Fibre Channel (FC) et cellules du mode de transfert asynchrone (ATM).

9. Système selon la revendication 1, comprenant en outre un contrôleur de planification (45),
dans lequel le contrôleur de planification (45) fournit des temps d'envoi associés aux paquets de données du type sélectionné.

10. Système selon la revendication 9, dans lequel les paquets de données du type sélectionné (35P) qui sont envoyés à travers un canal virtuel sélectionné ont au moins une identification de canal associée (PID) (35C).

11. Système selon la revendication 10, dans lequel un nombre prédéfini de trames temporelles contiguës comprend un cycle temporel ; et dans lequel les cycles de temps sont contigus (figure 1).

12. Système selon la revendication 11, dans lequel la séquence des trames temporelles associée aux commutateurs d'un canal virtuel sélectionné présente une association avec les commutateurs respectifs pour l'ensemble des cycles temporels (figure 8).

13. Système selon la revendication 11, dans lequel un intervalle de temps est prédéfini entre l'entrée dans et la sortie depuis ledit un commutateur sélectionné parmi les commutateurs dans chacun des cycles temporels (figure 8).

14. Système selon la revendication 11, dans lequel un nombre prédéfini de cycles temporels comprend un super cycle ; dans lequel le super cycle est périodique (figure 6).

15. Système selon la revendication 14, dans lequel le signal de référence temporelle commune est conforme à la norme UTC (temps coordonné universel).

16. Système selon la revendication 15, dans lequel la durée du super cycle est égale à au moins l'une des durées suivantes : une seconde telle que mesurée en utilisant la norme UTC (temps coordonné universel), une fraction de seconde telle que mesurée en utilisant la norme UTC, un nombre prédéfini de secondes telles que mesurées en utilisant la norme UTC.

17. Système selon la revendication 10,
dans lequel le PID (35C) est au moins l'un des suivants : une adresse de protocole Internet (IP), une adresse IPv4, une adresse IPv6, une adresse Internet de diffusion sélective de groupe, des étiquettes du mode de transfert asynchrone (ATM), un identificateur de circuit virtuel (VCI), un identificateur de trajet virtuel (VPI), une étiquette telle que définie par la commutation multiprotocole avec étiquette (MPLS), une classe d'équivalence aval (FEC), une adresse 802 MAC (commande d'accès au support) et une adresse IP conjointement avec un numéro de port IP.

18. Système selon la revendication 9, dans lequel ceux sélectionnés parmi les paquets de données du type sélectionné comprennent des indicateurs horaires (35TS) ; et
dans lequel le contrôleur de planification (45) fournit des temps d'envoi pour ceux sélectionnés parmi les paquets de données du type sélectionné en réponse aux indicateurs horaires respectifs et à la référence temporelle commune.

19. Système selon la revendication 18, dans lequel l'indicateur horaire (35TS) est généré par au moins l'un entre les suivants : un protocole Internet en temps réel (RTP), un commutateur prédéfini parmi les commutateurs, une source de paquet de données, une station terminale (100), une passerelle (15) et une interface de réseau.

20. Système selon la revendication 15, dans lequel une première trame temporelle prédéfinie durant laquelle un paquet de données sélectionné du type sélectionné commence à être envoyé dans le commutateur et une deuxième trame temporelle prédéfinie durant laquelle le paquet de données sélectionné du type sélectionné commence à être envoyé en sortie dudit commutateur ; et
dans lequel la première trame temporelle prédéfinie et la deuxième trame temporelle prédéfinie ne se chevauchent pas.

21. Système selon la revendication 20, dans lequel la première trame temporelle prédéfinie reflète l'UTC (temps coordonné universel) et est représentée dans au moins l'un des formats suivants : un numéro de trame temporelle dans un cycle temporel et en tant que numéro de cycle temporel dans un super cycle, une représentation de numéro à point fixe, une représentation de numéro à point flottant et un nombre composé de deux parties : (i) un nombre entier de secondes et (ii) une fraction d'une seconde.

22. Système selon la revendication 20, dans lequel il y a une différence temporelle prédéfinie entre la première trame temporelle prédéfinie et la deuxième trame temporelle prédéfinie.

23. Système selon la revendication 22, dans lequel pour chaque commutateur la différence temporelle prédéfinie est au moins l'une entre les suivants: un nombre constant, prédéfinie pour chaque PID, prédéfinie pour chaque trame temporelle dans chaque cycle temporel.

24. Système selon la revendication 10, dans lequel, pour ceux sélectionnés parmi les ports d'entrées, des positions prédéfinies sont associées dans une trame temporelle prédéfinie durant laquelle des paquets de données du type sélectionné sont transférés dans les ports d'entrée respectifs et des positions prédéfinies séparées sont associées dans une deuxième trame temporelle prédéfinie durant laquelle les paquets de données respectifs du type sélectionné sont envoyés à partir de ceux sélectionnés des ports de sortie (figure 24).

25. Système selon la revendication 9, dans lequel dans le contrôleur de planification de chacun des commutateurs sélectionnés, un premier temps est planifié dans une première trame temporelle prédéfinie durant laquelle le commencement de l'envoi d'un paquet de données respectif est planifié en sortie du commutateur respectif déterminé par ledit contrôleur de planification ; et
dans lequel les trames temporelles et le premier temps planifié sont déterminés en réponse au signal de référence temporelle commune.

26. Système selon la revendication 25, dans lequel pour chacune desdites trames temporelles une largeur de bande est définie limitant la capacité de la transmission des paquets de données au cours de la trame temporelle ;
dans lequel le contrôleur de planification détermine un encombrement en réponse à la largeur de bande définie se trouvant saturée eu égard à l'une des trames temporelles respectives ; et
dans lequel le contrôleur de planification, en réponse à la détermination d'un encombrement eu égard à une particulière parmi les trames temporelles, planifie de nouveau pour ceux sélectionnés parmi les paquets de données du type sélectionné un deuxième temps prédéfini dans une deuxième trame temporelle prédéfinie pour le transfert desdits paquets de données respectifs en sortie du commutateur respectif.

27. Système selon la revendication 10,
dans lequel le contrôleur de planification possède une table des envois pour attribuer à la trame temporelle prédéfinie pour le transfert en sortie de chacun des ports de sortie respectifs en réponse à un champ d'indication horaire (35TS) l'adresse unique du port d'entrée, ainsi que le PID (35C).

28. Système selon la revendication 27, dans lequel la trame temporelle prédéfinie pour effectuer le transfert du paquet de données du type sélectionné en sortie est déterminée en ajoutant un nombre prédéfini de trames temporelles à l'indicateur horaire (35TS).

29. Système selon la revendication 28, dans lequel le nombre de trames temporelles prédéfinies ajoutées au champ d'indication horaire afin de déterminer la trame temporelle effectuant le transfert dudit paquet de données sortant, est déterminé en réponse à la vérification de ce nombre dans la table des envois dans le contrôleur de planification en utilisant le PID (35C) en tant qu'indice de renvoi à ladite table des envois.

30. Système selon la revendication 27, dans lequel le contrôleur de planification calcule la différence dans le temps affectant les trames temporelles entre la référence temporelle commune et l'indicateur horaire (35TS) et fournit un moyen pour rejeter le paquet de données respectif du type sélectionné lorsque la différence temporelle est supérieure à un seuil temporel prédéfini.

31. Système selon la revendication 9,
dans lequel le canal virtuel présente un retard maximal défini entre n'importe lesquels au nombre de deux de ceux sélectionnés parmi les commutateurs ;
dans lequel les ports d'entrée fournissent un moyen pour recevoir les paquets de donnée du type sélectionné et pour enregistrer un temps d'arrivée (TOA, Time of Arrival) (35T) pour chaque dit paquet de données ;
dans lequel le contrôleur de planification détermine un premier temps planifié dans une première trame temporelle prédéfinie durant laquelle le commencement de l'envoi d'un paquet respectif parmi lesdits paquets est planifié en sortie d'un port de sortie respectif du commutateur respectif, et un deuxième temps planifié dans une deuxième trame temporelle prédéfinie durant laquelle le commencement du transfert dudit paquet de données est, à son tour, planifié en sortie du commutateur respectif, et un troisième temps planifié prédéfini dans une troisième trame temporelle prédéfinie pour planifier, à son tour, le transfert dudit paquet de données à partir du port de sortie respectif du commutateur ; et
dans lequel les première, deuxième et troisième trames temporelles prédéfinies sont déterminées en réponse à au moins l'un parmi: la référence temporelle commune et le TOA (35T).

32. Système selon la revendication 9, dans lequel pour chacun de ceux sélectionnés parmi les commutateurs, une trame temporelle est prédéfinie durant laquelle un paquet de données respectif du type sélectionné commence à être transféré dans le commutateur respectif, et une trame temporelle séparée est prédéfinie durant laquelle commence le transfert du paquet de données respectif en sortie du commutateur respectif ;
dans lequel chaque commutateur a un ensemble prédéfini associé de trames temporelles dans lequel, au cours d'une trame temporelle de l'ensemble prédéfini de trames temporelles, le commutateur délivre en sortie un paquet de données dudit canal virtuel ;
dans lequel, lorsque chacun des paquets arrive, un temps d'arrivée (TOA) (35T) est attribué en réponse à une valeur instantanée de la référence temporelle commune, où la sortie du paquet est planifiée au cours d'une trame temporelle non pleinement occupée donc disponible de l'ensemble prédéfini respectif de trames temporelles ; et
dans lequel la trame temporelle donc disponible est déterminée en réponse à la détermination du laps de temps écoulé depuis le TOA comme supérieure au seuil prédéfini.

33. Système selon la revendication 10,
dans lequel les PID possèdent une table de paramétrage associée qui contient un ensemble prédéfini de valeurs spécifiant le nombre réservé de paquets de données du type sélectionné qui peuvent être envoyés dans chacune des trames temporelles prédéfinies ;
dans laquelle un contrôleur de chargement et de régulation dresse un compte et une comparaison du nombre des paquets de données ayant le même sous-ensemble PID dans chacun desdits intervalles de temps et enregistre une valeur de comptage dans une table de valeur de chargement, et fournit une sortie en réponse à la comparaison de la valeur de comptage dans le tableau de chargement avec celles respectives parmi l'ensemble prédéfini des valeurs (figure 44, figure 55).

34. Système selon la revendication 33, dans lequel le contrôleur de chargement et de régulation détermine le nombre de paquets de données du type sélectionné ayant le même sous-ensemble PID comme étant un nombre compris dans une plage prédéfinie et en dehors de la plage prédéfinie.

35. Système selon la revendication 34, dans lequel si le nombre des paquets de données du type sélectionné avec le même sous-ensemble de PID est en dehors de la plage prédéfinie, un message de violation est généré et délivré en sortie.

36. Système selon la revendication 9
dans lequel les commutateurs comprennent au moins un commutateur synchrone et au moins un commutateur asynchrone ;
dans lequel une station terminale (100) est interconnectée par des liaisons de communication dans un trajet vers l'un des commutateurs synchrones via les commutateurs asynchrones respectifs ;
dans lequel un retard est défini entre la station terminale et ledit commutateur synchrone ; et
dans lequel le contrôleur de planification détermine, pour chacun des commutateurs synchrones, un premier temps planifié auquel est planifié le commencement de l'envoi de l'un sélectionné parmi les paquets de données pour qu'il soit envoyé en sortie du commutateur synchrone respectif.

37. Système selon la revendication 36, dans lequel le contrôleur de planification calcule le retard qui devrait affecter chacun desdits paquets de données avant qu'il ne soit envoyé.

38. Système selon la revendication 37, dans lequel un indicateur horaire (35TS) est attaché à chaque dit paquet de données lorsqu'il est envoyé à partir de la station terminale (100), dans lequel l'indicateur horaire est dérivé de la référence temporelle commune ; et
dans lequel le contrôleur de planification calcule la différence temporelle selon laquelle lesdits paquets de données devraient être retardés avant qu'ils ne soient envoyés en sortie du port de sortie respectif du commutateur synchrone respectif en réponse à la valeur d'indicateur horaire.

39. Système selon la revendication 38, dans lequel la référence temporelle commune est transférée dans la station terminale par au moins l'un des moyens suivants: par un message d'annonce temporelle transporté dans un paquet de données, provenant directement d'une source UTC (temps coordonné universel) et en provenance d'un serveur de temps.

40. Système selon la revendication 10,
dans lequel les commutateurs comprennent au moins un commutateur synchrone et au moins un commutateur asynchrone ;
dans lequel un trajet est prévu dans le réseau pour connecter un premier parmi les commutateurs synchrones à un deuxième parmi les commutateurs synchrones via une pluralité de commutateurs asynchrones (figure 58) ;
dans lequel un retard est défini affectant le transfert de ceux respectifs parmi les paquets de données entre le premier commutateur synchrone et le deuxième commutateur synchrone ;
dans lequel le deuxième commutateur synchrone enregistre le temps d'arrivée (TOA) (35T) pour chaque dit paquet de données séparé en réponse à la réception du paquet de données respectif provenant du premier commutateur synchrone ; et
dans lequel le contrôleur de planification dans le deuxième commutateur synchrone détermine un premier temps planifié dans lequel le commencement de l'envoi d'un paquet de données respectif est planifié en sortie du deuxième commutateur synchrone en réponse au PID, au TOA et à la référence temporelle commune.

41. Système selon la revendication 40, dans lequel un indicateur horaire (35TS) est attaché de façon sélective à ceux respectifs sélectionnés parmi les paquets de données lorsqu'ils sont envoyés en sortie du premier commutateur synchrone ;
dans lequel la valeur d'indicateur horaire est reçue de la référence temporelle commune ; et
dans lequel le contrôleur de planification calcule le premier temps planifié auquel lesdits paquets de données devraient être envoyés en sortie du deuxième commutateur synchrone en réponse à la valeur d'indicateur horaire.

42. Système selon la revendication 9,
dans lequel au moins l'un des commutateurs est une passerelle asynchrone à synchrone (15) couplée à au moins une station terminale (100) ;
dans lequel au moins un des commutateurs est un commutateur asynchrone (20) ;
dans lequel des liaisons de communication sont interconnectées dans un trajet pour connecter la station terminale à la passerelle asynchrone à synchrone via le commutateur asynchrone (20) ;
dans lequel un retard est défini affectant le transfert des paquets de données entre la station terminale (100) et la première passerelle asynchrone à synchrone (15) ;
dans lequel la passerelle asynchrone à synchrone reçoit des paquets de données provenant de la station terminale et enregistre séparément un temps d'arrivée (TOA) (35T) pour chacun desdits paquets de données ; et
dans lequel le contrôleur de planification détermine pour chaque dit paquet de données un premier temps planifié dans une première trame temporelle prédéfinie dans laquelle est planifié le commencement du transfert d'un dit paquet de données respectif en sortie de la passerelle asynchrone à synchrone respective en réponse au PID (35C) et au TOA (35T) associés audit paquet de données respectif.

43. Système selon la revendication 42, dans lequel le contrôleur de planification calcule le retard qui devrait affecter ledit paquet de données respectif avant qu'il ne soit envoyé en sortie de la passerelle asynchrone à synchrone (15).

44. Système selon la revendication 42, dans lequel un indicateur horaire (35TS) est attaché à chaque dit paquet de données lorsqu'il est envoyé par la station terminale ; et
dans lequel la valeur d'indicateur horaire est dérivée de la référence temporelle commune.
